(19) **Europäisches Patentamt**
**European Patent Office**
**Office européen des brevets**

(11) **EP 2 802 059 B1**

(12) **EUROPEAN PATENT SPECIFICATION**

(45) Date of publication and mention
of the grant of the patent:
**01.06.2016 Bulletin 2016/22**

(51) Int Cl.:
*H02J 13/00* (2006.01)      *H02J 3/00* (2006.01)
*H02J 3/14* (2006.01)

(21) Application number: **14737924.2**

(86) International application number:
**PCT/JP2014/050373**

(22) Date of filing: **10.01.2014**

(87) International publication number:
**WO 2014/109403 (17.07.2014 Gazette 2014/29)**

(54) **ON-DEMAND POWER CONTROL SYSTEM, ON-DEMAND POWER CONTROL SYSTEM PROGRAM, AND COMPUTER-READABLE RECORDING MEDIUM ON WHICH THIS PROGRAM IS RECORDED**

SYSTEM FÜR BEDARFSGERECHTE LEISTUNGSSTEUERUNG, PROGRAMM FÜR DAS SYSTEM FÜR BEDARFSGERECHTE LEISTUNGSSTEUERUNG UND COMPUTERLESBARES AUFZEICHNUNGSMEDIUM MIT DIESEM PROGRAMM

SYSTÈME DE COMMANDE DE PUISSANCE À LA DEMANDE, PROGRAMME DE SYSTÈME DE COMMANDE DE PUISSANCE À LA DEMANDE, ET SUPPORT D'ENREGISTREMENT LISIBLE PAR ORDINATEUR SUR LEQUEL CE PROGRAMME EST ENREGISTRÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.01.2013   JP 2013004030**
**12.02.2013   JP 2013025044**

(43) Date of publication of application:
**12.11.2014 Bulletin 2014/46**

(73) Proprietor: **Nitto Denko Corporation**
**Ibaraki-shi, Osaka 567-8680 (JP)**

(72) Inventors:
• **MATSUYAMA Takashi**
**Kyoto-shi**
**Kyoto 606-8501 (JP)**
• **KATO Takekazu**
**Kyoto-shi**
**Kyoto 606-8501 (JP)**
• **YUASA Kenji**
**Kyoto-shi**
**Kyoto 606-8501 (JP)**

(74) Representative: **Grünecker Patent- und Rechtsanwälte PartG mbB**
**Leopoldstraße 4**
**80802 München (DE)**

(56) References cited:
**EP-A1- 1 626 322        EP-A1- 2 667 473**
**JP-A- H1 094 170        JP-A- 2002 369 383**
**JP-A- 2006 164 171      JP-A- 2008 182 840**
**JP-A- 2010 161 849      JP-A- 2010 193 562**
**JP-A- 2012 115 115      JP-A- 2012 222 976**
**US-A1- 2004 124 703     US-A1- 2012 150 359**
**US-A1- 2012 153 725     US-A1- 2012 166 008**

## Description

Technical Field

The present invention relates to an on-demand power control system, an on-demand power control system program, and a computer-readable recording medium recording the same program in a home or office network and, more particularly to, an on-demand power control system, an on-demand power control system program, and a computer-readable recording medium recording the same program for controlling power supply by dynamically changing priorities of electrical devices such that power consumption (Wh) does not exceed an upper limit, without impairing the Quality of Life (hereinafter referred to as "QoL") required by a user through the user's daily life.

Background Art

An on-demand power control system is intended to implement energy management in households and offices. The system aims to make a 180-degree shift from a supplier-centric "push" power network to a user- or consumer-driven "pull" power network. The system is a system in which a home server infers "which one of the device requests is most important" from a user's usage pattern in response to requests for power from various devices that are household electrical products at home (e.g., requests from an air conditioner and a light) and performs control so as to supply power to electrical devices beginning with an important one with high priority, i.e., performs Energy on Demand control (hereinafter referred to as "EoD control"). The system will be referred to as an "EoD control system" hereinafter. The EoD control system is proposed by Professor Takashi Matsuyama, Kyoto University.

The greatest benefit of use of the system is that energy saving and $CO_2$ emissions reduction can be implemented from the demand side. For example, if a user sets instructions to make a 20% electric rate cut in the home server in advance, a user-centric effort to feed only power cut by 20% can be made by EoD control, and the system can implement energy saving and $CO_2$ emissions reduction.

US2004/0124703 A1 discloses a corresponding on-demand power control system in which dynamic priority control is performed in a vehicle. The system comprising: a power source; a plurality of electrical devices; an appliance agent that controls supply of power to each electrical device by receiving a signal having a power value from each electrical device, by calculating requested power and a priority on the basis of the received signal, by transmitting the requested power and the priority as a power request message to a power manager, and by transmitting a function control command for controlling the electrical device to the electrical device according to a power assignment message received from the power manager; the power manager that obtains power to be assigned to each electrical device according to the priorities between the electrical devices on the basis of the power request message from each electrical device received from the appliance agent; and an appliance DB connected to the power manager and/or the appliance agent, the appliance agent, the power manager and the appliance DB constituting a network connected to the electrical devices, wherein the power manager determines power to be assigned to each electrical device by inquiring the appliance agent of whether or not the electrical device is capable of adjusting an operating function mode set as a target of a service operation of the electrical device, and of power for the electrical device, wherein if the electrical device is capable of adjusting the operating function mode, the power manager obtains as a power assignment message the operating function mode set as a target for the electrical device and/or a power mode having necessary power and necessary time for reaching the operating function mode set as a target; wherein if the electrical device is not capable of adjusting the operating function mode, the power manager obtains a power mode as a power assignment message without considering the operating function mode, and wherein the power manager includes a memory for transmitting the power assignment message thus obtained to the appliance agent.

As patent literatures regarding the EoD control, the inventions below, the "home network" (see Patent Literature 1) and the "supply/demand arbitration system" (see Patent Literature 2), are known. The home network is composed of a server (master), detection means and control means of the server, and members (slaves). The server and members are connected over a LAN. At home, n electrical devices are connected to an outlet through n members. The detection means detects the operation statuses of m electrical devices actually in operation. The control means computes power consumption at home using n pieces of power data transmitted from the n members and, when the calculated total power usage becomes equal to or larger than a threshold, controls j members so as to limit power supplied thereto by outputting to, among the m electrical devices, j electrical devices whose operating state changes in steps or continuously a control signal for controlling the j electrical devices such that power consumed by the m electrical devices is smaller than the threshold for the total power usage. That is, the server is a server which preferentially supplies power to an electrical device whose operating state changes between on and off, such as a ceiling light, a desk light, or a coffee maker, in order to make the consumed power lower than the threshold value for the total power usage.

Note that the above-described member is called a "smart tap". The smart tap is composed of voltage and current sensors which measure power, a semiconductor relay for power control, a ZigBee module for communication, and a microcomputer with a built-in DSP and the like which performs overall control of the components and internal processing. The microcomputer calculates consumed power from current and voltage waveforms measured by the voltage and current sensors attached to the smart tap, extracts a small number of features representing characteristics of the voltage and current waveforms, and identifies an electrical device from the features using data for comparison stored in advance in an internal memory of the smart tap. This method is a method which has been well-known since before the filing of the present application. Pieces of data for each cycle (60 seconds) on consumed power calculated at intervals of 0.5 seconds by the microcomputer are held in the internal memory of the smart tap and are transmitted to a server in a plurality of packets (see Non Patent Literatures 1 and 2).

The above-described supply/demand arbitration system is an invention which is developed from the idea that if not only solar cells but also fuel cells and storage batteries become widespread in ordinary households, power supply based on the suppliable power of the power source side and power consumed by the home appliance side becomes more important. Accordingly, the supply/demand arbitration system is composed of an arbitration server, apparatuses as power sources (a commercial power source, a photovoltaic power generation apparatus, a fuel cell, and a storage battery) connected to the arbitration server, a memory and a power control device connected to the arbitration server, and a plurality of electrical devices connected to the arbitration server over a network. Each electrical device includes a microcomputer for its own control and further includes a measuring instrument for measuring its consumed power and a function of communicating with the arbitration server. Home appliance status table data, power source status table data, priority data, upper limit data, target value data, and the like are stored in a data storage area of the memory.

The arbitration server of the supply/demand arbitration system manages the statuses of the home appliances and power sources by inquiring of the home appliances and power sources about their statuses at intervals of 2 to 3 seconds, to which a refresh timer counts, and updating a home appliance status table and a power source status table on the basis of responses to the inquiries. That is, the arbitration server updates the home appliance status table and power source status table at intervals of 2 to 3 seconds and cannot control power supply in real time in response to a request for power required by a user. Additionally, since the volume of data processed at the time of calculating supplied power and capacity is enormous, the load on the arbitration server is heavy.

When receiving a supply request message from an electrical device, the arbitration server sets an upper limit for consumed power and a target value for consumed power. The upper limit is the total sum of the current suppliable power of the power sources (the total suppliable power will be referred to as "the total power of the power sources" hereinafter) and is calculated by referring to the power source status table stored in the memory. The arbitration server calculates the total sum of the power of electrical devices in use and determines whether the sum of requested power and the total sum of the power is less than a target value for the total power of the power sources.

The priority table is a table for determining the priority of an electrical device or a supply request message from the electrical device and has a value indicating priority (0 to 3) corresponding to the message type (request type $T_a$) of a supply request message. There are four possible values (A, B, C, and D) for the request type $T_a$. The arbitration server is a power supply control apparatus which controls power supply such that the target value for the total sum of the power sources is not exceeded, on the basis of the priority of the electrical device.

There is also known a home energy management system (HEMS) which is a management system for electrical devices. The HEMS sets a control rule for an electrical device (e.g., a rule in which an air conditioner is automatically stopped when the outside air temperature is low) and performs automatic control. The HEMS achieves energy saving by optimizing a manner of utilization of an electrical device and is based on the manner of utilization of the electrical device. Since such a conventional HEMS is focused on a manner of utilization of an electrical device, the HEMS does not take into account how much power can be reduced by changing manners of utilization of electrical devices and cannot guarantee a rate of power reduction that can meet a request for power saving.

In recent years, forming a network by combining devices in a home based on the ECHONET standard has been studied. Such networks cannot be said to be capable of finely controlling power supplied to each electrical device.

Also, in a power supply control system using smart taps as described above, a power manager performs arbitration based on power requests issued from electrical devices, transmits a power assignment message to each electrical device, and the electrical device having received this message operates according to the message. Therefore, objects to be controlled are limited to electrical devices capable of operating according to this power assignment message.

However, many electrical devices exist other than those capable of operating according to such a power assignment message, and control of objects including such electrical devices in combination with control of dynamic priorities for the electrical devices is indispensable to power supply control with higher accuracy.

Citation List

Patent Literature

Patent Literature 1: International Publication No. WO 2008/152798
Patent Literature 2: Japanese Patent Laid-Open No. 2010-193562

Non Patent Literature

Non Patent Literature 1: "Electric Appliance Recognition from Power Sensing Data for Information-Power Integrated Network System," Takekazu Kato and four others, IEICE technical report, pp. 133-138, January 19, 2009
Non Patent Literature 2: "i-Energy and Smart Grid," Professor Takashi Matsuyama, Graduate School, Kyoto University, p. 21, July 29, 2009

Summary of Invention

Technical Problem

A user using an electrical device that is a household or office electrical product has a need to reduce consumed power and power consumption by even a small amount. In order to meet the need, the above-described home network preferentially supplies power to an electrical device (e.g., a ceiling light) whose operating state changes between on and off, in relation to the priorities of electrical devices, such that consumed power and power consumption do not exceed respective upper limits. The above-described supply/demand arbitration system preferentially supplies power to an electrical device (e.g., a refrigerator or an air conditioner) having the electrical device request type $T_a$ of 0 or 1. In both cases, the priorities of electrical devices are fixed. The status of a user's use of an electrical device, however, changes momentarily. If priorities are fixed as described above, an electrical device may be unavailable when necessary.

The arbitration server manages the statuses of the home appliances and power sources by updating the home appliance status table and power source status table at intervals of 2 to 3 seconds, to which the refresh timer counts. Accordingly, the arbitration server cannot respond instantaneously to a request for power required by a user (e.g., a request to operate an air conditioner), i.e., cannot control power supply in real time. Additionally, the volume of data to be processed is enormous to increase the load.

Furthermore, patterns of use of power needed for users in their daily lives, e.g., one for a household including children, one for a married-couple household, and one for a one-person household are different from each other. In a case where only the power use pattern and power supplied to electrical devices are controlled, the house interior comfortableness is lost when the states of operations of the electrical devices to be controlled are largely changed, for example, when the level of room light is changed to such a degree that the change in level of light can be recognized in the room, resulting in degradation of QoL.

The above-described arbitration server determines power to be supplied by comparing the total power of power sources (a commercial power source, a photovoltaic power generation apparatus, a fuel cell and a storage battery) presently used on a trial basis and necessary power to be consumed by the electrical devices. The present invention can be used in a system having as a power source at least one of a commercial power source, a photovoltaic power generator, a fuel cell and a storage battery.

Use of means for measuring requested power for each electrical device, means for communication between the electrical devices and a server or the like and smart taps including control means is being studied. Such smart taps are most effective in a case where each electrical device itself has a control function. Smart taps have not suitably been adapted to electrical devices including no control device. Also, there are no power-arbitration-capable home appliances capable of operating according to a power assignment message based on arbitration performed by a power manager.

There is a need to reduce, even slightly, power for such general electrical devices as a whole without impairing QoL.

Therefore, the present invention, which has been made in consideration of the conventional problems, has as its object to provide an EoD control system, an EoD control system program, and a computer-readable recording medium recording the program which supply power to electrical devices on the basis of not fixed priorities determined in advance of the electrical devices but priorities varying according to a user's status of use, can control power supply from a commercial power source in real time in response to a request for power required by the user, and control power supply matching the QoL required by the user through the user's daily life.

Solution to Problem

As a result of keen examination to achieve the above-described object, the present inventors have attained the present invention, as described below.

1. An on-demand power control system in which dynamic priority control is performed, including:

a power source;

a plurality of electrical devices;

a home appliance agent that controls supply of power to each electrical device by receiving a signal having a power value from a smart tap or each electrical device, by calculating requested power and a priority on the basis of the received signal, by transmitting the requested power and the priority as a power request message to a power manager, and by transmitting a function control command for controlling the electrical device to the electrical device according to a power assignment message received from the power manager;

the power manager that obtains power to be assigned to each electrical device according to the priorities between the electrical devices on the basis of the power request message from each electrical device received from the home appliance agent; and

a home appliance DB connected to the power manager and/or the home appliance agent, the home appliance agent, the power manager and the home appliance DB constituting a network connected to the electrical devices through the smart taps,

wherein the power manager determines power to be assigned to each electrical device by inquiring the home appliance agent of whether or not the electrical device is capable of adjusting an operating function mode set as a target of a service operation of the electrical device, and of power for the electrical device,

wherein if the electrical device is capable of adjusting the operating function mode, the power manager obtains as a power assignment message the operating function mode set as a target for the electrical device and/or a power mode having necessary power and necessary time for reaching the operating function mode set as a target;

wherein if the electrical device is not capable of adjusting the operating function mode, the power manager obtains a power mode as a power assignment message without considering the operating function mode, and

wherein the power manager includes a memory for transmitting the power assignment message thus obtained to the home appliance agent, wherein the power manager is configured to control a power supply to the electrical devices such that an upper limit for integral power over a fixed period and a maximum instantaneous power is not exceeded, and wherein an instantaneous power is consumed power and the maximum instantaneous power is an upper limit for the instantaneous power.

2. The on-demand power control system described in 1, wherein the power manager includes initial target value updating means for allocating a difference between instantaneous power with an initial target value and actual instantaneous power to subsequent instantaneous power with an initial target value to calculate an updated initial target value, comparing the updated initial target value with maximum instantaneous power, if the updated initial target value is smaller, updating the subsequent instantaneous power with the initial target value to have the updated initial target value, and if the updated initial target value is larger, updating the instantaneous power with the initial target value to be the maximum instantaneous power and setting the maximum instantaneous power as the updated initial target value,

wherein the power manager receives the power request message through the home appliance agent from the smart tap and/or a tap having a requested power measuring function and a communication function for transmission to the home appliance agent in a server, and calculates a total value of power consumed by the electrical device requiring power according to the power request message and electrical devices in operation, and

wherein the power manager calculates priorities of both of the electrical devices based on electrical device property class data, in which electrical devices are classified into classes according to properties of methods for supplying power to the electrical devices, compares the total value of the consumed power with the updated initial target value, if the total value of the consumed power is smaller, supplies power to the electrical device having performed transmission, if the total value of the consumed power is larger, calls up the priorities from the memory and/or the home appliance DB to select an electrical device having a minimum priority, with respect to the electrical device having the minimum priority, determines which of the properties the electrical device corresponds to, with reference to the electrical device property class data, and controls the power to be supplied according to the property to which the electrical device corresponds.

3. The on-demand power control system described in 1 or 2, wherein the instantaneous power is consumed power which is obtained by adding up consumed power in each of intervals of a minimum control interval $\tau$ to obtain a total value and averaging the total value.

4. The on-demand power control system described in 3, wherein the minimum control interval $\tau$ is 5 to 10 minutes.

5. The on-demand power control system described in any of 2 to 4, wherein information to be processed by the initial target value updating means is the instantaneous power, and information to be processed by a power arbitration means of the power manager is requested power.

6. The on-demand power control system described in 5, wherein a power use plan in which the initial target value is created based on a user's pattern of power consumption is created using one of a fixed rate reduction plan, a peak reduction plan, and a cost reduction plan.

7. The on-demand power control system described in 6, wherein an initial target value T0(t) (W) which is created using the fixed rate reduction plan is given by equations (1) and (2):

$$D'(t) = \begin{cases} D(t) & if \ D(t) \leq M(t) \\ M(t) & otherwise \end{cases} \tag{1}$$

$$T_0(t) = \frac{C}{\sum_{t_{start}}^{t_{end}} \tau \ D'(t)} D'(t) \tag{2}$$

where C (Wh) is a ceiling set by the user, M(t) (W) is maximum instantaneous power at a time t, and D(t) (W) is a predicted value for power demand at the time t.

8. The on-demand power control system described in 6, wherein an initial target value created using the peak reduction plan is created by reducing an initial target value only during on-peak power use hours in the power use plan.

9. The on-demand power control system described in 6, wherein an initial target value created in the cost reduction plan is created by reducing the initial target value according to power costs in the power use plan.

10. The on-demand power control system described in 1, wherein the instantaneous power with the initial target value, the actual instantaneous power, and the electrical device property class data are stored in the memory and/or the home appliance DB before the power manager is activated.

11. The on-demand power control system described in 10, wherein allocating the difference to be allocated to the subsequent instantaneous power with the initial target value comprises an equal difference allocation method that equally allocates the difference and an instantaneous power allocation method that allocates the difference to only one immediately succeeding instantaneous power.

12. The on-demand power control system described in 2, wherein the electrical device property class data is divided according to the properties of the methods for supplying power to the electrical devices, as to whether or not the device is adjustable, whether or not the device is suspendable, and whether or not the device is waitable, and the data is composed of eight sorts of data defined by combinations of the properties.

13. The on-demand power control system described in 12, wherein segments arbitrarily selectable by a user for ensuring a safe and comfortable life are provided other than the segments: capability of adjustment, capability of suspension and capability of waiting divided according to the methods for supplying power to the electrical devices.

14. The on-demand power control system described in 12, wherein the adjustable property is a property which allows change of power supplied during operation, the waitable property is a property which allows waiting for power supply at startup, and the suspendable property is a property which allows suspension of power supply during operation.

15. The on-demand power control system described in 14, wherein electrical devices having the adjustable property include a notebook PC, a boiler, a toilet seat with a warm-water shower feature, a microwave oven, a heater air conditioner, a refrigerator, a TV, and a dryer.

16. The on-demand power control system described in 14, wherein electrical devices having the waitable property include a notebook PC, a boiler, a toilet seat with a warm-water shower feature, a microwave oven, a dishwasher, a rice cooker, and a toaster.

17. The on-demand power control system described in 14, wherein electrical devices having the suspendable property include a notebook PC, a boiler, a heater air conditioner, a refrigerator, a dishwasher, a rice cooker, a copying machine, and an electric pot.

18. The on-demand power control system described in 14, wherein electrical devices not having the adjustable, suspendable, and waitable properties include a gas detector, a respirator, and a network device such as a router.

19. An on-demand power control system wherein a power manager described in 1 further includes continuous monitoring means for monitoring consumed power at all times.

20. The on-demand power control system described in 19, wherein the continuous monitoring means controls power supply such that overall consumed power falls below the maximum instantaneous power without waiting for a lapse of the minimum control interval τ if the overall consumed power exceeds the maximum instantaneous power for a fixed period d or longer.

21. The on-demand power control system described in 20, wherein the fixed period d is 0.5 to 2 seconds.

22. The on-demand power control system described in any one of 19 to 21, wherein the continuous monitoring means calculates a total value of power consumed by electrical devices in operation, calculates priorities of the electrical devices based on electrical device property class data, in which electrical devices are classified into classes according to three types of properties, compares the total value of the consumed power with the maximum instantaneous power, if the total value of the consumed power is smaller, ends processing, if the total value of the consumed power is larger, selects an electrical device having the minimum priority, determines which of the three types of properties the electrical device corresponds to, with reference to the electrical device property class data, and selects a device having the minimum priority according to the property, to which the electrical device corresponds.

23. A program for causing a computer to execute processing for arbitration based on priorities between electrical devices, the program causing the computer to make a power manager including a memory operate on:

a power source;
a plurality of electrical devices; and
a home appliance agent that controls supply of power to each electrical device by receiving a power request message from a smart tap or each electrical device, by transmitting this message to the power manager, and by transmitting a message or a function control command for controlling the electrical device to the smart tap or the electrical device according to a received power assignment message, the power manager obtaining priorities between the electrical devices based on a signal from each electrical device received from the home appliance agent, obtaining power to be assigned to each electrical device, and including a memory for transmitting to the home appliance agent the power assignment message thus obtained, the program causing the computer to execute processing for arbitration on the basis of the priorities between the electrical devices, the program causing the computer to make the power manager including the memory determine, by inquiring the home appliance agent, whether or not each electrical device is capable of adjusting an operating function mode set as a target of a service operation of the electrical device, and necessary power for the electrical device, if the electrical device is capable of adjusting the operating function mode, obtain as a power assignment message the operating function mode set as a target for the electrical device and/or a power mode having necessary power and necessary time for reaching the operating function mode set as a target, if the electrical device is not capable of adjusting the operating function mode, obtain a power mode as a power assignment message without considering the operating function mode, and including a memory for transmitting the power assignment message thus obtained to the home appliance agent, wherein power supply to the electrical devices is controlled such that an upper limit for integral power over a fixed period and a maximum instantaneous power is not exceeded, and wherein an instantaneous power is consumed power and the maximum instantaneous power is an upper limit for the instantaneous power.

24. The program for causing a computer to execute described in 23, wherein the power manager includes initial target value updating means for allocating a difference between instantaneous power with an initial target value and actual instantaneous power to subsequent instantaneous power with an initial target value to calculate an updated initial target value, comparing the updated initial target value with maximum instantaneous power, if the updated initial target value is smaller, updating the subsequent instantaneous power with the initial target value to have the updated initial target value, and if the update initial target value is larger, updating the instantaneous power with the initial target value to be the maximum instantaneous power and setting the maximum instantaneous power as the updated initial target value,

wherein the power manager receives the power request message through the home appliance agent from the smart tap and/or a tap having a requested power measuring function and a communication function for transmission to the home appliance agent in a server, and calculates a total value of power consumed by the electrical device requiring power according to the power request message and electrical devices in operation, and

wherein the power manager calculates priorities for the electrical devices based on electrical device property class data, in which electrical devices are classified into classes according to properties of methods for supplying power to the electrical devices, compares the total value of the consumed power with the updated initial target value, if the total value of the consumed power is smaller, supplies power to the electrical device having performed transmission, if the total value of the consumed power is larger, calls up the priorities from the memory and/or the home appliance DB to select an electrical device having a minimum priority, determines which of the properties the electrical device corresponds to, with reference to the electrical device property class data, and controls the power to be supplied according to the property to which the electrical device corresponds.

25. The program for causing a computer to execute described in 24, wherein the instantaneous power is consumed power that is obtained by adding up consumed power in each of intervals of a minimum control interval τ to obtain a total value and averaging the total value.

26. The program for causing a computer to execute described in 25, wherein the minimum control interval τ is 5 to 10 minutes.

27. The program for causing a computer to execute described in 26, wherein information to be processed by the initial target value updating means is the instantaneous power, and information to be processed by the power arbitration means of the power manager is the consumed power.

28. The program for causing a computer to execute described in 23, wherein the electrical device property class data is divided according to the properties of the methods for supplying power to the electrical devices, as to whether or not the device is adjustable, whether or not the device is suspendable, and whether or not the device is waitable, and the data is composed of eight sorts of data defined by combinations of the properties.

29. The program for causing a computer to execute described in 28, wherein segments arbitrarily selectable by a user for ensuring a safe and comfortable life are provided other than the segments: capability of adjustment, capability of suspension and capability of waiting divided according to the methods for supplying power to the electrical devices.

30. The program for causing a computer to execute described in 28, wherein the adjustable property is a property which allows change of power supplied during operation, the waitable property is a property which allows waiting for power supply at startup, and the suspendable property is a property which allows suspension of power supply during operation.

31. The program for causing a computer to execute described in 30, wherein electrical devices having the adjustable property include a notebook PC, a boiler, a toilet seat with a warm-water shower feature, a microwave oven, a heater air conditioner, a refrigerator, a TV, and a dryer.

32. The program for causing a computer to execute described in 30, wherein electrical devices having the waitable property include a notebook PC, a boiler, a toilet seat with a warm-water shower feature, a microwave oven, a dishwasher, a rice cooker, and a toaster.

33. The program for causing a computer to execute described in 30, wherein electrical devices having the suspendable property include a notebook PC, a boiler, a heater air conditioner, a refrigerator, a dishwasher, a rice cooker, a copying machine, and an electric pot.

34. The program for causing a computer to execute described in 30, wherein electrical devices not having the adjustable, suspendable, and waitable properties include a gas detector, a respirator, and a network device such as a router.

35. A computer-readable recording medium recording a program described in 23.

36. A computer-readable recording medium recording a program described in 27.

37. A computer-readable recording medium recording a program described in 28.

Advantageous Effects of Invention

In the EoD control system according to the present invention, at least devices equipped with consumed power measuring and communication means are provided on general electrical devices necessary for a user in his/her daily life or housed in taps in various cases including a case where electrical devices themselves have no control devices, thereby enabling changing priorities between the electrical devices according to the states of use of the electrical devices, and enabling necessary electrical devices to be used by necessary timing.

Therefore, the service operations of all electrical devices including those originally having no functions for automatically controlling power during use, e.g., a drier, an electric pot can be adjusted by controlling voltages supplied to the electrical devices while considering the power consumed by all the electrical devices, without the EoD system having a power measuring function, a communication function and a power control function being connected to all the electrical devices to be controlled.

Additionally, the EoD control system according to the present invention is a system which controls power supply on the basis of a user's pattern of power use and maximum instantaneous power and a ceiling set by the user and can thus guarantee the maximum instantaneous power and ceiling set by the user without impairing the Quality of Life of the user using the electrical devices. The EoD control system is also a system which changes the priorities of electrical devices on the basis of the power consumed by the electrical devices when a user requests power and can control power supply in real time.

Moreover, the EoD control system according to the present invention is a system which can automatically perform control so as to respond to a request for a reduction in power from the supply side without fail and can thus guarantee a rate of power reduction on the demand side in response to a request from the supply side while using necessary electrical devices, without requiring additional labor.

Furthermore, the EoD control system according to the present invention is characteristically a power management tool. Electrical devices are thus classified according to a power adjustment system. The introduction of power arbitration means that guarantees an upper limit for used power allows provision of a guarantee of a power saving rate and a peak reduction rate.

Moreover, a user is prevented from feeling a change as a control result in the state of service operation of any of the individual electrical devices to be controlled, thereby preventing the desired feeling of use from being impaired during use of the electrical devices.

Brief Description of Drawings

[Figure 1] Figure 1 is a schematic diagram showing the configuration of a communication network of an EoD control system.

[Figure 2] Figure 2 is a schematic diagram showing the configuration of a power network of the EoD control system according to the present invention.

[Figure 3] Figure 3 is an arrangement view showing positions where smart taps for installing electrical devices are arranged.

[Figure 4] Figure 4 is a relational view showing the relation of connection among an outlet, a smart tap, and an electrical device.

[Figure 5] Figure 5 is a floor plan showing the layout of a model house.

[Figure 6] Figure 6 is a chart with a graph showing power consumed by electrical devices.

[Figure 7] Figure 7 is a chart with a graph showing power consumption obtained by cumulating the power consumed by the electrical devices.

[Figure 8] Figure 8 is a functional block diagram showing functions provided in a power manager.

[Figure 9-1] Figure 9-1 is an explanatory chart for explaining a method for setting an initial planned value from a power use plan.

[Figure 9-2] Figure 9-2 is an explanatory chart for explaining a method for setting an initial planned value from a power use plan.

[Figure 9-3] Figure 9-3 is an explanatory chart for explaining a method for setting an initial planned value from the power use plan.

[Figure 10] Figure 10 is a chart for explaining a case where control is performed while actual consumed power and an initial target value are maintained.

[Figure 11] Figure 11] is a chart for explaining a case where control that feeds back a difference between actual instantaneous power and an initial target value to subsequent planned values is performed.

[Figure 12-1] Figure 12-1 shows relations among function modes and power modes. [Figure 12-2] Figure 12-2 shows relations among function modes and power modes.

[Figure 13-1] Figure 13-1 shows relations among function modes and power modes in an air conditioner or the like.

[Figure 13-2] Figure 13-2 shows relations among function modes and power modes in a light or the like.

[Figure 14] Figure 14 is a chart showing the level of satisfaction of a dryer with power.

[Figure 15] Figure 15 is a chart showing the level of satisfaction of a rice cooker with power.

[Figure 16] Figure 16 is a chart showing the level of satisfaction of an air conditioner with power.

[Figure 17] Figure 17 is a sequence chart for explaining a procedure by which the dynamic priority control apparatus supplies power according to priority in response to a power request message.

[Figure 18] Figure 18 is a functional block diagram of a second embodiment.

[Figure 19] Figure 19 is a flow chart showing preprocessing that sets a power use plan before a power manager is activated.

[Figure 20] Figure 20 is a flow chart showing overall processing of the power manager.

[Figure 21] Figure 21 is a flow chart showing a power use plan setting process.

[Figure 22] Figure 22 is a flow chart showing an initial target value updating process.

[Figure 23-1] Figure 23-1 is a flow chart showing a priority arbitration process.

[Figure 23-2] Figure 23-2 is a flow chart showing the priority arbitration process.

[Figure 23-3] Figure 23-3 is a flow chart showing the priority arbitration process.

[Figure 23-4] Figure 23-4 is a flow chart showing the priority arbitration process.

[Figure 24-1] Figure 24-1 is a flow chart showing a continuous monitoring process.

[Figure 24-2] Figure 24-2 is a flow chart showing the continuous monitoring process.

[Figure 24-3] Figure 24-3 is a flow chart showing the continuous monitoring process.

[Figure 24-4] Figure 24-4 is a schematic diagram of a network including a home appliance agent, a power manage and a home appliance DB.

[Figure 25-1] Figure 25-1 is an explanatory view for explaining a process to be performed by power arbitration means.

[Figure 25-2] Figure 25-2 is an explanatory view for explaining the process to be performed by the power arbitration means.

[Figure 25-3] Figure 25-3 is an explanatory view for explaining the process to be performed by the power arbitration means.

[Figure 25-4] Figure 25-4 is an explanatory view for explaining the process to be performed by the power arbitration means.

[Figure 26-1] Figure 26-1 is a chart showing a graph of instantaneous power obtained when a power use plan reduced by 10% is used.

[Figure 26-2] Figure 26-2 is a chart showing a graph of instantaneous power obtained when the power use plan reduced by 30% is used.

[Figure 27-1] Figure 27-1 is a chart showing a graph of integral power consumption obtained when the power use plan reduced by 10% is used.

[Figure 27-2] Figure 27-2 is a chart showing a graph of integral power consumption obtained when the power use plan reduced by 30% is used.

[Figure 28-1] Figure 28-1 is a chart showing graphs of instantaneous power for six types of electrical devices obtained when the power use plan reduced by 10% is used.

[Figure 28-2] Figure 28-2 is a chart showing graphs of instantaneous power for the six types of electrical devices obtained when the power use plan reduced by 30% is used.

[Figure 29-1] Figure 29-1 is a schematic diagram when power control according to the present invention is performed on an air conditioner.

[Figure 29-2] Figure 29-2 is a schematic diagram when power control according to the present invention is performed on an air conditioner.

[Figure 29-3] Figure 29-3 is a flowchart when power control according to the present invention is performed on an air conditioner.

[Figure 30-1] Figure 30-1 is a diagram showing control of a light, an electric pot, or the like.

[Figure 30-2] Figure 30-2 is a diagram showing control of a television.

[Figure 30-3] Figure 30-3 is a flowchart when a television is controlled.

[Figure 30-4] Figure 30-4 is a diagram showing control of an air conditioner.

[Figure 30-5] Figure 30-5 is a diagram showing control of an air conditioner.

[Figure 30-6] Figure 30-6 is a flowchart when an air conditioner is controlled.

[Figure 31-1] Figure 31-1 shows the degree of unsatisfactoriness in Example 1.

[Figure 31-2] Figure 31-2 shows the degree of satisfaction including a power reduction effect in Example 1.

[Figure 31-3] Figure 31-3 shows cumulative power when the cumulative power reduction rate is 35% in Example 1.

[Figure 31-4] Figure 31-4 shows instantaneous power when the cumulative power reduction rate is 35% in Example 1.

[Figure 31-5] Figure 31-5 shows power consumed by a light.

[Figure 31-6] Figure 31-6 is an enlarged view of Figure 31-5.

[Figure 31-7] Figure 31-7 shows standard life cumulative power.

[Figure 31-8] Figure 31-8 shows reduction rate 10% cumulative power.

[Figure 31-9] Figure 31-9 shows reduction rate of 30% of cumulative power.

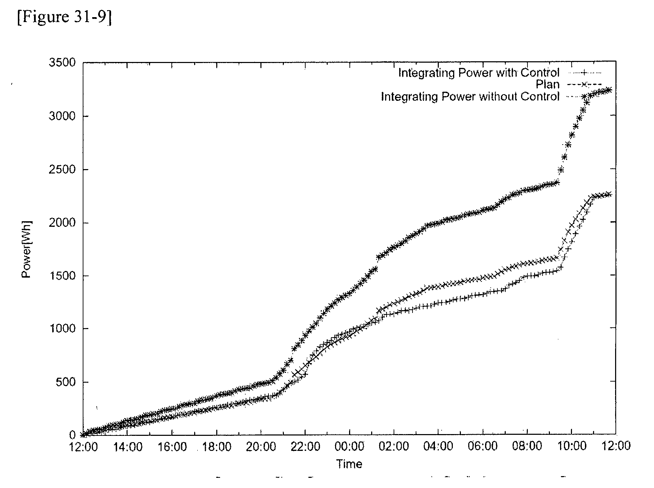

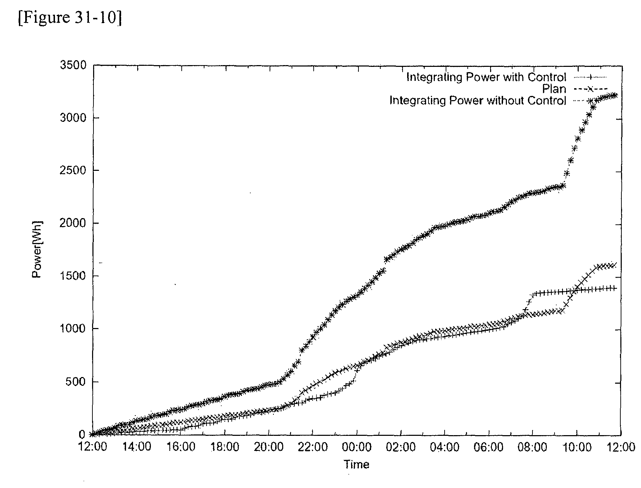

[Figure 31-10] Figure 31-10 shows reduction rate of 50% of cumulative power.

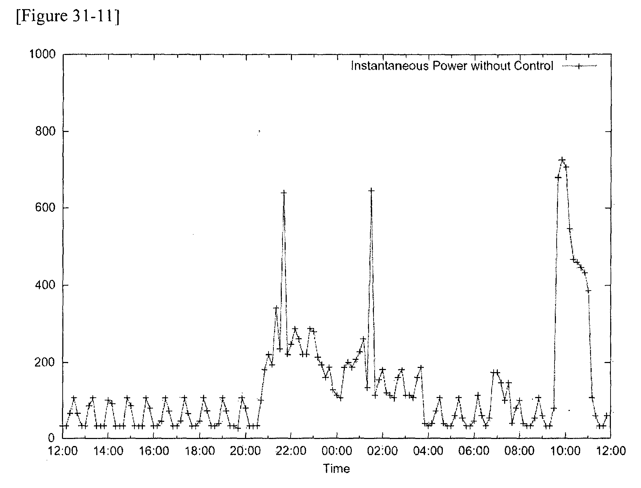

[Figure 31-11] Figure 31-11 shows standard life instantaneous power.

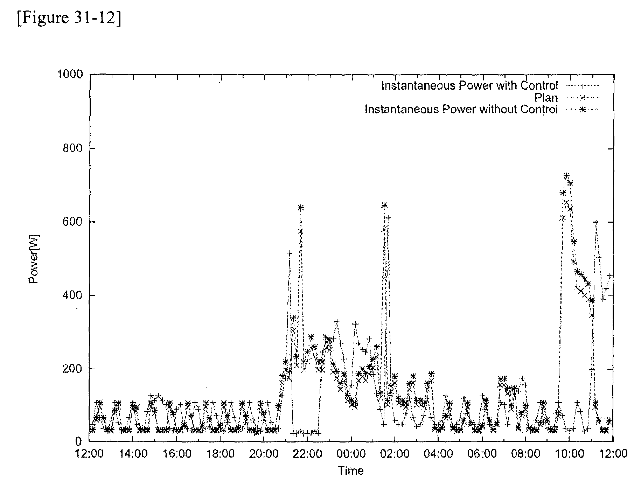

[Figure 31-12] Figure 31-12 shows reduction rate of 10% of instantaneous power.

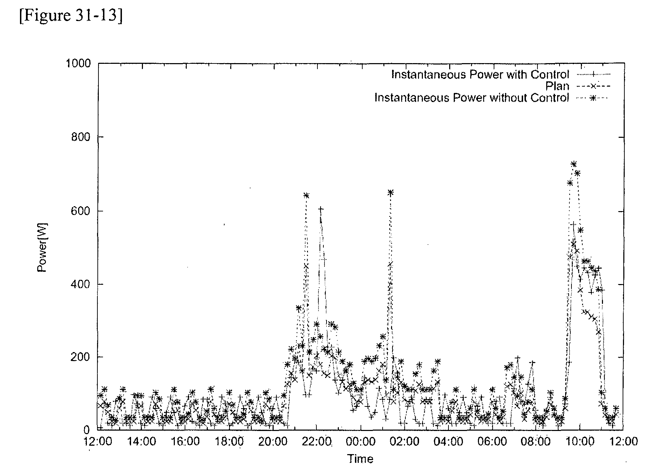

[Figure 31-13] Figure 31-13 shows reduction rate of 30% of instantaneous power.

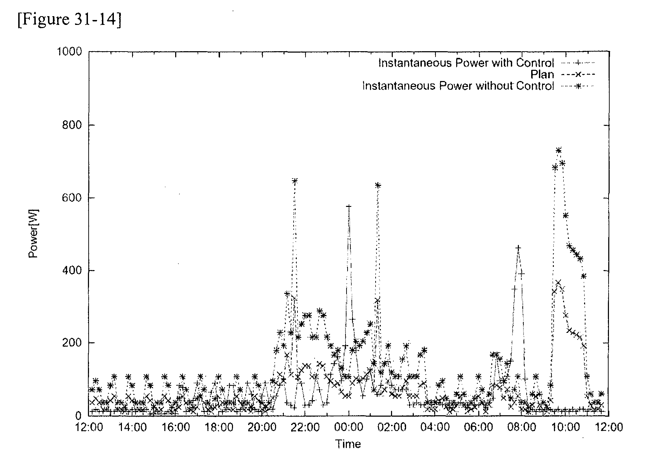

[Figure 31-14] Figure 31-14 shows reduction rate of 50% of instantaneous power.

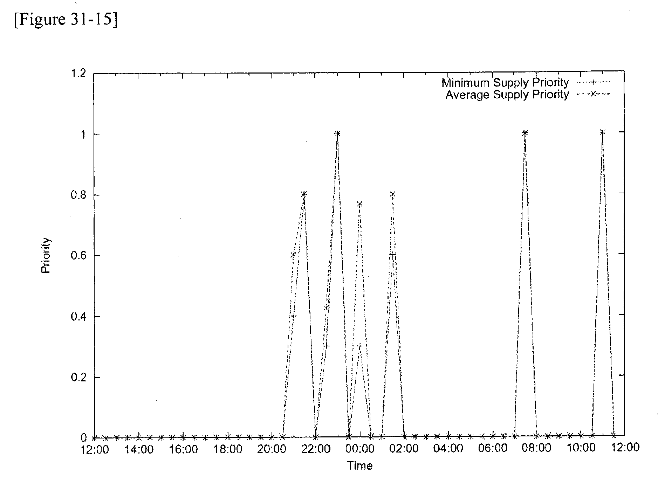

[Figure 31-15] Figure 31-15 shows reduction rate of 10% of minimum supply priority.

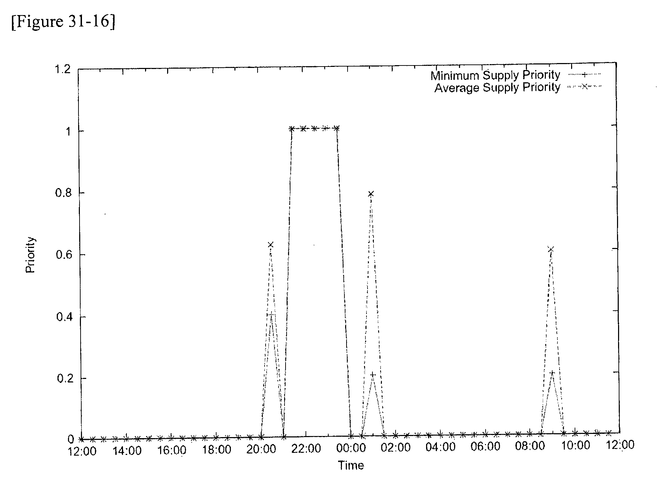

[Figure 31-16] Figure 31-16 shows reduction rate of 30% of minimum supply priority.

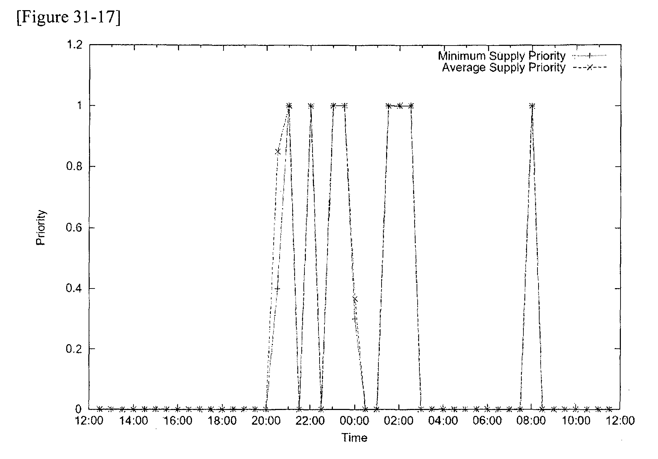

[Figure 31-17] Figure 31-17 shows reduction rate of 50% of minimum supply priority.

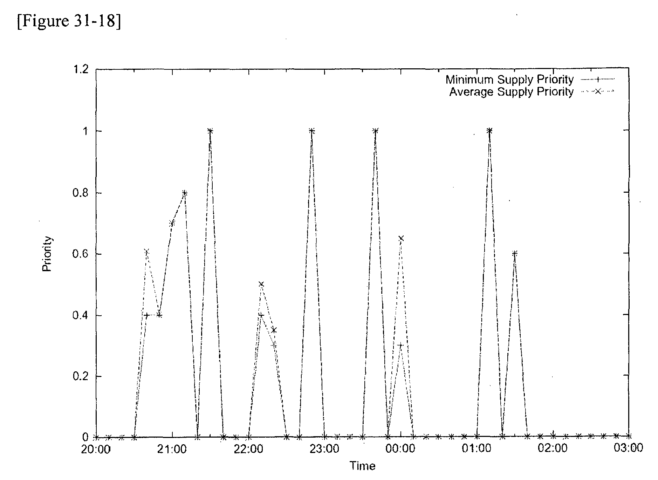

[Figure 31-18] Figure 31-18 is an enlarged diagram of Figure 31-15.

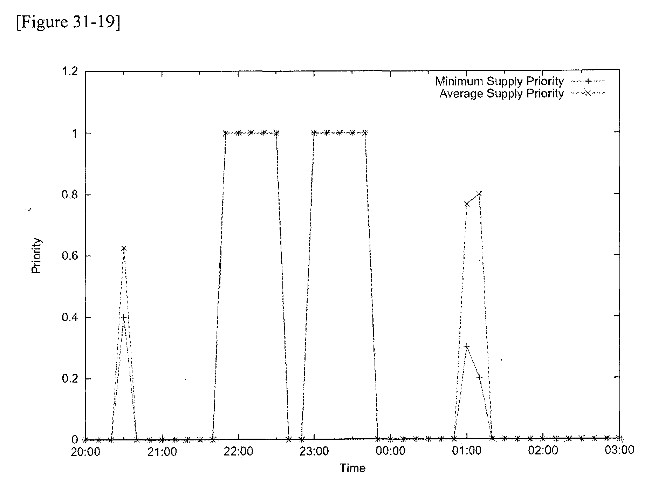

[Figure 31-19] Figure 31-19 is an enlarged diagram of Figure 31-16.

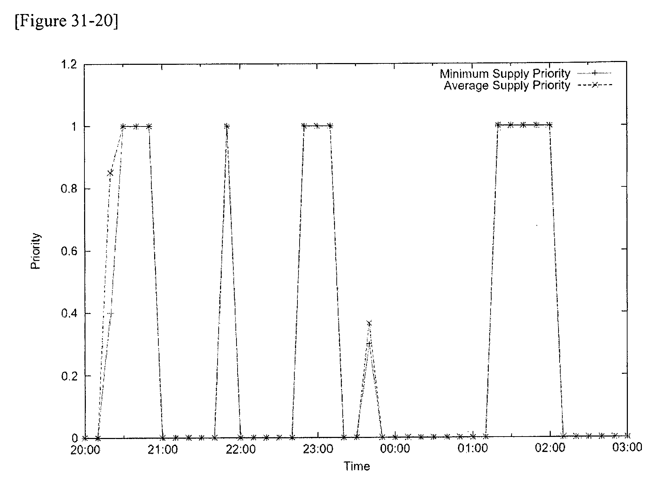

[Figure 31-20] Figure 31-20 is an enlarged diagram of Figure 31-17.

Embodiments

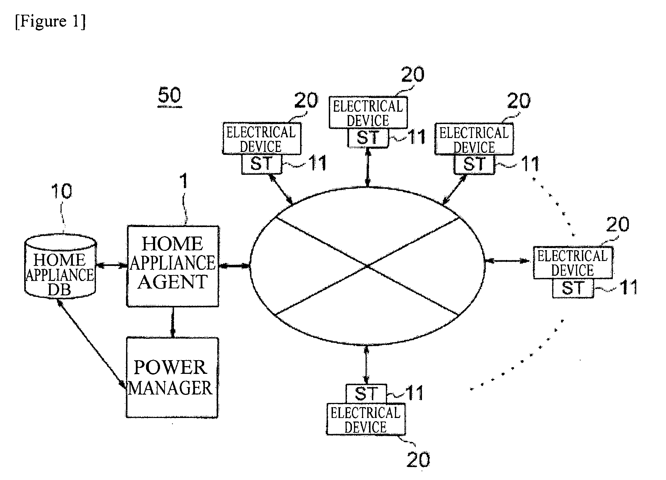

The configuration of a communication network of an EoD control system according to the present invention will be described with reference to Figure 1.

Figure 1 is a schematic diagram showing the configuration of the communication network of the EoD control system according to the present invention. An EoD control system 50 according to the present invention is installed in offices and households. The EoD control system 50 is composed of a power manager 30, a home appliance DB 10, requested powers of smart taps 11, electrical devices 20, which are home or office electrical products (hereinafter simply referred to as a "household electrical device" or "device") and a power manager 30.

A smart tap in the present invention has at least a function to measure power requested from a connected electrical device and a communication function for transmitting the result of the measurement to a home appliance agent 1 in a server.

The concept of the smart tap also encompasses a smart tap with an additional function to control power supplied from the smart tap to a connected electrical device.

Electrical devices described in a to c below and referred to as electrical devices in some cases can be used by being connected to smart taps in the present invention.

a. An electrical device connected to a smart tap having a control function, e.g., an electrical device incapable of automatically controlling by itself requested power: an incandescent lamp, a light such as a sort of dimmable fluorescent lamp, an electric heater or an electric pot (as a smart tap in this case, a smart tap having a function to control power to be supplied to the connected electrical device is used)

b. An electrical device connected to a tap having a requested power measuring function or a communication function for transmission to the home appliance agent in the server, and capable of automatically controlling by itself requested power: an air conditioner, a television, a refrigerator, or the like

c. An electrical device having in itself or in a remote controller for the electrical device a function for transmission and reception between itself and the home appliance agent and/or a function to control the service of the electrical device

The home appliance agent is connected to smart taps 11 (hereinafter referred to as an "ST") over a local area network (hereinafter referred to as a "LAN") by a wired or wireless LAN. The LAN is merely an example in the present invention and the present invention is not limited to this. According to the present invention, the priority apparatus may be connected to the STs over a network such as WiFi, PLC, ZigBee, or specific low-power radio waves. The devices are connected to the STs through power cords. Accordingly, the STs can communicate with the power manager through the LAN and the home appliance agent.

The home appliance agent has a function to perform transmission to and reception from the smart taps to which electrical devices are connected. The home appliance agent can receive information on changes in functions from internal sections of the electrical devices and/or remote controllers for the electrical devices.

Thus, the home appliance agent has the function capable of performing transmission and reception between itself and the smart taps, the electrical devices and the remote controllers and between itself and the power manager, and is connected to the electrical device DB.

The home appliance agent also has a function to take out information on properties of each electrical device stored in the home appliance DB (power, etc., required for each set condition in the electrical device such as power values, functions and set temperatures required according to service conditions, for example, at the time of power-on, normal service and power-off) and store new information in the electrical device DB.

More specifically, the home appliance agent has functions described below.

1) The home appliance agent has a function to transmit a power request message to the power manager and to receive a power assignment message from the power manager in place of each electrical device.

2) The home appliance agent generates a power request event at a. reception of a mode change notice from one of the home appliances, b. an operation request made by the remote controller and c. estimation of an operating function mode and a power mode of the home appliance, and transmits a home appliance request message to the power manager.

3) The home appliance agent adds power to be requested and a priority to a power request message received from one of the electrical devices or generated from a message from the electrical device or the remote controller.

4) The home appliance agent causes memories in the home appliance DB and the home appliance agent to store average power values in operating modes of the home appliances with respect to requested powers.

5) The home appliance agent uses the averages of power values measured, for example, by the STs as requested power values and transmits the average power values to the power manager.

6) The home appliance agent calculates a priority for a request message by referring to the DB and transmits the calculated priority to the power manager.

7) The home appliance agent controls the home appliances according to assigned powers obtained from the power manager so that the home appliances operate as required according to operating function modes and power modes and controllability.

The assigned powers are the average of powers that the home appliances can use.

8) There are three methods of controlling the home appliances by the home appliance agent as follows.

a. Power control by means of home appliance control command is performed by learning power change patterns in advance and transmitting a function control command to each home appliance such that the average of used power equals to the assigned power.
b. The home appliance agent controls power supplied to each home appliance by transmitting a power control command to a power device, e.g., the tap, so that the average of used power equals to the assigned power.
c. Power control on each home appliance is executed by sending a message to a user to operate the home appliance on a display and a communication device.

In the EoD control system according to the present invention, power is not unconditionally supplied when a request for power is made by turning on a certain device. Instead, a message requesting power is first transmitted to the home appliance agent and, with respect to each device, determination as to whether or not supply of power is permitted and determination of suppliable power are made by arbitration, for example, with respect to suppliable power and priorities on the device, on the power manager through the home appliance agent on the basis of the pattern of use of power needed by the device stored in the home appliance DB. Each device uses only allowed power. Therefore, the power consumption and consumed power do not exceed the target values. The EoD control system thus enables power saving and avoidance of a massive blackout during on-peak hours by reducing the power consumption.

The power manager is connected to the home appliance agent and adjusts powers supplied to the devices on the basis of powers needed by the devices.

The above-described power manager is a general-purpose server including a CPU 1a. A memory (hereinafter simply referred to as a "memory") and the home appliance DB 10 are connected to the power manager. The memory is a hard disk or semiconductor storage device such as a RAM capable of direct read/write. In the memory, patterns of changes in power in the devices are stored. The memory may be provided separately from the electrical device DB, or the electrical device DB 10 may be configured by including the memory.

The power manager performs power arbitration by converting information from the home appliance agent by an EoD protocol.

1) The power manager also performs power supply arbitration in accordance with a power request message from the home appliance agent and transmits a power assignment message as a result of the arbitration to the home appliance agent.
2) The power manager performs arbitration for reducing a power ceiling (peak limit, maximum instantaneous power) and an integral power consumption.

More specifically, the power manager receives from the home appliance agent data on power requested from the electrical devices and the states of services of the electrical devices, and determines powers to be supplied or, for example, the functions to be controlled and priorities with respect to the electrical devices to be controlled, on the basis of information on the electrical devices obtained from the home appliance agent, including the properties of the electrical devices, data on the states of services in the past and the priorities given to the electrical devices, which are stored in the above-described memory or the electrical device DB. The power manager transmits the determined power or the other items through the home appliance agent to, for example, the smart taps, the taps having the requested power measuring function and the communication function for transmission to the home appliance agent in the server, the electrical devices, and the remote controllers.

The power manager therefore has an algorithm for control on the home appliance agent and, if necessary, on the electrical devices and a power supply agent, and performs arbitration by the algorithm.

If the electrical device for which arbitration is performed is a device such as an air conditioner capable of adjusting the temperature, i.e., the degree of functioning as a service target, arbitration includes control of the degree of functioning including a target value to which the temperature is adjusted and/or arbitration for power to be supplied based on a time period required for control of a target value.

Description about an air conditioner will be made by way of example. An air conditioner operates so as to realize room temperatures designated by a user. Functions of an air conditioner designated by a user can be roughly divided into two kinds of modes: service function mode and operating function mode.

The service function mode is, so to say, functional policies such as heating and dehumidification by the air conditioner and turning off of the air conditioner. The operating function mode is details of the service function modes, e.g., a temperature setting to 27°C and a high rate of flow of air from the fan in an air conditioner.

Each of the home appliances including an air conditioner has a plurality of service function modes, and each service function mode has one or more operating function modes. A user selects the service function modes and the operating function modes, and the home appliance behaves so as to realize modes thereby selected.

The home appliance operates by determining power to be used so that a function is realized. That is, each operating function mode has one or more power modes mentioned above and the home appliance operates by selecting a power mode suitable for realizing the operating function mode.

The power mode referred to here is a mode in which the service of the home appliance is performed in accordance with the operating function mode, and which includes power and a time period required to maintain the operating function mode.

An instance of such relations in an air conditioner will be described. An air conditioner $a_i$ has one or more service function modes $f^{ai}_j$, and each service function mode $f^{ai}_j$ has one or more operating function modes $f^{ai}_{jk}$ indicating to which degree the service function mode is realized. Also, each home appliance has one or more power modes $e^{ai}_j$ in which it can work, and each operating function mode $f^{ai}_{jk}$ arbitrarily has the power modes $e^{ai}_j$ for its realization. When the home appliance actually operates, it operates by selecting a suitable power modes $e^{ai}_l$ according to the state of achievement of its function.

Power from a commercial power source is supplied to the devices 20 on the basis of a signal from the home appliance agent.

In this description, an ordinary household is mentioned as a place where the EoD control system 50 according to the present invention is installed. However, the present invention is not limited to this. The EoD control system 50 may be installed in an office or in any other place as long as STs (including a tap having a requested power measuring function and a communication function for transmission to the home appliance agent in the server, and a tap having as the ST, an additional function to control power to be supplied) can be installed in the place. In this description, an ST of an externally attached type connected to a power outlet is mentioned as each ST in the EoD control system according to the present invention. The present invention, however, is not limited to this. An ST of an incorporated (or embedded) type embedded in a power outlet may alternatively be provided. Also, the electrical device itself may have the functions of the ST.

Basic functions needed by the STs are functions to sense power to be requested, the power consumption and the state of operation of the electrical device (home appliance recognition, state recognition) and notify the home appliance agent in the server of the results of this sensing as the state of operation of the electrical device.

The functions of the STs required for the kinds of electrical devices will be described.

a. With respect to electrical devices in accordance with ECHONET, ECHONET Lite, a network home appliance control standard for infrared remote controllers, or the like, functions for notification of the state of the home appliance, i.e., a function to measure consumed power, i.e., requested power, by sensing and a function to communicate this to the home appliance agent in the server are required as functions of the STs provided at points in the above-mentioned place. An infrared communication relay function may be provided if necessary.

b. With respect to electrical devices (existing TVs, air conditioners, or the like) with existing infrared remote controllers or the like other than those in accordance with the network home appliance control standard, incompatible with the home appliance control commands, and capable of simple power adjustment, a function to measure consumed power, i.e., requested power, by sensing and a function to perform transmission to the home appliance agent in the server are required as functions of the STs. An infrared communication relay function may be provided if necessary.

c. With respect to home appliances, e.g., an incandescent lamp, a light such as a sort of dimmable fluorescent lamp, an electric heater and an electric pot, which are part of electrical devices incompatible with the home appliance control commands and having no remote control functions, a function to measure consumed power, i.e., requested power, by sensing, a communication function to perform transmission to and reception from the home appliance agent in the server and a function to control power, for example, by turning on/off, phase control and voltage control are required as functions of the STs.

d. With respect to electrical devices incompatible with the home appliance control commands, having no remote control functions and requiring complicated power adjustment (e.g., a rice cooker and a microwave oven), a function to measure consumed power, i.e., requested power, by sensing and a communication function to perform transmission to the home appliance agent in the server are required as functions of the STs.

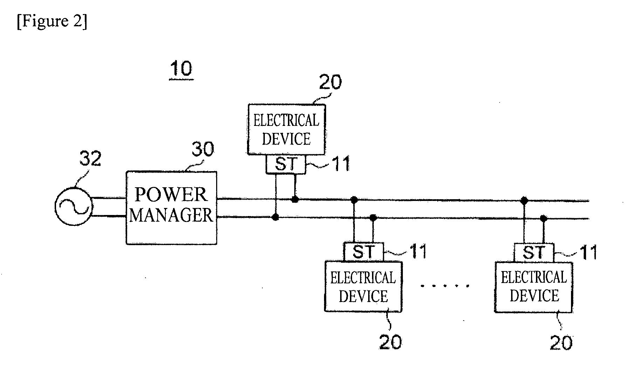

Figure 2 is a schematic diagram showing the configuration of a power system network of the EoD control system 50 shown in Figure 1.

As shown in Figure 2, the EoD control system 50 includes the power manager 30. A commercial power source 32 is connected to the power control apparatus 30. The power manager 30 is composed of, for example, a plurality of breakers (not shown) and includes one main breaker and a plurality of sub-breakers. Power (AC voltage) from the commercial power source 32 is given to the primary side of the main breaker, and an output from the secondary side of the main breaker is distributed among the plurality of sub-breakers. Note that the commercial power source 32 is connected to the primary side of the main breaker through a switch (not shown) for supplying/stopping supply of commercial current. The switch is turned on/off by a switching signal from the home appliance agent.

The above-described home appliance agent, the power manager and the plurality of electrical devices 20 are connected to the output side of the power control apparatus 30, i.e., the secondary sides of the sub-breakers. Although not shown, the home appliance agent is connected by inserting in a wall socket or the like an attachment plug provided on itself so that power can be supplied from the power control apparatus 30 to the power manager. For the plurality of devices, the STs each have an inlet, which is an attachment plug, and an outlet, and are connected so that power from the commercial power source 32 can be fed through the inlet to supply the plurality of devices with power through plugs of the plurality of devices connected to the outlets.

As described above, in the EoD control system according to the present invention, not only the power network shown in Figure 2 but also the communication network shown in Figure 1 are constructed.

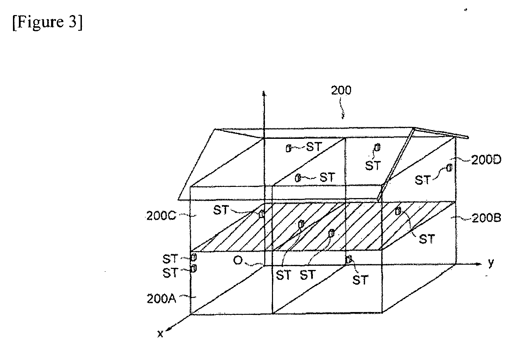

Figure 3 is an explanatory view for explaining the arrangement positions of devices by STs connected to outlets at home.

Referring to Figure 3, a house 200 is composed of, for example, a living room 200A, a Japanese-style room 200B, and Western-style rooms 200C and 200D. The living room 200A and Japanese-style room 200B are arranged on the first floor, and the Western-style rooms 200C and 200D are arranged on the second floor. As shown in Figure 3, respective STs are connected to outlets provided in walls. For example, five STs are connected to outlets provided in walls of the living room 200A, two STs are connected to outlets provided in walls of the Japanese-style room 200B, two STs are connected to outlets provided in walls of the Western-style room 200C, and two STs are connected to outlets provided in walls of the Western-style room 200D. As described above, all devices are connected to a power source through STs.

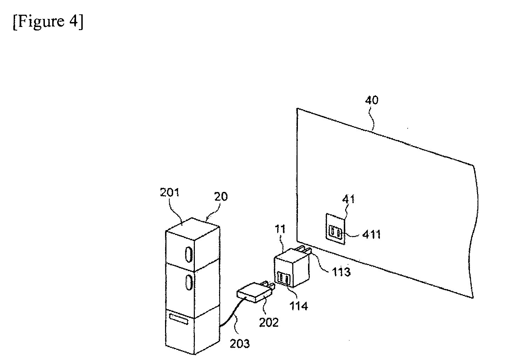

Figure 4 is an explanatory view for explaining the connection relationships among an outlet connected to the commercial power source and provided in a wall, the smart tap or the tap 11 having a requested power measuring function and a communication function for transmission to the home appliance agent in the server, and a device. Referring to Figure 4, a refrigerator 201 which is a device is composed of a plug unit 202 including an attachment plug and a cord 203, and the plug unit 202 of the refrigerator 201 is inserted into/removed from an outlet 114 of the ST. An outlet 41 is arranged in a wall 40, and commercial power is supplied to slots 411 in the outlet 41 through a power system at home. A plug 113 which is an attachment plug is inserted into/removed from the slots 411.

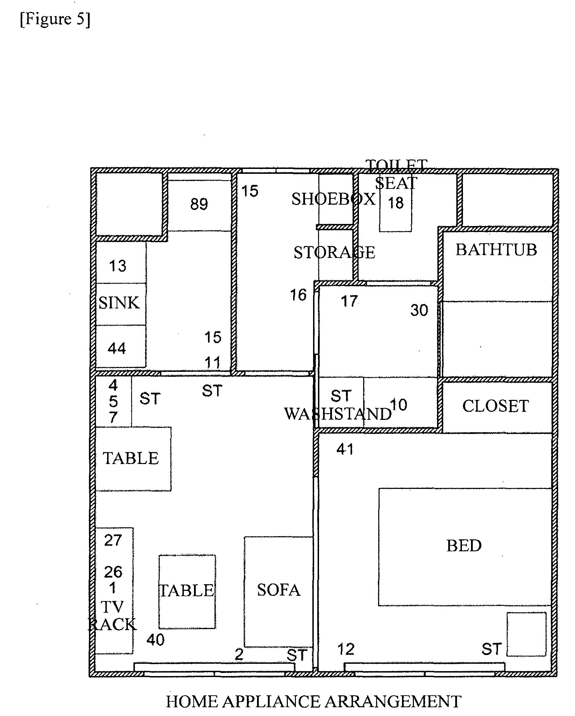

Figure 5 is a floor plan showing the layout of a model house used in an example of dynamic priority information processing (to be described later) and a demonstration experiment.

The model house has one bedroom plus a living room, a dining room, and a kitchen. Reference numerals in Figure 5 denote device names shown in Table 1 and locations where switches for the devices are installed. Reference characters ST in Figure 5 denote a location where the smart tap 11 is arranged. Five STs are arranged in the model house.

[Table 1]

| id | name | id | name | id | name |
|----|------|----|------|----|------|
| 1 | TV | 12 | bedroom light | 30 | bathroom light and ventilating fan |
| 2 | air conditioner | 13 | kitchen light 1 | 40 | electric carpet |
| 4 | pot | 15 | corridor light | 41 | heater |
| 5 | coffee maker | 16 | washroom light | 42 | router |
| 6 | night stand | 17 | toilet light and ventilating fan | 43 | VCR |
| 7 | rice cooker | 18 | toilet seat with warm-water shower feature | 44 | IH |
| 8 | refrigerator | 20 | air cleaner | 45 | mobile recharger |
| 9 | microwave oven | 21 | vacuum cleaner | 48 | notebook PC |
| 10 | washing machine | 22 | dryer | | |
| 11 | living room light and kitchen light 2 | 24 | electric toothbrush | | |

As already described, each ST is composed of voltage and current sensors, a wireless communication module such as a ZigBee module or a wired communication module, and a microcomputer which performs overall control of the components and internal processing. In some case, a semiconductor relay or a semiconductor device is also included in the ST. The microcomputer calculates consumed power from current and voltage waveforms measured by the voltage and current sensors and identifies an electrical device from a small number of features representing characteristics of the voltage and current waveforms. There are two types of data to be received by the EoD control system according to the present invention: consumed power that is calculated at intervals of 0.5 seconds by the microcomputer of the ST, is held as data for each cycle (60 seconds) in an internal memory of the smart tap, and is transmitted to the server in a plurality of packets and a power request message that is transmitted from the ST when each device 20 requests power.

Although not shown, the power manager includes a program storage area and a data storage area of memory. Programs such as a communication processing program, a power use plan setting program, an initial target value updating program, and a priority arbitration program are stored in the program storage area. Device property class data, message data, and the like are stored in the data storage area.

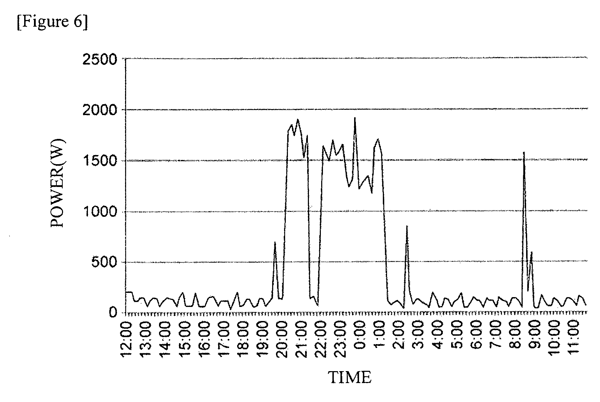

Figure 6 is a chart showing a graph of power consumed by devices in a certain house.

In Figure 6, the ordinate represents power (W) while the abscissa represents time. The graph shows consumed power in each of intervals of 10 minutes in one day. Note that the meaning of power heretofore referred to as consumed power is different from what the term "consumed power" generally means and that the defined term "instantaneous power" will be used hereinafter. The term instantaneous power refers to consumed power which is obtained by adding up consumed power for each of intervals of a minimum control interval $\tau$ (5 to 10 minutes) to obtain a total value and averaging the total value.

The graph shows that power is little used during daytime hours and is mainly used during a time period from 8 p.m. to 1 a.m. and that the instantaneous power has a value as high as 1900 W during the time period.

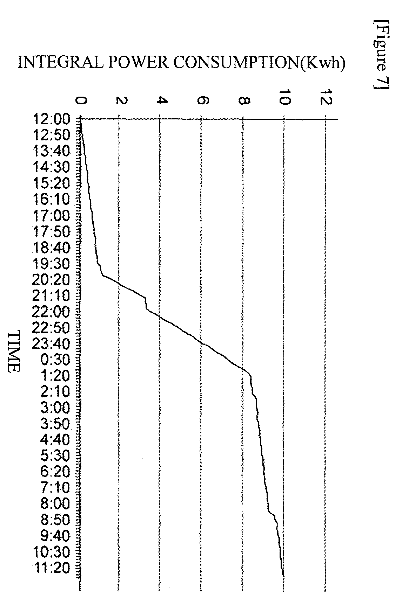

In Figure 7, the ordinate represents power consumption (KWh), and the abscissa represents time. The graph shows power consumption which is an accumulation of instantaneous power in each of intervals of 10 minutes in one day, and the value of the power consumption is 10.0 KWh.

The power consumption per household in Japan is 300 KWh per month and is about 10.0 KWh per day. The power consumption in Figure 7 is equal to the power consumption per household per month. Since the term instantaneous power is used in a different meaning from the general meaning of the term "consumed power," the meaning of an accumulation of power hereto referred to as power consumption is different from what the term power consumption generally means. Note that the defined term "integral power consumption" will be used.

Upper limits for usable power include an upper limit (hereinafter referred to as a "ceiling") for integral power consumption over a fixed period and an upper limit (hereinafter referred to as "maximum instantaneous power") for instantaneous power. The maximum instantaneous power is given as an upper limit for an instantaneous value of power in each time period in order for a user to reduce contract demand or in order to respond to a request for on-peak reduction from an electric power company for maintaining the balance between supply and demand in a power network. The ceiling is given as an upper limit for integral power consumption over a fixed period (e.g., one day, one week, or one month) in order for a user to reduce electricity costs and $CO_2$ emissions.

There are various patterns of power use indicating how much power a user spends in each time period. It is thus necessary to determine as a power use plan how much power can be used at each time in order to bring an instantaneous value and a cumulative value within the upper limits, from a predicted pattern of power use. If a user's pattern of power use is predicted, and a power use plan is determined from the pattern of power use with consideration to the upper limits, maintenance within the upper limits can be achieved while the QoL is maintained. Accordingly, a user's pattern of power use is predicted, a pattern of power use with the upper limits for an instantaneous value and a cumulative value determined is defined as a "power use plan" from the pattern of power use and is used below.

A concrete example of the power use plan will be described. Since instantaneous power has a value as high as 1900 W during hours from 8 p.m. to 1 a.m, as shown in the graph in Figure 6, the graphs in Figures 6 and 7 are estimated to be graphs of not a life pattern of a household including children but a life pattern of a one-person household.

As described above, a graph of the instantaneous power of all devices at home represents a transition in a certain pattern of power use. As for power required by a user through the user's daily life, each user has its own pattern of power use. The QoL can be guaranteed when the pattern is maintained. For example, assume that a user living in a pattern of power use in the graphs shown in Figures 6 and 7 has a 20-ampere contract with an electric power company. If the user uses various devices at one time, and the power consumed by the devices exceeds 2 KW, a breaker trips. Additionally, the power consumption increases by 10.0 KWh per day, which leads to an increase in electricity costs. If the user makes a plan to reduce the upper limits for an instantaneous value and a cumulative value by, e.g., 10% to avoid the problems, a plan which is set by reducing instantaneous power and integral power consumption on the basis of the user's pattern of power use is referred to as a "power use plan." A ceiling is 9.0 KWh, and maximum instantaneous power is 1.8 KW in the power use plan.

As described above, upper limits for power include a ceiling (an upper limit for cumulative power) over a fixed period and maximum instantaneous power (an upper limit for instantaneous power) at each time. There are various patterns of power use for respective users. In order to achieve maintenance within the upper limits, it is necessary to determine, as a power use plan, how much power can be used at each time. If a user's pattern of power use is predicted, and the power use plan is determined with consideration to the upper limits, maintenance within the upper limits can be achieved while the QoL is maintained. The power use plan determines used power for each fixed interval $\tau$ (set to 10 minutes in an experiment). The minimum control interval $\tau$ will be described.

For example, if an upper limit for consumed power for three days is set to 72 kWh, an upper limit for one day is 24 kWh, an upper limit for 12 hours is 12 kWh, and an upper limit for one hour is 1 kWh. An initial target value for the consumed power is calculated differently according to the length of a time interval, and the length of the time interval used to perform control depends on fineness of the control. A result of a demonstration experiment on the relationship between an upper limit for consumed power and the time interval $\tau$ shows that the time interval is preferably 5 to 10 minutes. The time interval $\tau$ will be referred to as the minimum control interval $\tau$ and can be arbitrarily set to between 5 and 10 minutes by a user. If the minimum control interval $\tau$ becomes equal to or more than 10 minutes, the interval is long. If a user wishes to use various devices, the user may be unable to use one(s) of the devices, and the QoL may be greatly impaired. The minimum control interval $\tau$ of 10 minutes or longer is thus not preferable. If the minimum control interval $\tau$ becomes equal to or less than 5 minutes, supplied power is changed on a moment-to-moment basis. For example, an unstable situation (e.g., a situation in which the brightness of a light bulb changes at all times, and the light bulb flickers) may occur. The minimum control interval $\tau$ of 5 minutes or shorter is thus not preferable. Calculating power to be consumed by each of all devices from the consumed power and processing the power is difficult because the volume of data is enormous.

It is supposed that, for example, even in a situation where the result of control in the above-described way is such that the brightness of a light bulb in a room is not frequently changed, persons in the room have a stronger feeling of uncomfortableness when the change in brightness of the light bulb per unit time is increased. For example, not the absolute value of the brightness but the amount of change in brightness per unit time, i.e., the rate at which the brightness changes abruptly, largely influences such uncomfortableness.

An example of control of an individual electrical device along such a power use plan will be described.

(Power request made by home appliance agent)

In order to realize each of the function modes set by a user, the home appliance agent selects a power mode, makes a power request to the power manager and operates according to an assigned power mode. If the assigned power mode is different from the power mode required at the present point in time to fulfill each function mode, the home appliance agent makes a power request to the power manager to realize the desired function.

In session between the power manger and the home appliance agent for realizing the function, the home appliance agent prepares a request QoEn and a power request message and makes a power request to the power manager by using them at the time of transition to a power mode different from the power mode presently assigned. After a power assignment message is received from the power manager, a transition to the power mode designated in assignment QoEn is made.

An operating function mode to be considered when the home appliance agent is operating so as to perform such a function is realized while a power mode is being changed. The operating function mode realized by the power mode change is not maintained at a strictly set value at all times but has the power mode controlled so that the operating function mode is maintained in a certain region on the service function mode.

In such a model, an operating function mode is configured by a target value of an operating function such as a set room temperature and an upper limit or a lower limit of the operating function or both the upper and lower limits. The relationship between power mode change and an operating function mode will be described with respect to a power request from the home appliance agent.

In a situation where a service function mode $f^{a_i}_j$ and a service function mode $f^{a_i}_{jk}$ are presently set for a home appliance $a_i$ and a power mode $e^{a_i}_j$ is assigned, a state $F^{a_i}_j(t)$ on the service function mode changing with time comes closer to the upper limit or the lower limit of the set operating function mode $f^{a_i}_{jk}$. A new power mode is then selected in order that $^{obj}f^{a_i}_{jk}$ be realized. A request for this is made to the power manager to receive an assignment. The state $F^{a_i}_j(t)$ is thereby changed so as to fulfill the set operating function mode. When a target value is reached, a new power mode for maintaining this state is selected and a request for the new power mode is made.

Service and operating function modes set by a user can be fulfilled by repeating making such a state change and a power request.

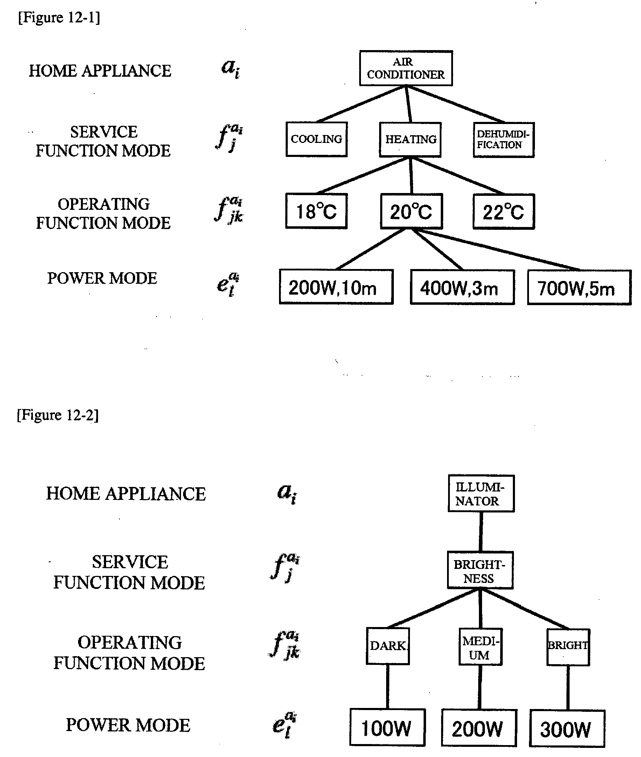

Figure 12 shows such relations with respect to an air conditioner taken as a concrete example of a home appliance. To realize a set operating function mode, the operation is performed while suitable power modes are selected.

(First Embodiment)

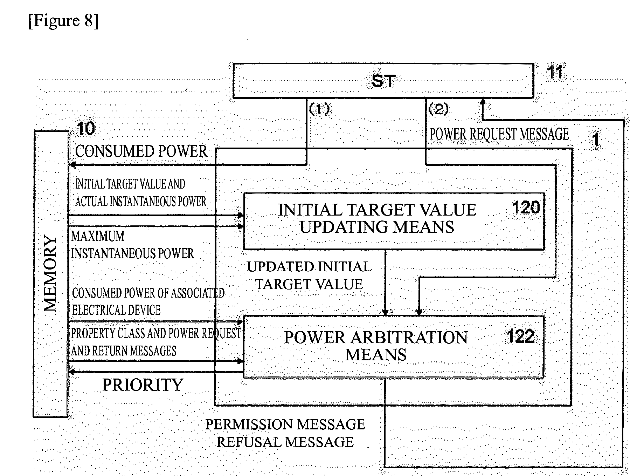

Figure 8 is a functional block diagram of a first embodiment showing functions of a power manager shown in Figure 1.

Reference numeral 1 in Figure 8 denotes a power manager; 10, a memory; and 11, an ST. The power manager is composed of initial target value updating means 120 and power arbitration means 122. Reference characters (1) denote consumed power transmitted from the ST. As preprocessing, the power manager converts the consumed power to a power use plan which determines used power for a minimum control interval $\tau$ and stores the power use plan, instantaneous power of an initial target value, and maximum instantaneous power in a memory 10, before the priority apparatus is activated. Reference characters (2) denote a power request message transmitted from the ST. The power request message is transmitted to the power arbitration means 122.

The initial target value updating means 120 has a function of allocating a difference between instantaneous power with an initial target value and actual instantaneous power to subsequent instantaneous power with an initial target value to calculate an updated initial target value such that the updated initial target value does not exceed maximum instantaneous power. The power arbitration means 122 has a function of comparing, with the updated initial target value, a total value of power consumed by a device having transmitted the power request message and devices in operation and, if the total value is larger, selecting a device having a priority of the minimum value among the devices obtained on the basis of electrical device property class data (to be described later) and selecting a device according to device property.

(Preprocessing)

As processing to be performed prior to startup of the home appliance agent, a process of setting the above-described power use plan exists. The power use plan setting process will be described below.

The home appliance agent stores consumed power calculated at intervals of 0.5 seconds which has been transmitted from the ST in the memory and stores instantaneous power that is obtained by adding up the consumed power to obtain a total value and averaging the total value in the memory at intervals of the minimum control interval $\tau$ (5 to 10 minutes). A past record of a user's actual use of power (e.g., instantaneous power and integral power consumption for one week, one month, or each of four seasons, spring, summer, autumn, and winter) is set as a power use plan and is stored in the memory in advance.

An EoD control system according to the present invention sets a value determined by a user (e.g., a value reduced by 30%) as a target value using a pattern of power use that is a past record of a user's actual use of power and makes a power use plan in advance. The EoD control system determines its ceiling and maximum instantaneous power and performs power control. The EoD control system according to the present invention performs actual control using the ceiling and maximum instantaneous power.

Accordingly, the power manager according to the present invention sets in advance a power use plan using instantaneous power for each time period derived from a past record of a user's actual use of power and can set the power use plan in more detail.

Power used by each device is transmitted to the power manager at all times, and the power manager accumulates the used power in the memory.

An example of the power use plan will be described below. A power use plan is determined using instantaneous power in each minimum control interval $\tau$ (set to 10 minutes in a demonstration experiment (to be described later)). Let C (Wh) be a ceiling (an upper limit for integral power consumption) set by a user; M(t) (W), maximum instantaneous power (an upper limit for instantaneous power); and D(t) (W), a predicted value for power demand at time t. An initial target value $T_0(t)$ (W) is created from Equations (1) and (2).

$$D'(t) = \begin{cases} D(t) & if \ D(t) \leqq M(t) \\ M(t) & otherwise \end{cases} \tag{1}$$

$$T_0(t) = \frac{C}{\displaystyle\sum_{t_{start}}^{t_{end}} \tau \ D'(t)} D'(t) \tag{2}$$

The power manager controls each device according to the power use plan such that power of the initial target value $T_0(t)$ (W) falls below the maximum instantaneous power.

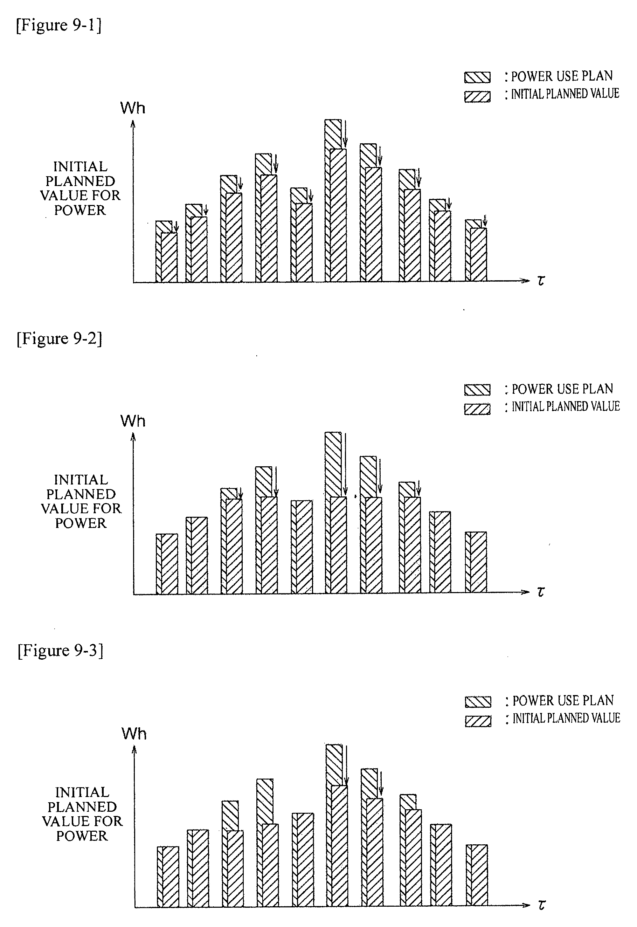

The initial target value $T_0(t)$ (W) that is the example of the power use plan is a plan for reducing a value at each time in a power use plan by a fixed percentage and setting initial target values such that the initial target values as a whole stay within upper limits (hereinafter referred to as a "fixed percentage reduction plan"). Figure 9-1 shows the example. Examples for setting an initial target value are reducing only values during on-peak power use hours when used power is above instantaneous power of a power use plan for one day (hereinafter referred to as a "peak reduction plan" (Figure 9-2) and reducing values according to power costs (hereinafter referred to as a "cost reduction plan" (Figure 9-3). For example, if a reduction in power use during hours from 1 p.m. to 4 p.m. when most power is used is desired, power usage can be reduced by increasing the power costs for power usage during the time period. The reduction plans allows setting of initial target values, and initial target values can also be set using the reduction plans in combination. As described above, the power manager can select a power use plan according to a reduction method required by a user.

As has been described above, as the prior processing to be performed before activating the power manager, it is necessary to set a power use plan on the basis of a past record of a user's actual use of power and store in advance a ceiling and maximum instantaneous power as an initial target value which are obtained by reducing the power use plan using a reduction plan selected by the user in the memory. When the power manager is activated, the initial target value updating means 120 (to be described later) performs a process (interval) of checking consumed power and updating an initial target value at fixed intervals ($\tau$) using the initial target value as a target, and the power arbitration means 122 is composed of means for performing a process (event driven) of arbitrating between a device and different devices in response to a request from the device. The means will be described below. Power used by each device is transmitted at all times to the power manager through the home appliance agent the data is accumulated.

(1) Initial Target Value Updating Means

The initial target value updating means 120 for performing a process (interval) of updating an initial target value (for instantaneous power) at the minimum control intervals ($\tau$) on the basis of the initial target value will be described.

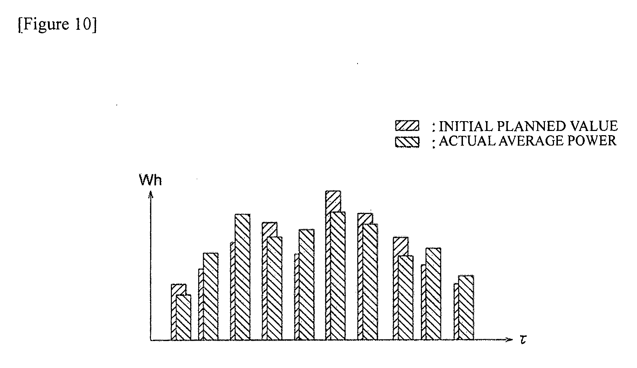

When the power manager is activated, control is performed using an initial target value for power per $\tau$ as a target at the time of actual power control. If a user acts differently from a past history, a reduction in power may be impossible in view of the QoL and the properties of devices in some cases. In such a case, actual instantaneous power temporarily exceeds an initial target value. In contrast, the number of devices to be used may be small, and actual instantaneous power may fall below an initial target value. Since devices are used by a person, actual instantaneous power depends on the person's behavior during use. If control is continued while initial target values are maintained in the cases, maintenance within upper limits cannot be finally achieved. Figure 10 is a bar chart showing an example of actual instantaneous power when control is performed while initial target values are maintained.

A case is conceivable where power cannot be reduced to (or to below) an initial target value in view of a user's status of use of a device (e.g., since control is performed while initial target values are maintained, power of only a device such as a respirator which cannot be stopped exceeds an initial target value at a certain moment. In this case, instantaneous power may temporarily exceed an initial target value as long as the instantaneous power does not exceed maximum instantaneous power. Initial target values are updated such that an excess at this time is absorbed in a subsequent part of a power use plan. Although initial target values deviate from initially determined values, maintenance within a ceiling can be achieved by feeding back a difference between actual instantaneous power and an initial target value to subsequent initial target values while maintaining the QoL.

An allocation function is defined for giving feedback to an initial target value. The allocation function receives a difference between an initial target value and actual instantaneous power, allocates the difference to initial target values for times later than a time for the difference, and calculates instantaneous power of a new initial target value.

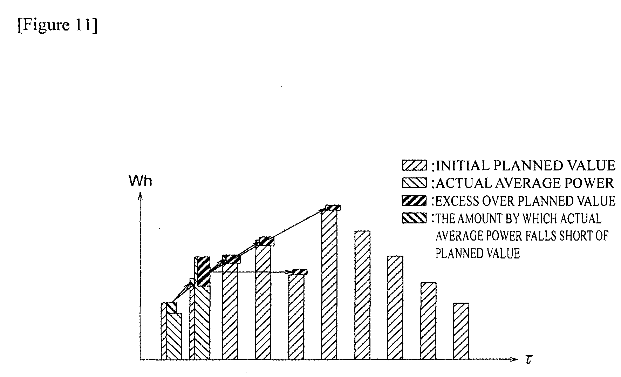

Figure 11] is an explanatory chart of a case where control that feeds back a difference between actual instantaneous power and an initial target value to subsequent planned values is performed. When the power manager is activated, and a control start time reaches a time $t_{now}$ satisfying $t_{now} - t_{start} \geq i\tau$, the power manager updates a power use plan.

If $i := i + 1$, a power use plan $T_i(t)$ represents a power use plan at time t after i updates, i.e., after a lapse of $i\tau$. Reference character $\gamma$ in Equation (3) denotes an allocation function for updating a power use plan, and the function allocates a difference between instantaneous power of an initial target value and actual instantaneous power to subsequent instantaneous power. Accordingly, differential power to be allocated to subsequent instantaneous power is determined by substituting the difference into Equation (3).

$$T_{i+1} := min(\ \gamma\ (\hat{T}_i(t_{now}) - \hat{E}(t_{now}), t_{now} - t_{start})T_i(t), M)\ (3)$$

$$\hat{E}(t_{now}) = \sum_{t_{start}}^{t_{now}} \tau\ E_{total}(t) \qquad (4)$$

$$\hat{T}_i(t_{now}) = \sum_{t_{start}}^{i\,\tau} T_i(t) \qquad\qquad (5)$$

Reference characters $T_1(t_{now})$ in Equation (5) denote a current initial planned value, and reference characters $E(t_{now})$ denote current used power.

The chart shown in Figure 11 is obtained using a method (hereinafter referred to as an "equal difference allocation method") for equally dividing the difference and allocating a divided part to all of subsequent new initial target values. Another possible method is allocating the difference to only the one immediately succeeding instantaneous power (hereinafter referred to as an "instantaneous power allocation method"). As described above, difference allocation methods include the equal difference allocation method and instantaneous power allocation method. First, an overall power use plan is created. During actual control, an initial target value is updated so as not to exceed maximum instantaneous power to suit a status of use. This makes it possible to achieve maintenance within a ceiling while performing flexible control.

(3) Power Arbitration Means

The power arbitration means 122 for performing a process (event driven) of arbitrating between a device and different devices in response to a request from the device while maintaining the QoL, by prioritizing devices will be described.

A request for power from a device is issued at a time when a user wants to use the device, regardless of $\tau$ described above. Such requests include one issued by a device which can wait until the end of the minimum control interval $\tau$ of 5 to 10 minutes and one issued by a device which requires immediate supply of power. In the case of the latter device, control at the intervals $\tau$ causes a failure to supply power in time, which leads to a reduction in QoL. Power used by the power arbitration means upon receipt of a request for power is not instantaneous power but actual consumed power. With the use of actual consumed power, immediate decisions can be made in response to requests for power issued at various times, and whether to wait can be determined immediately.

The EoD control system requires a guide for determining to which one power is supplied when individual devices request power. Desired power cannot be supplied to all devices to achieve maintenance within upper limits, and which one of the devices requires power depends on the statuses of the devices and a user. Determination of to which device power is preferentially supplied matters. Accordingly, priority needs to be determined according to the property and status of a device. To this end, a priority function returning a value of 0 to 1 is set for devices, and power is preferentially supplied to one having a priority of a larger value. Note that QoL is enhanced when a device is supplied with power and is made available and that social contribution through a cost reduction and energy saving are not taken into account.

Since a power control method varies among devices, the properties of devices need to be known in advance in order to select a device for which supplied power is reduced in response to requests for power from the devices. A parameter representing the property of power requested by each device and a power control method for the device is denoted by QoEn. As for QoEn, devices are classified on the basis of the device power control methods below.

(1) Adjustable Device (based on whether power supplied during operation can be changed) (a set of devices as members is denoted by $A_{adj}$)

(2) Waitable Device (based on whether a device can wait to be supplied with power when the device is activated) (a set of devices as members is denoted by $A_{wait}$)

(3) Suspendable Device (based on whether power supply can be suspended during operation) (a set of devices as members is denoted by $A_{sus}$)

By combining the three types of power control methods, devices are classified into eight classes, as shown in Table 2. Respective pieces of data for eight classes are defined as "electrical device property class data" and are used. The priorities of devices are controlled using the electrical device property class data.

The eight classes are tied to device names identified by IDs in the "Home Appliance" column, and a device to which priority is to be given is determined using the priorities of devices in use. For example, when the power manager receives a power request message from the ST, the power manager determines whether to permit or refuse the request, using the priorities of a device having transmitted the message and devices in operation and the electrical device property class data.

(1) Devices classified as adjustable devices include one whose function can be used even if supplied power is slightly reduced during use. Examples of such devices include a dryer and a light bulb. (2) Some devices may not cause any functional problems even without immediate power supply in response to requests for power from the devices as long as power is supplied by a predetermined time. Examples of such devices include a rice cooker and a washing machine. (3) Some devices have little effect on the life of a user using the devices even if power supply is suspended during use. Examples of such devices include an air conditioner and a refrigerator.

Note that, for example, a respirator is classified into class 8 in order to ensure safe and comfortable living. Although devices are classified into the eight classes, classes to which the devices belong are not fixed and are not limited to the classes shown in Table 2. A user can arbitrarily determine into which class each device is to be classified. For example, if a bedridden elderly person selects an air conditioner as an always necessary device, the air conditioner is classified into class 8. In other words, devices including a gas detector, a respirator, and a network device (e.g., a router) as electrical devices which cannot be classified on the basis of the adjustable, suspendable, and waitable power control methods fall into class 8.

[Table 2]

| Class | Adjustable | Waitable | Suspendable | Home appliance (Electrical device ID) |
|---|---|---|---|---|
| 1 | YES | YES | YES | notebook PC and boiler |
| 2 | YES | YES | NO | toilet seat with warm-water shower feature and microwave oven |
| 3 | YES | NO | YES | heater, air conditioner, and refrigerator |
| 4 | YES | NO | NO | TV and dryer |
| 5 | NO | YES | YES | dishwasher and washing machine |
| 6 | NO | YES | NO | rice cooker and toaster |
| 7 | NO | NO | YES | copier and electric pot |
| 8 | NO | NO | NO | gas detector, respirator, and network device (e.g., router) |

Since powers are assigned to the electrical devices in terms of cumulative powers per unit time, it is difficult to cope with moment-to-moment changes in power by performing only control of cumulative power during a certain time period.

To ensure coping with such changes in power, power modes were defined for the above-described classified home appliances and operations for realizing the functions of the household electrical devices designated by a user are divided into two kinds of modes: service function mode and operating function mode.

The service function mode is functional policies such as heating and dehumidification with the air conditioner and turning off of the air conditioner.

The operating function mode is details of or levels in the operating function modes, e.g., a temperature setting to 27°C and "strong" in an air conditioner.

Each home appliance agent has a plurality of service function modes, and each service function mode has one or more operating function modes. A user selects from the service function modes and the operating function modes. To realize modes thereby selected, the home appliance agent selects a power mode, makes a request for the power mode and operates. Note that since the present invention is for management of electric power, a function as a range of control is only a function accompanied with a definite change in power. Accordingly, changing TV channels and programming a rice cooker, for example, are not included in any of the above-described function modes since no direct change in power is caused thereby.

A home appliance agent $a_i$ is expressed as follows by using function modes and power modes such as those described above. The home appliance agent $a_i$ has one or more service function modes $f^{ai}_j$, and each service function mode $f^{ai}_j$ has one or more operating function modes $f^{ai}_{jk}$ indicating to which degree the service function mode is realized.

Also, each home appliance agent has one or more power modes $e^{ai}_j$ in which it can work, and each operating function mode $f^{ai}_{jk}$ arbitrarily has the power modes $e^{ai}_j$ for its realization. The home appliance agent operates by selecting a suitable power mode $e^{ai}_l$ according to the state of achievement of its function. Figure 12-1 shows an example of relations in an air conditioner between function modes and power modes defined as described above.

An air conditioner has a plurality of power modes for realizing operating function modes, as described above. In some cases, for example, in the case of a light shown in Figure 12-2, power modes correspond to operating function modes in a one-to-one relationship.

A service function mode in which a plurality of power modes exist with respect to an operating function mode as in the case of the above-described air conditioner or the like will be considered. This service function mode is such that an operating function mode is established with a slight delay relative to an assigned power mode, and that a certain time period and an allowable range for supplied power exist with respect to the operating function mode to be satisfied. The home appliance agent having such a service function mode selects a suitable power mode $e^{ai}_l$ such that neither of an upper limit $^{max}fa^i_{jk}$ and lower limit $^{min}fa^i_{jk}$ is exceeded taken into account the present state $F^{ai}_j(t)$ with respect to the set operating function mode $^{obj}fa^i_{jk}$, and makes a request.

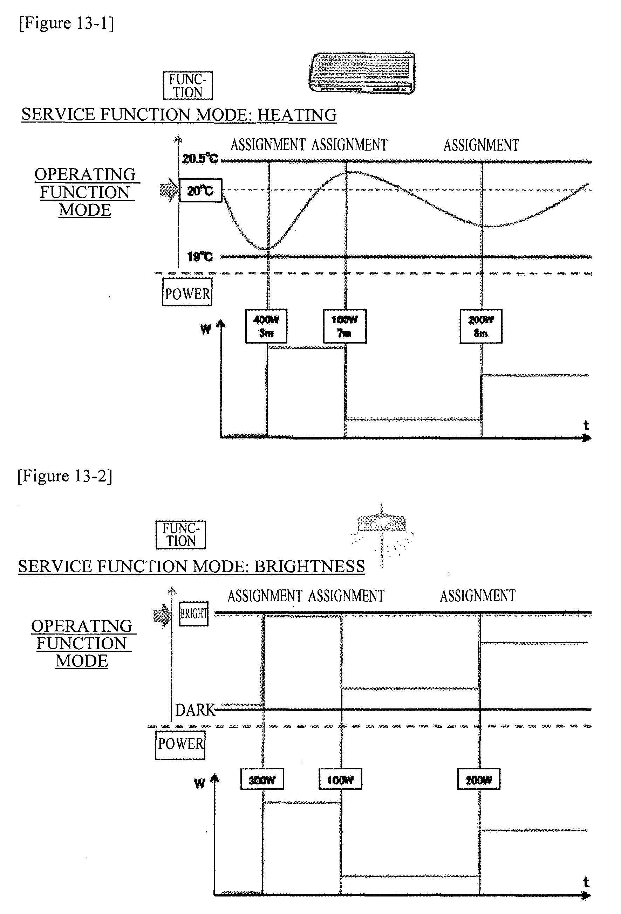

Figure 12-1 shows the home appliance agent having such a service function mode. Figure 13-1 shows relations between an operating function mode and power modes assuming that the operating function mode is at 20°C.

In the case of such a household electrical device, power is assigned in a way described below.

A power mode first assigned is one of the power modes associated with a set operating function mode. When a power mode $e^{ai}_m$ determined by the home appliance's autonomous inference changes from the presently assigned power mode $e^{ai}_l$, therefore, the home appliance agent makes a request for power mode $e^{ai}_m$ to the power manager, while the function according to a user's preference is maintained at all times.

The home appliance agent thus makes a power request and assignment. In this study, session between the power manager and the home appliance agent, such as that described above, is performed on the basis of information on requested power, information on assigned power and time periods associated with them.

At the time of transition to a power mode different from the power mode presently assigned, the home appliance agent defines information on power needed for itself, prepares a power request message based on this, and makes a power request to the power manager. After a power assignment message is received from the EoD manager, a transition to the designated power mode is made.

A service function mode in which one power mode exists with respect to an operating function mode as in the case of the above-described light will be considered. In this service function mode, an operating function mode is established directly from an assigned power mode. In order to realize the set operating function, therefore, the home appliance agent always requests the corresponding power mode. Figure 12-2 shows a home appliance having such a service function mode, and Figure 13-2 shows relations among operating function modes and power modes.

A case where a power mode is uniquely determined with respect to an operating function mode will be considered. In such a case, a power mode $e^{ai}_m$ requested from the home appliance agent corresponds to an operating function mode set by a user. If an assigned power mode $e^{ai}_l$ differs from this, the home appliance agent makes a request to the power manager for the power mode $e^{ai}_m$ corresponding to the operating function mode set by the user.

In the cases shown in Figures 12-1 and 12-2, there is a possibility of the operating function mode being cut down simultaneously with the power mode when the power mode is cut down. Equation 6-1 shown below is not useful in mitigating uncomfortableness felt by the user in such a case.

$$P^{noU}_{adj} = \begin{cases} 1 & E_{exp} \leq E_{min} \\ 1 - \frac{E_{req} - E_{min}}{E_{exp} - E_{req}} & E_{min} < E_{exp} < E_{req} \\ 0 & E_{req} \leq E_{exp} \end{cases} \qquad (6-1)$$

With respect to an adjustable electrical device described below, there is a need to consider the influence of reductions in supplied power caused with passage of time on a user.

1. Adjustable Electrical Device

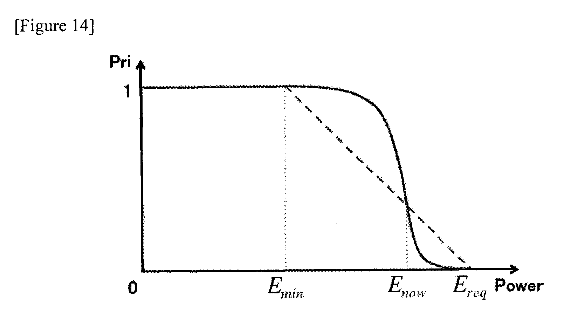

A power-adjustable example is a dryer. As shown in Figure 14, the level of user satisfaction is highest when power as requested is supplied to a power-adjustable device and does not change much even if supplied power is slightly reduced.

In an adjustable service function mode, two power modes: a power mode in the same operating function mode and a power mode in a different operating function mode, are conceivable as power mode transition destinations in which power reduction at the time of arbitration can be achieved. Transition to the power mode in the same operating function mode is made with priority to transition to the different one of these two power modes. More specifically, in a case where an air conditioner is set to 22°C for heating, a suitable power mode within the 22°C operating function mode is first selected and, when it becomes difficult to fulfill a result of arbitration, the operating function mode is set to 21°C, and a suitable power mode is selected therein.

However, if large changes in power occur successively as a result of adjustment of power by arbitration, and if a user can perceive the changes, the user has an uncomfortable feeling. For example, in the case of the light, changes in power link directly to functional conditions and, therefore, successive changes in power appear as blinking of flickering light to the user, which is considerably unpleasant.

To avoid such successive changes in power, a limit is provided on changes in power on a priority function in arbitration according to the magnitude of changes in power and a history of changes in power with respect to an electrical device perceivable by a user. More specifically, changes in power to be caused are made as small as possible and intervals at which power is changed are set as long as possible.

Expressions (6-2) to (6-4) shown below represent formulated priority functions. In the expressions, $E_{now}$ represents average power presently assigned; $E_{req}$, requested average power; $E_{min}$, average power in a minimum power mode; $E_{exp}$, average power in a transition destination power mode; and $T_{his}$, a time period until the preceding change in power.

$$P_{adj} = \begin{cases} P_{adj}^{user} & \text{(Perceptible to user)} \\ P_{adj}^{ngU} & \text{(Imperceptible to user)} \end{cases} \qquad (6-2)$$

$$\alpha_{adj} \propto \frac{1}{T_{his}} \qquad (6-3)$$

As an example of a priority thus designed and assigned to a power-adjustable device is shown in Figure 14 and by Equation (6-4).

$$P_{adj}^{user} = \begin{cases} 1 & E_{exp} \leq E_{min} \\ 1 - \frac{E_{now}-E_{min}}{E_{req}-E_{min}}\left(\frac{E_{exp}-E_{min}}{E_{now}-E_{min}}\right)^{\alpha_{adj}} & E_{min} \leq E_{exp} \leq E_{now} \\ \frac{E_{req}-E_{now}}{E_{req}-E_{min}}\left(\frac{E_{req}-E_{exp}}{E_{req}-E_{now}}\right)^{\alpha_{adj}} & E_{now} \leq E_{exp} \leq E_{req} \\ 0 & E_{req} \leq E_{exp} \end{cases} \qquad (6-4)$$

The priority function shown by Expressions (6-2) and (6-3) was designed for each of the home appliances classified with respect to user's perception on home appliance functions. Expression (6-4) was designed by considering user's perception on a function and considering the difference between power presently used and power intended to be used and the preceding power change time. The degree of uncomfortableness possibly given to a user can be reduced thereby.

2. Waitable Device

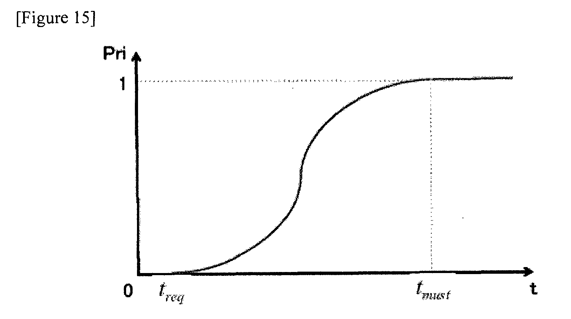

When the home appliance manager makes a request, the EoD manager can refuse the request. An example of a device waitable at the time of startup is a rice cooker. A rice cooker is such home appliance that its operation may be completed by a set time and the startup time can be delayed by accepting the request after a lapse of a certain time period. That is, a priority may be defined in such a manner that, as shown in Figure 15, the priority is low immediately after a request for power is made and the priority is increased with approach to the time by which the home appliance must be started up.

A priority function for such priority setting is shown by Equation (7), wherein $t_{req}$ represents an initial request time; $t_{must}$, a deadline supply time; and $\alpha_{wait}$, a characteristic parameter of a home appliance.

$$P_{wait} = \begin{cases} \frac{1}{1+e^{-\alpha_{wait}\left(t_{now}-\frac{t_{must}-t_{req}}{2}\right)}} & t_{req} \leq t_{now} < t_{must} \\ 1 & t_{must} \leq t_{now} \end{cases} \qquad (7)$$

The priority function shown by Equation (7) was designed with the assumption that a time at which a set service function mode is to be realized can be shifted, and that with delay in realization of the service function mode, the degree of need for power is increased. In the service function mode, a time at which it is necessary to realize the function is described. The degree of need for power changes depending on such time. It may be considered that the design of the priority function based on such concept enables use of power necessary for realization of the function with reliability.

This priority function only expresses the degree of need for a requested power mode at the time of requesting. It is assumed that as this priority function, a priority function is used which indicates no priority for any reduction in power from the current condition even at the time of requesting, and which is adjustable.

3. Suspendable Device

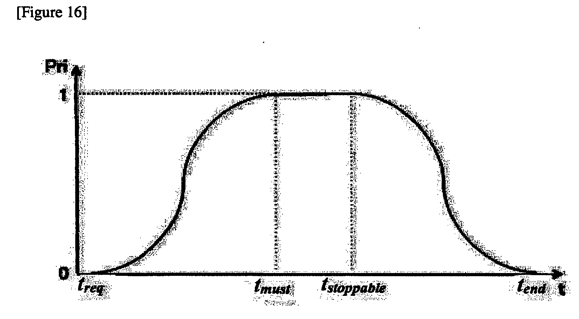

A suspendable example is an air conditioner. A suspendable device is a home appliance which acts toward a certain steady state during operation and, once the steady state is reached, can maintain the steady state even after operation is suspended, like temperature setting of an air conditioner. Assume a case of such a home appliance. As shown in Figure 16, since the steady state is maintained even if operation is suspended when the steady state is reached after operation is started, the priority can be reduced. During the suspension, since the home appliance deviates from the steady state as time passes, the home appliance needs to resume operation with the increased priority. A priority P(t) of the suspendable home appliance is defined separately for a case where a is in operation and a case where a is in abeyance as follows.

Here, $t_{req}$ represents an initial request time; $t_{must}$, a deadline supply time; $t_{stoppable}$, a stoppable time; $t_{end}$, an assignment end time; and $\alpha_{sus}$, a characteristic parameter of a home appliance.

$$P_{sus} = \begin{cases} P_{start} & \text{(During stoppage)} \\ P_{stop} & \text{(During operation)} \end{cases} \tag{8}$$

$$P_{start} = \begin{cases} \frac{1}{1+e^{-\alpha_{start}(t_{now} - \frac{t_{must}-t_{req}}{2})}} & t_{req} \le t_{now} < t_{must} \\ 1 & t_{must} \le t_{now} \end{cases} \tag{9}$$

$$P_{stop} = \begin{cases} 1 & t_{now} \le t_{stoppable} \\ \frac{1}{1+e^{\alpha_{stop}(t_{now} - \frac{t_{end}-t_{stoppable}}{2})}} & t_{stoppable} < t_{now} \end{cases} \tag{10}$$

The priority functions shown by Equations (8) to (10) were respectively designed with respect to states classified in correspondence with assigned power modes. The design of the priority functions based on the assumption that the state of functioning changes according to the power supply time, enables limiting degradation of the state of functioning even during stoppage.

4. Priority of General Home Appliance

Generally, classes of home appliances are defined using a combination of the three properties shown in Table 2. By combining the priorities defined for the properties, the priority functions for the classes are defined as shown under the item of priority function in Table 3. For example, the priority function of class 1 is defined by the product of the priority functions corresponding to the respective properties as follows:

$$\text{Pri}_a(t, p) = \text{Pri}_a^{adj}(p)\text{Pri}_a^{shift}(t)\text{Pri}_a^{int}(t) \tag{11}$$

The priority function of class 8 is 1, which means that power is always preferentially supplied.

[Table 3]

| Class | Priority Function $\text{Pri}_a(p, t)$ |
|---|---|
| 1 | $\text{Pri}_\alpha^{adj}(p) \cdot \text{Pri}_\alpha^{shift}(t) \cdot \text{Pri}_\alpha^{int}(t)$ |
| 2 | $\text{Pri}_\alpha^{adj}(p) \cdot \text{Pri}_\alpha^{shift}(t)$ |
| 3 | $\text{Pri}_\alpha^{adj}(p) \cdot \text{Pri}_\alpha^{int}(t)$ |
| 4 | $\text{Pri}_\alpha^{adj}(p)$ |
| 5 | $\text{Pri}_\alpha^{shift}(t) \cdot \text{Pri}_\alpha^{int}(t)$ |
| 6 | $\text{Pri}_\alpha^{shift}(t)$ |
| 7 | $\text{Pri}_\alpha^{int}(t)$ |
| 8 | 1 |

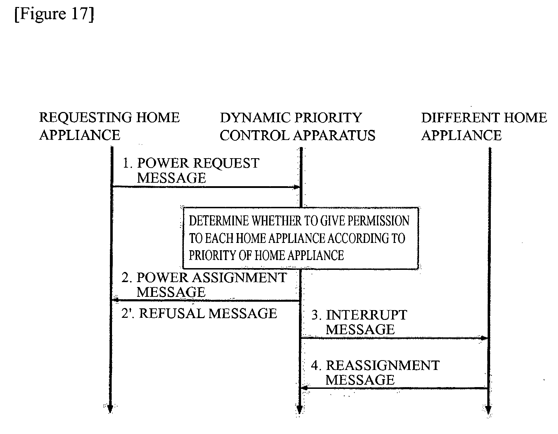

Figure 17 is a sequence chart for explaining a procedure by which the priority apparatus supplies power according to priority in response to a power request message.

1. The ST connected to a device transmits a power request message to the home appliance agent (1).

2. The power manager in the priority control apparatus 1 determines the priorities of the device having transmitted the power request message and a device in operation from a current suppliable amount and a home life pattern.

3. The priority control apparatus 1 transmits, in response, a power assignment message (2) including consumed power and time permitted to the device or a refusal message (2') for a device not permitted to be supplied with power according to the priority of the device. If the priority of the device in operation is low, and the device is desired to be stopped or power to the device is desired to be reduced, the priority control apparatus 1 transmits an interrupt message (3) to the device.

4. A device permitted to use power operates with permitted power for a permitted time period. A device for which power use is refused transmits a reassignment message after a fixed period of time (4).

With the procedure, a user can reduce power as much as he/she wants by setting the maximum suppliable power amount (a ceiling) by himself/herself.

The procedure will be described in detail. A device $a_{req}$ requiring power transmits a power request message (Table4-1) to a server (1 in Figure 17). The server having received the request compares a sum $E'_{total}(t_{now})$ of total used power $E_{total}(t_{now})$ at a current time $t_{now}$ and requested power $E_{req}$ with a power use plan $T_i(t_{now})$ immediately. If the overall power $E'_{total}(t_{now})$ is below the plan, the server permits the power $E_{req}$ as requested (Equation (12)). If $a_{req} \in A_{wait}$, the server refuses the request (2' in Figure 17). Otherwise, the server calculates the priorities of devices. The server reduces the power for a different device lower in priority than the device $a_{req}$ as interrupt processing (3 in Figure 17) (Equation 13), secures power to update the total used power $E_{total}(t_{now})$, and decides to reduce supplied power according to the property of the device (Equation 14). The server transmits a message with information in Table 5-1 (e.g., suppliable power $E_{supply}$) to the device $a_{req}$ immediately, and the device uses power according to the message. A policy about power use is determined again for the device and the device $a_{req}$, for which power supply is refused/interrupted, in a next interval process (4 in Figure 17).

$$E_{supply} = \begin{cases} E_{req} & if \ E'_{total}(t_{now}) \leq T_i(t_{now}) \\ E_{refuse} & otherwise \end{cases} \quad (12)$$

$$E_{refuse} = \begin{cases} 0 & if\ a \in A_{wait} \\ E_{adj} & else\ if\ a \in A_{adj} \\ E_{req} & otherwise \end{cases} \qquad (13)$$

$$E_{adj} = max(T_i(t_{now}) - E_{total}(t_{now}), E_{req}^{min}) \qquad (14)$$

($E_{req}^{min}$ : minimum startup power for requesting device)

As described above, the priority apparatus having received a request from each device compares the sum $E'_{total}(t_{now})$ of the total used power $E_{total}(t_{now})$ in operation at the current time $t_{now}$ and the requested power $E_{req}$ with the power use plan $T_i(t_{now})$. If the total used power $E'_{total}(t_{now})$ is above the power use plan $T_i(t_{now})$, the priority apparatus reduces the power for a device $a_{min}$ with a minimum priority according to Equation 13 and gives a priority update.

Data of a power request message which the ST transmits to the home appliance agent will be described with reference to Table 4-1.

Pieces of data in the Value column and the Class in need column are tied to each of the items, device ID, requested power, minimum startup power, suspendable time period, and required startup time period in the Item column. The ST transmits pieces of data as sets of a value and a class in need to the home appliance agent.

[Table 4-1]

| Item | Value | Class in need |
|---|---|---|
| Electrical device ID | ID | 1-8 |
| Requested power | Ereg(W) | 1-8 |
| Minimum startup power | Emin(W) | 1-4 |
| Suspendable time period | Time | 1,3,5,7 |
| Required startup time | Time | 1,2,5,6 |

The home appliance agent collects the data shown in Table 4-1 with respect to the electrical devices. Consequently, the home appliance agent can sense a power mode shown in Table 4-2 below, actual consumed power, and service and operating modes.

[Table 4-2]

| Property | Value | Remark |
|---|---|---|
| Power mode ID | ID | Identifier |
| Duration | Numeric value [s] | Time interval in present mode |
| Average power | Numeric value [W] | Cumulative power in duration/duration |
| Dispersion | Numeric value [W$^2$] | Determined from changes in power in duration |

Data in a message returned from the home appliance agent to the ST will be described with reference to Table 5-1.

Pieces of data in the value column are associated with the device ID, the kind of message, permitted instantaneous power and permitted use time period shown in the item column. The home appliance agent transmits the data to the ST.

[Table 5-1]

| Item | Value |
|---|---|
| Device ID | ID |
| Kind of message | Permission/refusal |

(continued)

| Item | Value |
|---|---|
| Permitted average power | $E_{supply}$ (W) |
| Permitted use time period | Time |

The home appliance agent can control the power mode and service and operating modes shown in Table 4-2 on the electrical device by transmitting such data to the ST.

These are combined as shown in Table 5-2 below.

[Table 5-2]

| | | Control | |
|---|---|---|---|
| | | Power mode | Service and operating function modes |
| Sensing | Actual consumed power | Power-measured and power mode-controlled home appliance | Power-measured and function mode-controlled home appliance |
| | Service and operating function modes | Function mode-identified and power mode-controlled home appliance | Function mode-identified and controlled home appliance |
| | Power mode | Power mode-identified and controlled home appliance | Power mode-identified and function mode-controlled home appliance |

The dynamic priority control apparatus 1 composed of the initial target value updating means 120 and power arbitration means 122 described above can avoid power saving by a reduction in integral power consumption and a massive blackout during on-peak hours without causing a situation in which instantaneous power exceeds its upper limit or integral power consumption exceeds its upper limit C (Wh).

(Second Embodiment)

The above-described dynamic priority control apparatus 1 can finally control instantaneous power to (or to below) maximum instantaneous power and perform control so as to maintain integral power consumption within the upper limit C (Wh). However, an unexpected increase in instantaneous power may occur due to, e.g., a load change during use of a device, and instantaneous power may exceed the maximum instantaneous power. A second embodiment for coping with such a case will be described.

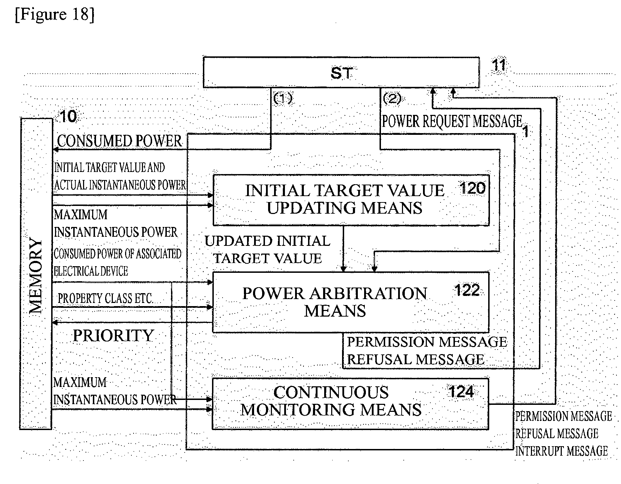

Figure 18 is a functional block diagram of the second embodiment.

A power manager is composed of initial target value updating means 120, power arbitration means 122, and continuous monitoring means 124.

The initial target value updating means 120 and power arbitration means 122 have the same functions as the means described above, and a description thereof will be omitted.

The continuous monitoring means 124 monitors consumed power at all times. If the overall consumed power exceeds maximum instantaneous power for a certain time period d (about 0.5 to 2 seconds) or longer, the power arbitration means 122 performs arbitration based on priority such that the overall consumed power falls below the maximum instantaneous power, i.e., the overall consumed power falls below maximum instantaneous power M instead of the overall consumed power without waiting for a lapse of $\tau$.

The former priority apparatus maintains the QoL by immediately making a decision about a request for power transmitted from a device when, for example, the device is turned on and not interfering with use of the device. The latter priority apparatus updates a planned value and performs arbitration between devices in response to a request for continuation from each device. If supplied power is continuously changed on a moment-to-moment basis, an unstable situation (e.g., the brightness of a light bulb changes at all times, and the light bulb flickers) may occur. Overall stabilization is ensured by introduction of the minimum control interval $\tau$. Maintenance within maximum instantaneous power is guaranteed by monitoring instantaneous power at all times for an excess over the maximum instantaneous power.

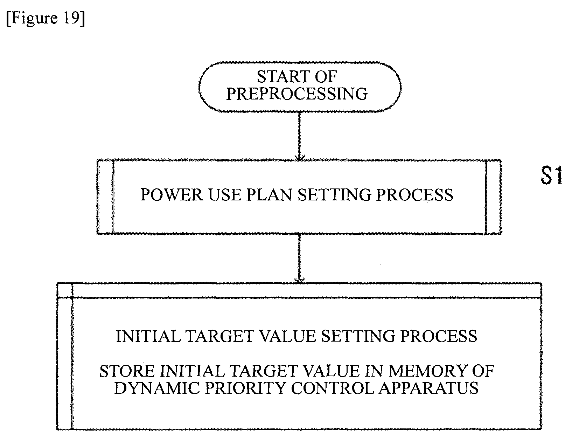

Figure 19 is a general flow chart showing preprocessing of a CPU 1a before the power manager is activated.

Before the CPU 1a of the power manager is activated, a process of setting initial target values of a power use plan and storing the initial target values in a memory is performed as the preprocessing in step S1.

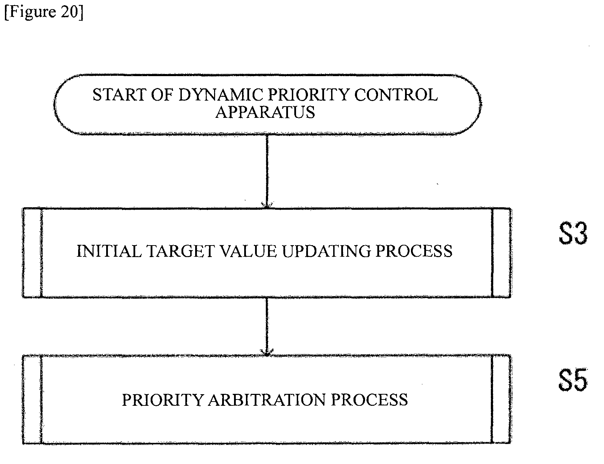

Figure 20 is a flow chart showing overall processing of the CPU 1a after the CPU 1 a of the power manager is activated. After the CPU 1a of the power manager is activated, the CPU 1a performs an initial target value updating process in step S3 and a priority arbitration process in step S5.

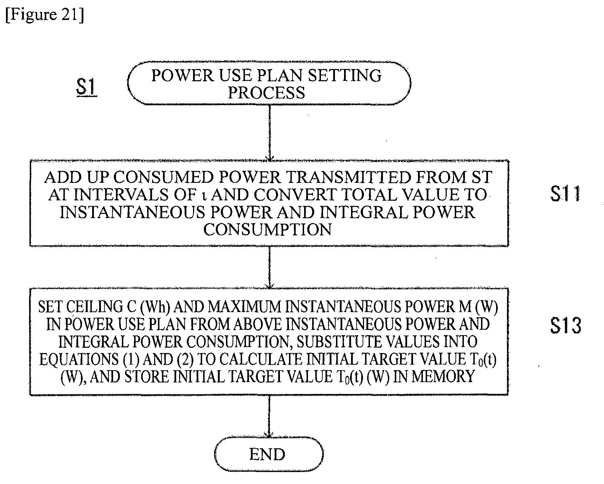

Figure 21 is a flow chart of the power use plan setting process in step S1 described above.

As shown in Figure 21, the CPU 1a converts consumed power for, e.g., one day, one week, or one month transmitted from an ST of each device to instantaneous power which is obtained by adding up consumed power for each of intervals of the minimum control interval $\tau$ (e.g., 10 minutes) to obtain a total value and averaging the total value and integral power consumption in step S 11. Letting C (Wh) be a ceiling (an upper limit for instantaneous power) set by a user from the instantaneous power and integral power consumption; M(t) (W), maximum instantaneous power (an upper limit for instantaneous power); and D(t) (W), a predicted value for power demand at time t, an initial target value $T_0(t)$ (W) which is an example of a power use plan is created from Equations (1) and (2) in step S13.

$$D'(t) = \begin{cases} D(t) & if \ D(t) \leq M(t) \\ M(t) & otherwise \end{cases} \tag{1}$$

$$T_0(t) = \frac{C}{\displaystyle\sum_{t_{start}}^{t_{end}} \tau \ D'(t)} D'(t) \tag{2}$$

As the preprocessing before activation, the initial target value $T_0(t)$ (W) is stored in the memory in advance.

Other power use plans include a peak reduction plan (Figure 9-2) in which values are reduced only during on-peak power use hours when power usage is above instantaneous power of a power use plan for one day and a cost reduction plan (Figure 9-3) in which values are reduced according to power costs. The reduction plans allow setting of initial target values, and initial target values can also be set using the reduction plans in combination.

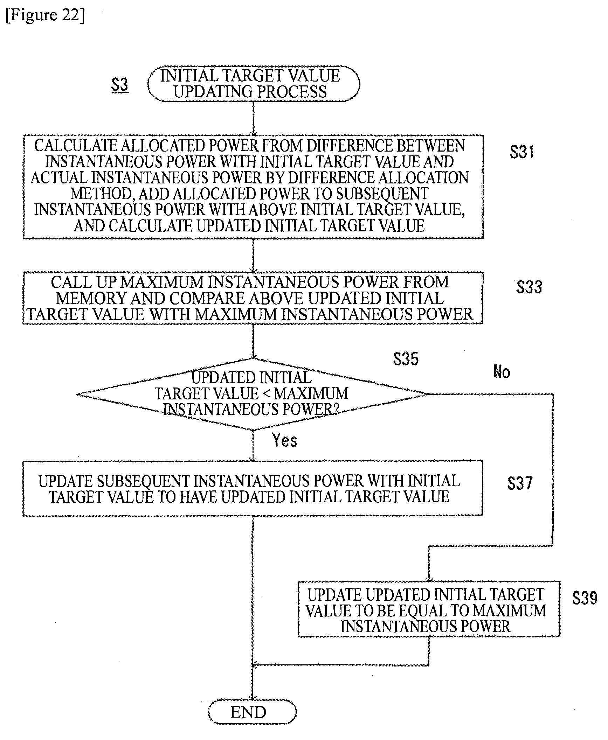

Figure 22 is a flow chart of the initial target value updating process in step S3 described above.

As shown in Figure 22, the CPU 1a calculates allocated power from a difference between instantaneous power of an initial target value and actual instantaneous power by a difference allocation method (an equal difference allocation method or an instantaneous power allocation method), adds the allocated power to subsequent instantaneous power with the initial target value, and calculates an updated initial target value in step S31. The CPU 1a compares maximum instantaneous power with the updated initial target value in step S33. If Yes in S35, the CPU 1a updates the subsequent instantaneous power with the initial target value to have the updated initial target value in step S37. If No in S35, the CPU 1a updates the initial target value to be the maximum instantaneous power and sets the maximum instantaneous power as the updated initial target value in step S39.

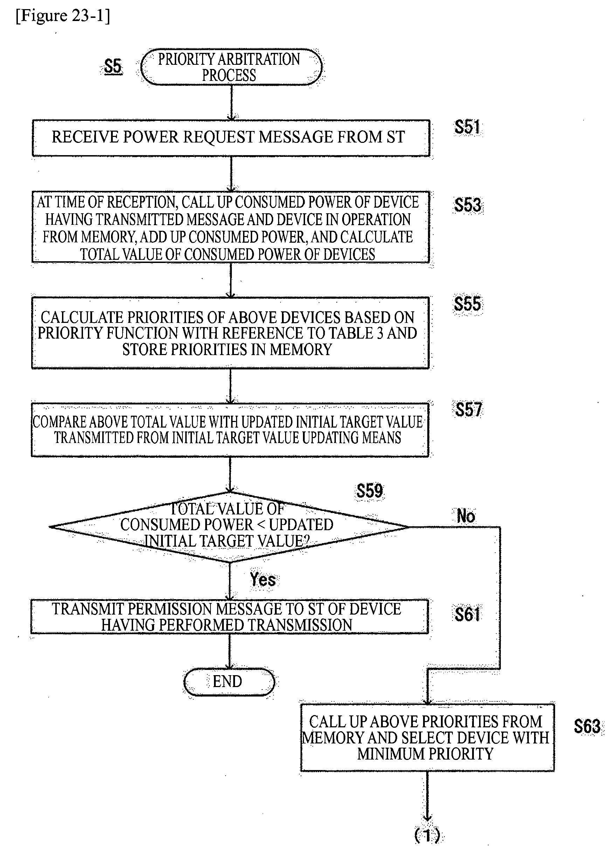

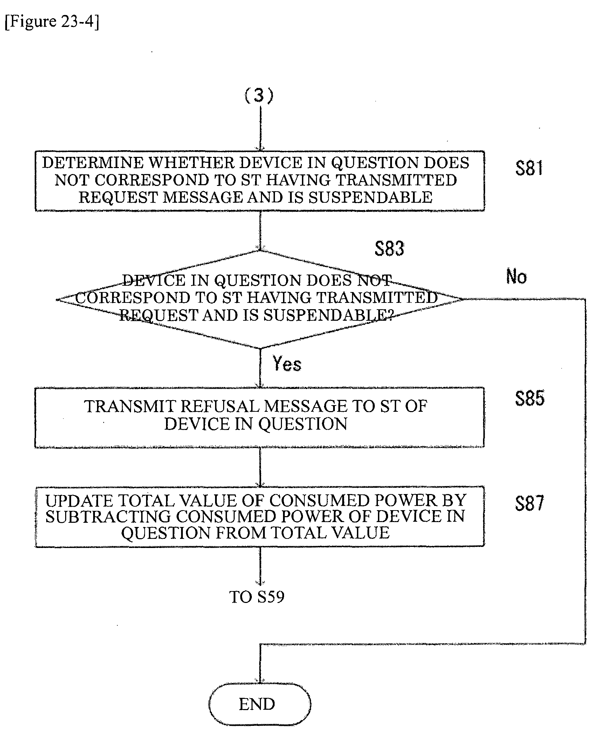

Figures 23-1 to 23-4 are flow charts of the priority arbitration process in step S5 described above.

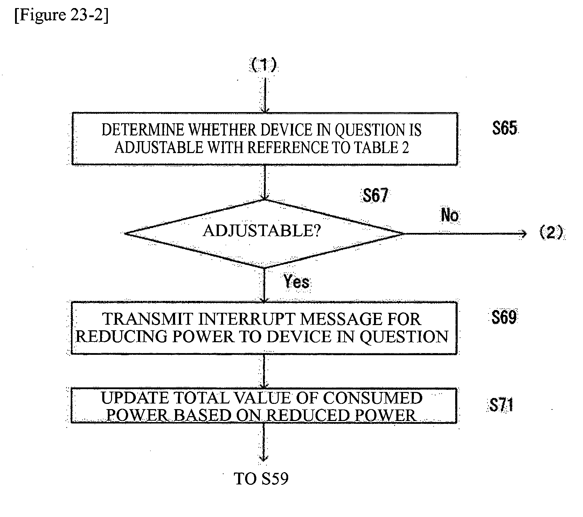

As shown in Figure 23-1, when the CPU 1a receives a power request message from an ST in step S51, the CPU 1a calls up the consumed power of a device having transmitted the power request message and devices in operation for a time when the power request message is received from the memory in step S53, adds up the consumed power of the devices, and obtains a total value. In step S55, the CPU 1a refers to Table 3, calculates the priorities of the devices on the basis of priority functions, and stores values of the priorities in the memory. The CPU 1a compares the total value with an updated initial target value transmitted from the initial target value updating means in step S57. If Yes in step S59, the CPU 1a transmits a permission message to the ST of the device having performed transmission in step S61 and ends the process. If No in step S59, the CPU 1a calls up the priorities from the memory and selects a device with the minimum priority in step S63 and advances to step S65. As shown in Figure 23-2, the CPU 1a refers to Table 2 and determines whether the device is adjustable in step S65. If Yes in step S67, the CPU 1a transmits an interrupt message for reducing power to the device in step S69, updates the total value of the consumed power on the basis of the reduced power in step S71, and returns to step S59. If No in step S67, the CPU 1a advances to step S73.

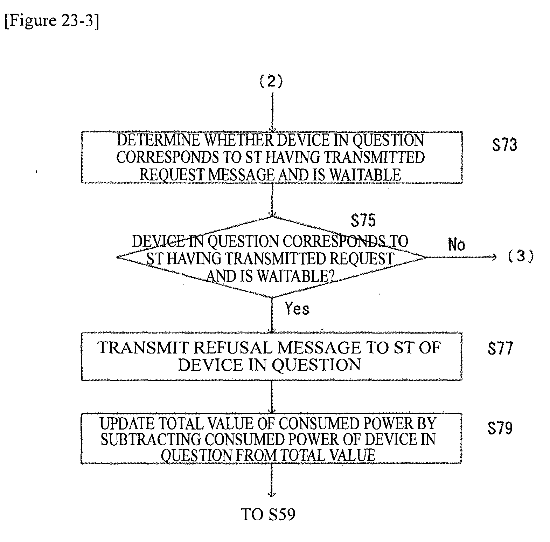

As shown in Figure 23-3, the CPU 1a determines whether the device corresponds to the ST having transmitted the request message and is waitable in step S73. If Yes in step S75, the CPU 1a transmits a refusal message to the ST of the device in step S77, updates the total value of the consumed power by subtracting the consumed power of the device from the total value in step S79, and returns to step S59. IfNo in step S75, the CPU 1a advances to step S81. As shown in Figure 23-4, the CPU 1a determines whether the device does not correspond to the ST having transmitted the request message and is suspendable in step S81. If Yes in step S83, the CPU 1a transmits a refusal message to the ST of the device in step S85, updates the total value of the consumed power by subtracting the consumed power of the device from the total value in step S87, and returns to step S59. If No in step S83, the CPU 1a ends the process.

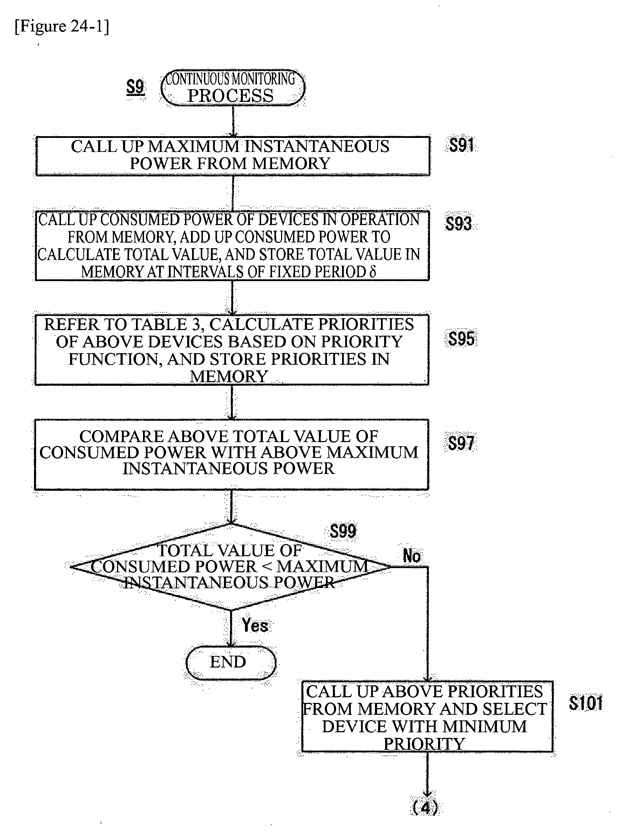

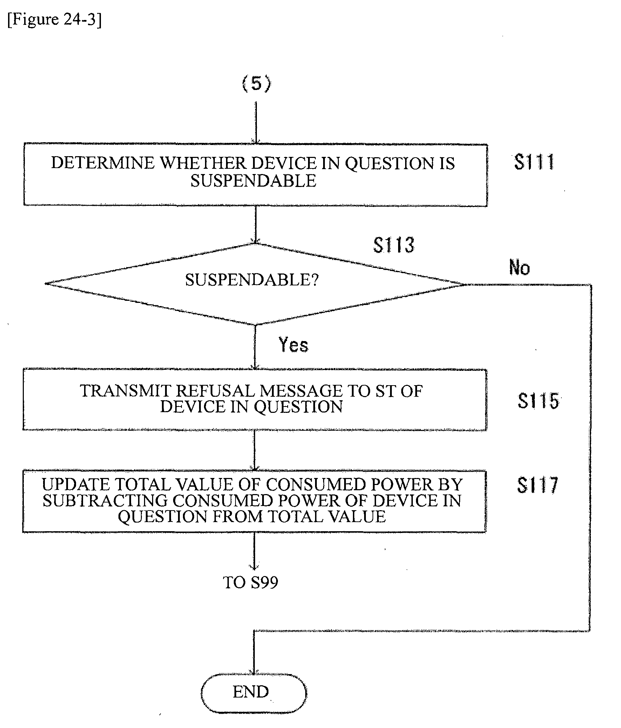

Figures 24-1 to 24-3 are flow charts of the continuous monitoring process in step S7 described above.

As shown in Figure 24-1, the CPU 1a calls up maximum instantaneous power from the memory in step S91. The CPU 1a calls up the consumed power of devices in operation from the memory, adds up the consumed power of the devices, and obtains a total value at intervals δ (0.5 to 2 seconds) in step S93. The CPU 1a refers to Table 2, calculates the priorities of the devices on the basis of priority functions, and stores the priorities in the memory in step S95. The CPU 1a compares the maximum instantaneous power with the total value of the consumed power in step S97. If the CPU 1a determines that the total value of the consumed power is smaller in step S99, the CPU 1a ends the process. On the other hand, if the CPU 1a determines that the total value of the consumed power is larger in step S99, the CPU 1a calls up the priorities from the memory and selects a device with the minimum priority in step S101, and advances to (4).

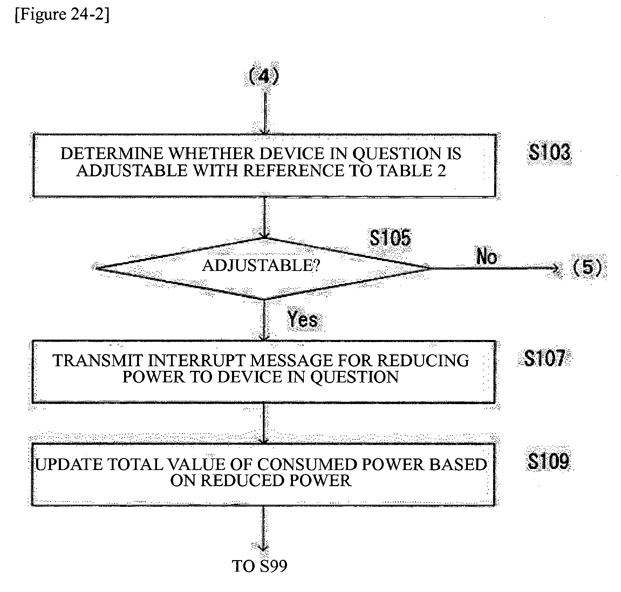

As shown in Figure 24-2, the CPU 1a refers to priority class data in Table 2 and determines whether the device is adjustable in step S03. If Yes in step S105, the CPU 1a transmits an interrupt message for reducing power to the device in step 107. The CPU 1a updates the total value of the consumed power on the basis of the reduced power in step S109 and returns to step S99. The loop is executed repeatedly until the total value of the consumed power becomes smaller than the maximum instantaneous power. If No in step S105, the CPU 1a advances to (5).

As shown in Figure 24-3, the CPU 1a determines whether the device is suspendable in step S111. If Yes in step S113, the CPU 1a transmits a refusal message to an ST of the device in step S115, updates the total value of the consumed power by subtracting the consumed power of the device from the total value in step S117, and returns to step S113. The loop is repeatedly executed until the total value of the consumed power becomes smaller than the maximum instantaneous power.

As can be seen from the configuration of power arbitration means of the power manger in which the loop is repeatedly executed until the total value of the consumed power becomes smaller than the maximum instantaneous power, the priority apparatus controls supply of power to electrical devices such that the power is always below maximum instantaneous power.

As can be seen from the procedure in step S51 to step S87 of the power arbitration means and the device property class data, the priority apparatus is targeted at all devices installed in households and offices. Even if devices with three types of properties are not all installed (e.g., an adjustable device is not installed), a ceiling and an upper limit for maximum instantaneous power are not exceeded.

As described above, the used power of devices is transmitted to the power manager at all times, and the power manager accumulates the used power in the memory. Integral power consumption over a fixed period (e.g., one day, one week, or one month) is obtained by cumulating the accumulated used power of the devices. Since the power arbitration means controls power supply to the electrical devices such that a predicted value D'(t) (W) for power demand in Equation (2) above is met, an upper limit (ceiling) for the integral power consumption is not exceeded.

The present invention includes the home appliance agent that transmits a power request message to the power manager in place of a device, receives a power assignment message as a result of arbitration performed by the power manager, and thereby controls the device. The home appliance agent controls a function of the device instead of directly controlling power, learns in advance a power change pattern or the like during control of the function, and transmits a function control command to the home appliance such that the average of used power equals to the assigned power, thus performing power control.

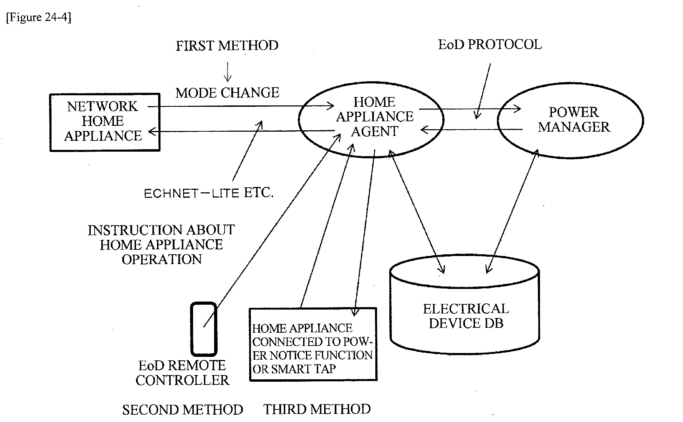

The home appliance agent produces a power request message by one of the three methods: first to third methods described below, and transmits a device request message to the power manager. Two of the methods described below are methods of performing different types of processing with respect to device properties. Figure 24-4 relates to a process performed when a network home appliance is used. In this process, a power request from an EoD remote controller is directly notified to the home appliance agent.

According to the first method, if the device itself has a function to notify a mode change, the home agent receives a mode change notice from the device, processes the notice as a power request event together with the electrical device DB and the power manager, and transmits to the device a signal to supply power under control, as shown in Figure 24-4.

According to the second method, an overall remote controller specially designed for the present system is prepared separately from a remote controller originally provided for a device, and a user operates the overall remote controller to give a direction to the home appliance agent to turn on or off the home appliance or make a mode change. The overall remote controller notifies the home appliance agent of details of the direction, and the home appliance agent processes them as a power request event by referring to the electrical device DB, and transmits a power request message to the power manager. As a result of processing in the power manager, a signal to supply power under control is transmitted from the home appliance agent to the device.

According to the third method, a home appliance to which a power measuring and notification functions is added or a home appliance originally having a power notification function successively transmits information on power used by the home appliance. The home appliance agent infers and predicts a change in mode of the home appliance from the power information and transmits a power request message to the power manager by recognizing the change as a power request event. An example of a home appliance having a power notification function is a home appliance compatible with ECHONET-Lite. An example of a power measuring and notification functions is a smart tap.

To the power request message, requested power and a priority are added. For power to be requested, average power values are stored in advance in the electrical device DB with respect to operating modes of home appliances. The average of measured power values may alternatively be used as a requested power value. A priority for a device can be determined by home appliance agent by referring to the electrical device DB.

Data on consumed power and/or data on changes in consumed power transmitted from each electrical device or corresponding data accumulated in the home appliance DB, i.e., data on the course of change in priority for each electrical device and the course of change in average power to be attained and other data, is referred to by the home appliance agent or the power manager. The home appliance agent transmits to the power manager the data received from each electrical device and the data referred to, and the power manager starts new processing for power arbitration on the basis of the data referred to.

The power manager transmits to the home appliance agent a power assignment message as a result of arbitration performed according to the power request message. The home appliance agent controls each home appliance so that the home appliance operates according to assigned power added to this message. The assigned power in this case may be the average of power available for the home appliance.

According to a device request message produced as described above, each device is controlled by one of the three methods described below.

The first method is a method of control by means of a home appliance control command.

In a case of a device in accordance with a network home appliance control standard such as ECHONET-Lite, a network home appliance control standard for infrared remote controllers, or the like, home appliance control can be performed by means of a home appliance control command in accordance with the standard. Control by means of a home appliance control command, however, is control of a function of a device, which cannot be said to be power control. Therefore, power control is performed by learning a control function of a device and a power change pattern in the device in advance, storing the results of learning in the electrical device DB and transmitting a function control command to the home appliance such that the average of used power equals to the assigned power.

The second method is a method of control with a power controller.

In the case of control on a device not compatible with the home appliance control command, a power controller such as smart tap separately provided is added to control the device. The power controller controls power supplied to a home appliance and, in the case of performing only power on/off control according to the kind of a device to be controlled, can perform power value control on a dimmable light such as an incandescent lamp or a sort of fluorescent lamps, an electric heater, an electric pot, etc., through phase control, power control or the like. The home appliance agent controls the ability to supply power to the device by transmitting a power control command for power control, thus performing control so that the average of used power equals to the assigned power.

The third method is a method of control according to a change direction from a user.

In the case of control on a device compatible neither with the home appliance control command nor with the power controller externally attached, power control on the home appliance is executed by sending to a user a message requesting the user to operate the home appliance. In this case, not a direction designating a power value but a direction designating a method of operating the home appliance (e.g., turning on or off, setting to a high level or a low level, or changing a set temperature) is issued as a direction easy to understand for the user.

For ease of comprehension of the priority arbitration process illustrated by the priority arbitration process flow chart in Figures 23, the process will be described in the context of an example.

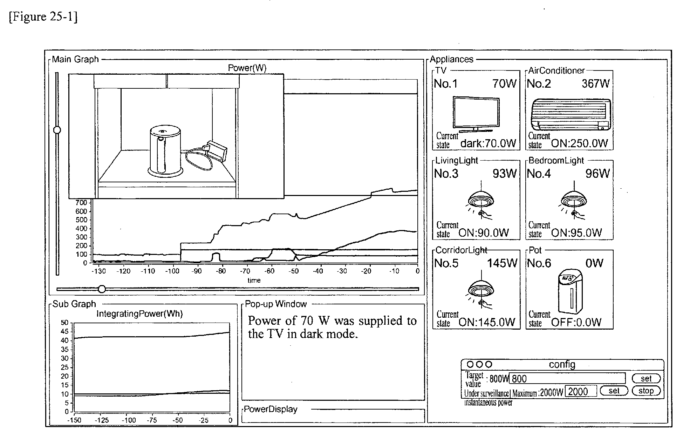

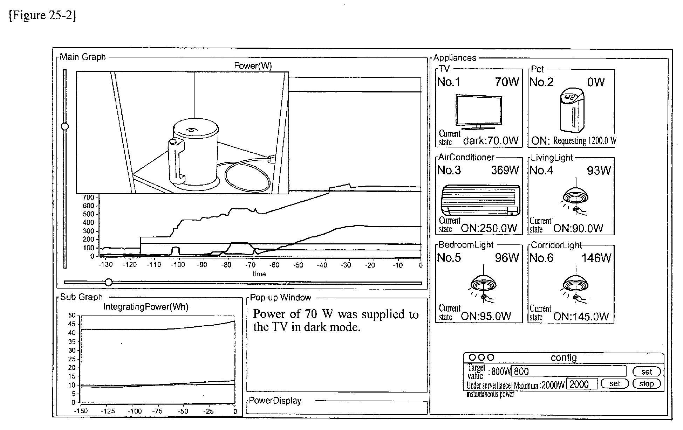

Figures 25-1 and 25-2 are explanatory views for explaining processing by the power arbitration means.

First, a priority arbitration process according to the example will be described using six types of devices, a TV (1), an air conditioner (2), a pot (4), a living room light (11), a bedroom light (12), and a corridor light (15), among devices installed in a model house shown in Figure 5. Accordingly, the example is an example using only the light (15) installed in a corridor, the TV (1) installed in a living room, the air conditioner (2), the pot (4), the living room light (11), and the light (12) installed in a bedroom. The numerals represent the positions of switches at which the devices are installed or arranged.

(Example of Power Arbitration Means)

In the example, an initial target value for power is set to 800 W, maximum instantaneous power is set to 2 KW, only the pot is OFF, and the pot requires power of 1.2 KW. The example is an example showing how the priorities of the devices change and processing to be performed by the power arbitration means to secure power of 1.2 KW for the port during the change, when the 1.2-KW pot is turned on under the set conditions.

Figure 25-1 is a view showing the power status of each device before the pot is turned on. The term "No" displayed on the right side of Figure 23-1 indicates the priority rank of each device, and a smaller value represents a higher priority. Only the pot is off, the other devices are operating, and the total of the power of the devices is 771 W.

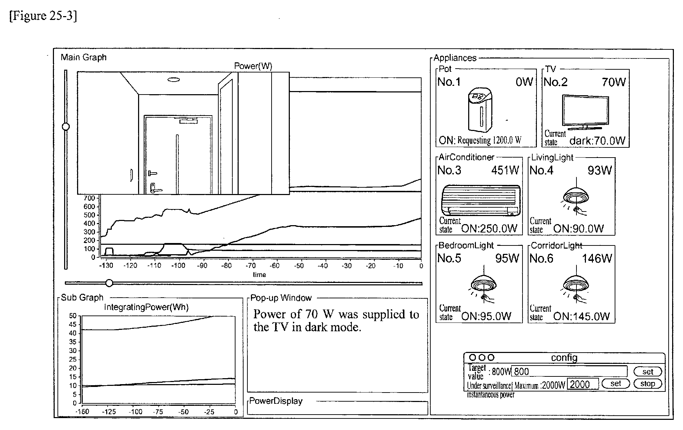

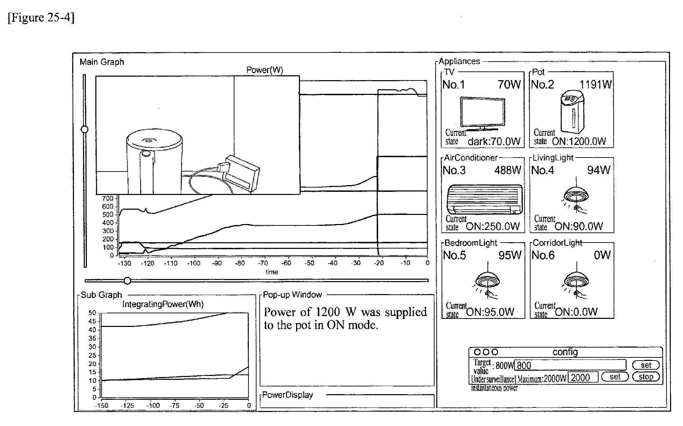

Figure 25-2 shows a situation in which the pot has been turned on and is requesting power of 1.2 KW. The requested power of 1.2 KW, however, is above the initial target value of 800 W and almost causes excess (1.974 KW) over the maximum instantaneous power of 2 KW. For this reason, the request for power is not permitted, and the pot is kept waiting until the pot reaches first place in the priority ranking. Figure 25-3 shows that the pot has moved up gradually to reach first place in the priority ranking. Referring to Figure 25-4, since the pot has reached first place in the priority ranking, the pot (1200 W) is turned on after the light (No. 6) in a hallway with a minimum priority is turned off. It can be seen that although the total power of the devices is above the initial target value of 800 W, the total power is 1928 W and is not above the maximum instantaneous power of 2 KW.

As can be seen from the example of the pot whose consumed power is 1.2 KW, activating the 1.2-KW pot requesting power without stopping the TV and air conditioner can be implemented without impairing the QoL of an ordinary person. This is because the power arbitration means instantaneously calculates the priorities of devices and a device to be preferentially selected is determined on the basis of the priorities and the properties of the devices.

(Effectiveness of EoD Control System)

It will be demonstrated that an EoD control system according to the present invention can implement considerable power saving without impairing the QoL through actual life.

Three subjects A, B, and C were subjected to a QoL demonstration experiment in the same smart apartment.

The living experiment used the smart home appliances and conventional home appliances below.

- Smart Home Appliances (Network-Based Power Control)
  Lights (in a living room and a bedroom), a television, an air conditioner, a microwave oven, a washing machine, a humidifier, a heater, and a rice cooker
- Conventional Home Appliances (Power Control Based on Smart Tap)
  Lights (in a hallway, a kitchen, a washroom, a toilet, and a bathroom), an electromagnetic cooker (IH), a refrigerator, an electric pot, and a toilet seat with a warm-water shower feature

(Experiment Description)

- Each subject spent a daily life without power saving and learned a standard pattern of consumed power.
- The subject spent a life in which integral power consumption for one day was 10% lower than the standard pattern and a life in which integral power consumption for one day was 30% lower.
- Obtained data were numerically analyzed, and effects of the lives with reduced power on QoL were evaluated.

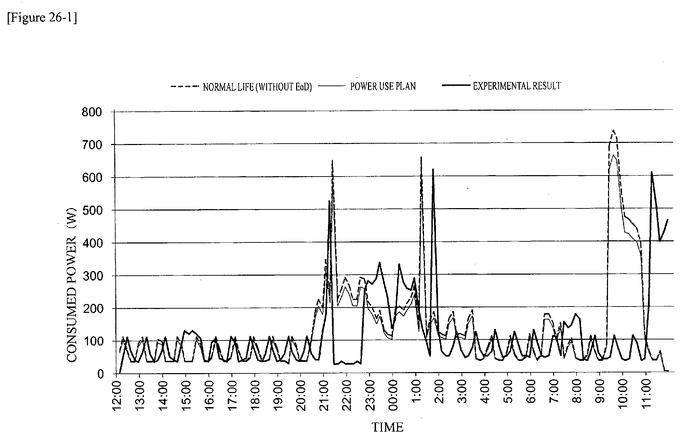

Figure 26-1 is a chart showing a pattern of consumed power at the time of normal use and respective patterns of instantaneous power in a power use plan and an experimental plan with a 10% reduction by a power manager.

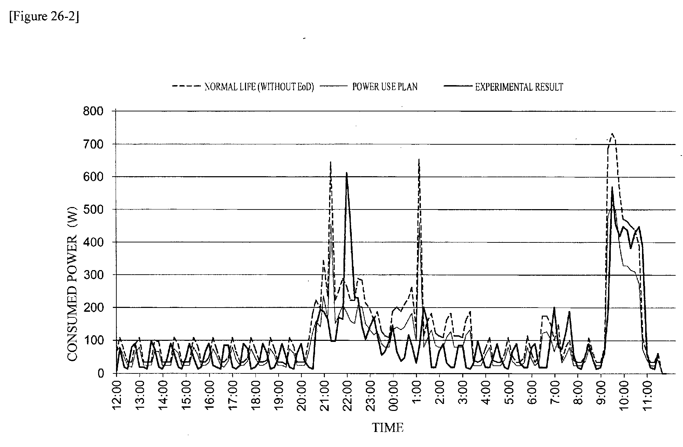

Figure 26-2 is a chart showing a pattern of consumed power at the time of normal use and respective patterns of instantaneous power in a power use plan and an experimental plan with a 30% reduction by the power manager.

Figures 26-1 and 26-2 show that the conventional pattern of consumed power and the patterns of instantaneous power in the cases of a 10% reduction and a 30% reduction are similar and that an upper limit in the conventional pattern of consumed power is not exceeded.

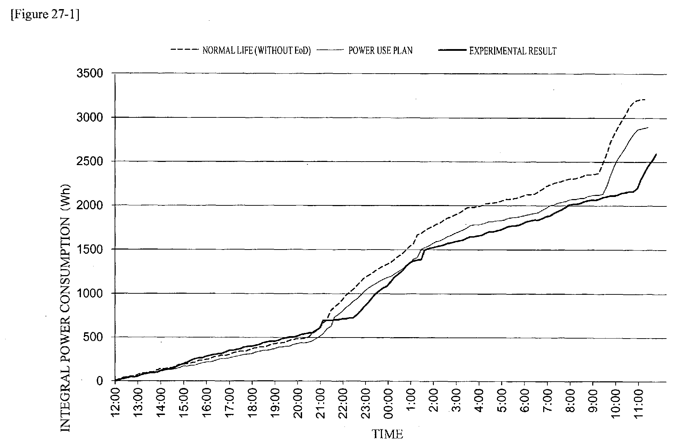

Figure 27-1 is a chart showing integral power consumption at the time of normal use and integral power consumption in the power use plan and the experimental plan with a 10% reduction by the power manager.

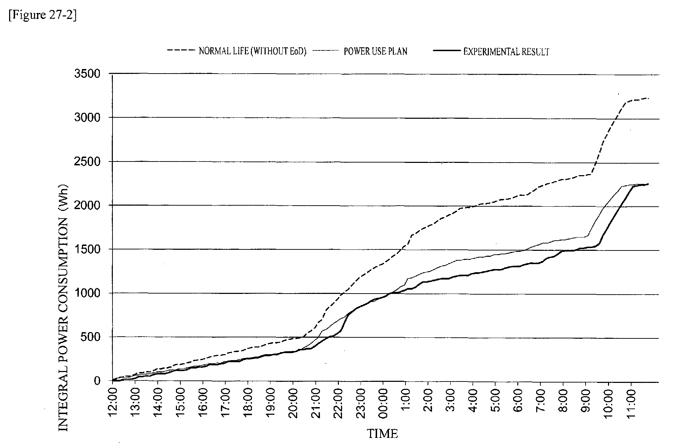

Figure 27-2 is a chart showing the integral power consumption at the time of normal use and integral power consumption in the power use plan and the experimental plan with a 30% reduction by the power manager.

In both of the 10% and 30% reduction cases, integral power consumption at the time of normal use, integral power consumption based on an initial target value, and integral power consumption based on actually used power are mostly ranked in that order from highest to lowest. Figures 27-1 and 27-2 show that an upper limit for conventional integral power consumption is not exceeded.

Values in Figures 27-1 and 27-2 show that consumed power and integral power consumption are reduced even without changing the pattern of a daily life.

We listened to the actual life experience of the three subjects and checked whether there was any problem in the smart apartment where the EoD control system was installed.

(Actual Life Experience of Three Subjects)

• Subjects A, B, and C

Overall, they could live without any particular inconvenience, regardless of rate of power reduction.

• Subject A

He/she was conscious of a power reduction life only when the lighting was poor or the picture on the TV screen was not bright enough and cared no longer about the power reduction life when he/she got used to it.

• Subject B

He/she was conscious only when the electric pot was slower in boiling water and cared no longer about the power reduction life when he/she got used to it.

• Subject C

He/she reduced power for home appliances other than those for cooking at the peak of cooking.

It was found from the actual life experience of the three subjects that a person could live without any particular inconvenience, regardless of rate of power reduction (10% or 30%).

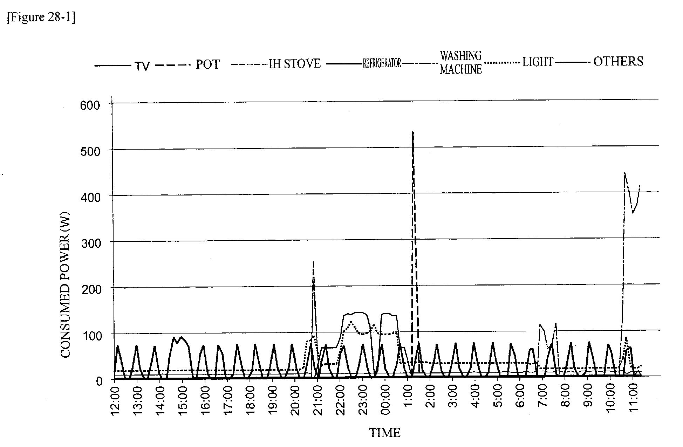

Figure 28-1 is a chart showing the instantaneous power of six types of devices in the experimental plan with a 10% reduction by the power manager.

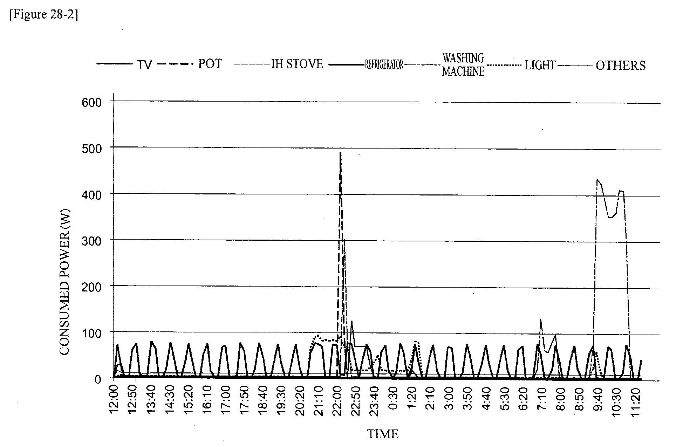

Figure 28-2 is a chart showing the instantaneous power of the six types of devices in the experimental plan with a 30% reduction by the power manager.

The six types of devices are a TV, an electric pot, an electromagnetic cooker (IH stove), a refrigerator, a washing machine, and a light.

Figures 28-1 and 28-2 are charts showing graphs of instantaneous power for the six types of electrical devices in respective power use plans with 10% and 30% reductions.

In the 10% reduction case in Figure 28-1, the consumed power of the electric pot and washing machine peak at 1:30 and 11:00, respectively. In contrast, in the 30% reduction case in Figure 28-2, the consumed power of the electric pot and washing machine peak at 22:00 and 9:40, respectively. It can be seen that the peak time for the electric pot is about three hours and a half earlier, and the peak time for the washing machine is about an hour and forty minutes earlier.

Thus, in the present invention, the home appliance agent is adopted and power supplied to each electric device is controlled in the power manager through the home appliance agent. Even for some electrical devices having in themselves no power control function, no function to measure power and transmit the measurement result to the power manager and no function to control supplied power for the connected electrical devices transmitted from the power manager, therefore, power supplied to the electrical devices can be controlled.

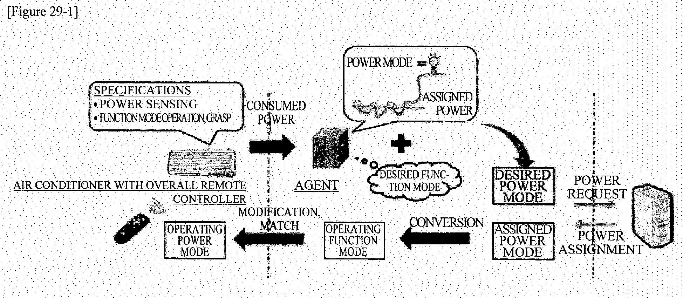

Figure 29-1 is a diagram showing control according to the present invention on a home appliance having actual consumed power as a condition sensable with the home appliance agent and a power mode as a condition controllable with the home appliance. A simple light capable of performing communication only through a smart tap (hereinafter referred to simply as a "light") is assumed to be a concrete example of a home appliance having such functions. Since a light is a load as resistance, the home appliance agent can perform a power mode operation on the light by directly operating supplied power through a smart tap. A home appliance sensing control protocol is designed with respect to such a light, as described below.

A method of making, from data on consumed power sensed by the home appliance agent, a power request to the power manager at the time of mode change from an assigned power mode to a different power mode will be considered. A message for a power request is as shown in Table 3.5. There is, therefore, a need to determine a power mode at the time of making a power request.

Only actual consumed power can be sensed as a condition from a real home appliance. The home appliance agent therefore makes a determination as to change from an assigned power mode only from a change in power.

Accordingly, the home appliance agent selects a suitable expected-transition-destination power mode from a home appliance power mode list held in the home appliance agent, and makes a request for the selected mode to the power manager. In the case of inferring an expected-transition-destination power mode from actual consumed power in such a way, it is difficult to make a power request before a power mode change. Therefore, a power request is made after a power mode change and there is a possibility of operating, though temporarily, in a power mode different from a power mode assigned to the home appliance agent. However, some error is permitted in securing the upper limit because power assignment on a cumulative power basis is carried out by using power modes on the basis of a use plan, and because feedback according to a resource management process produces an absorption effect.

Not only power modes but also service and operating function modes are to be considered at the time of arbitration. There is also a need to infer these types of modes from consumed power. In home appliances such as lights, however, only one service operation mode exists other than "OFF"; consumed power links directly to the service function mode level; and a power mode is therefore determined uniquely with respect to an operating power mode. Thus, service and operating function modes are easily determined.

Real home appliance control for realizing a power mode assigned to the home appliance agent will be considered. Since control of power modes can be performed through a smart tap, it is assumed that control in accordance with an assigned power mode is performed. However, since a power request is delayed relative to a power mode transition, there is a possibility of a power mode assigned to the home appliance agent as a result of arbitration and a power mode in operation without permission differing from each other. If the power mode is instantly changed in such a case, successive changes are made and an uncomfortable effect on a user can therefore be produced. To minimize the degree of uncomfortableness felt by a user, a moderate operation with respect to time is performed at the time of power control.

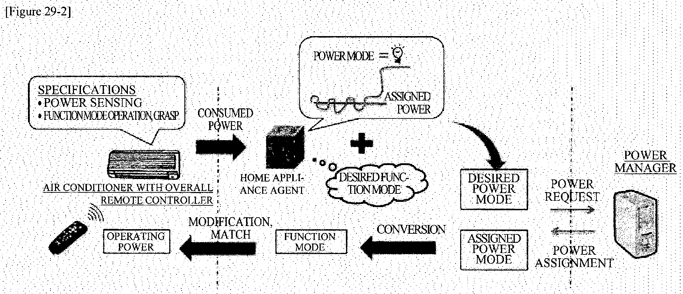

Figure 29-2 is a diagram showing control of a home appliance, e.g., an air conditioner with an overall remote controller according to the present invention. It is assumed that the home appliance agent remotely manages the overall remote controller and is capable of grasping user's operations and operating the home appliance and performing function mode operations through the overall remote controller. However, remote control of power modes cannot be performed. A home appliance sensing control protocol is designed with respect to such an air conditioner, as described below.

When the power supply for the air conditioner is turned on by the remote controller, a signal indicating that the power supply has been turned on and, if necessary, the value of necessary power to be consumed are transmitted to the home appliance agent. The home appliance agent determines necessary power to be consumed changing during an operating function mode by referring to the home appliance DB and analyzing variation in consumed power, and transmits the determined power as requested power to the power manager. There is a possibility of a power request being made with a delay relative to a power mode change, as described above. However, there is also no problem with this.

In this case, a method in which the home appliance agent realizes an assigned power mode while maintaining a function by using a controllable function mode is devised and carried out. The home appliance agent grasps each function mode sequence for realizing each power mode from each power mode for the home appliance, and controls the real home appliance by using the function mode sequence.

The power manager checks the states of service operation of other electrical devices and priorities for the other electrical devices, and assigns power to be supplied to the air conditioner as a power assignment. This assignment is converted into a corresponding function of the air conditioner in the home appliance agent, which is transmitted to the remote controller. The remote controller transmits a signal for instructing the electrical device to perform the function.

In this case, a time period is required for transmission from the remote controller, sending forward and backward between the home appliance agent and the power manager and subsequent transmission to the remote controller, and a time lag occurs before a start of the service operation of the air conditioner or before transmission of a signal for changing the service operation. The influence of such a time lag on power consumption is dissolved in control performed afterward.

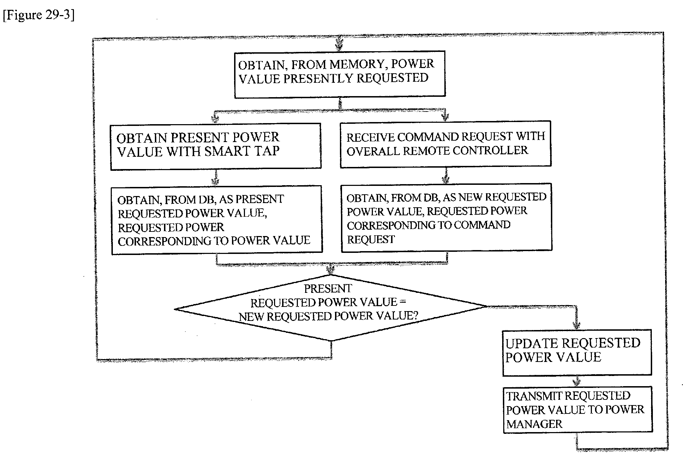

Figure 29-3 is an example of a flowchart when STs or the like are used in the system according to the present invention.

For example, in an electrical device in service operation, a power value presently requested by the electrical device is first obtained from the memory.

a. In this state, with respect to all the electrical devices, the present consumed power values are obtained with STs or the like at intervals of $\tau$ or at points in time the electrical devices are operated. The STs or the like transmit data on the consumed power values, and the home appliance agent receives the data. The home appliance agent obtains power request values corresponding to the consumed power values from the home appliance DB or the memory and transmits the obtained power request values to the power manager.

Furthermore, requested powers corresponding to the supplied power values are obtained as present power request values from the DB.

b. With respect to the electrical devices using overall remote controllers, the home appliance agent receives command requests from the overall remote controllers, thereafter obtains requested powers corresponding to the command requests as new requested power values on the basis of data including commands for the electrical devices and the power consumptions stored in the home DB and the memory, and transmits the obtained values to the power manager.

Subsequently, with respect to each of the above-described cases a and b, the present power request value and the new requested power value are compared with each other. If the two values are equal to each other, the process returns to the step of obtaining a power value presently requested by the electrical device from the memory. If the two values are different from each other, the power request value is updated and a power request is transmitted to the power manager. The process again returns to the step of obtaining a power value presently requested by the electrical device from the memory.

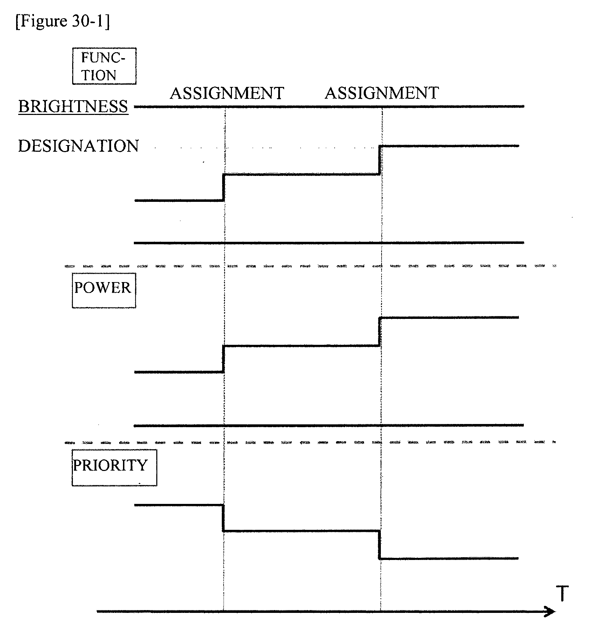

Figure 30-1 is a diagram explaining an example of a one-to-one correspondence between supplied power and a function, as in the case of a light, an electric pot or the like, as shown in Tables 6 and 7 below, more specifically an example based on a light. Such an electrical device has originally no function to control itself and is used only by being externally operated.

The brightness of the light is determined according to power supplied to the light. The brightness is increased as the supplied power is discontinuously increased. With the increase in brightness, however, the priority is reduced. Control by the power manager at this time may be performed, for example, in four steps: "bright", "medium", "dark", and "OFF", as shown in Table 6.

[Table 6]

| Function command | Power |
|---|---|
| Bright | 80 W |
| Medium | 60 W |
| Dark | 40 W |
| OFF | 0 W |

A television and a cleaner are home appliances different from lights, hot-water pots, etc., such that necessary power for each device varies depending on, for example, the load or contents with respect to its electrical device function. A television essentially has different consumed powers respectively corresponding to a state of having bright on-screen contents and a state of having dark on-screen contents. Thus, in the case of a television, necessary power varies depending on the brightness on the screen. Similarly, in the case of a cleaner, necessary power varies depending on a cleaned place and a state of dirt, for example.

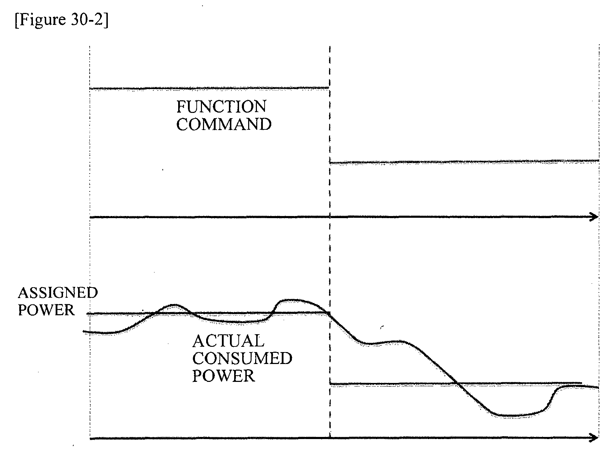

Figure 30-2 relates to an example of a television. While actual consumed power is irregularly changed, commands on the television side, such as shown in Table 7, are determined with respect to powers assigned to the television so as to set supplied powers such that the average actual consumed powers are equal to powers assigned to the television.

[Table 7]

| Function command | Average power |
|---|---|
| Brightness 5 | 400 W |
| Brightness 4 | 300 W |
| Brightness 3 | 200 W |
| Brightness 2 | 100 W |
| Brightness 1 | 80 W |

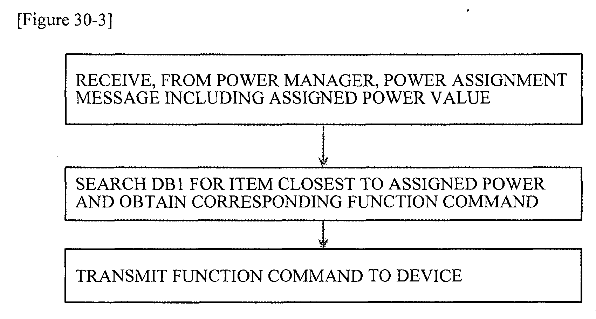

At this time, as shown in Figure 30-3, the home appliance agent receives a power assignment message including an assigned power value from the power manager on the basis of a signal received by the home appliance agent with an operation on the electrical device. A similar operation is also performed in the case described above with reference to Figure 30-1.

The home appliance agent searches for a term closest to the assigned power and obtains a corresponding function command. The home appliance agent thereafter transmits the function command to the electrical device.

For example, in the case of an electrical device such as an air conditioner in which the load varies during service operation depending on room and external temperatures, a command for a function for using the device (e.g., increasing the room temperature setting by one degree or reducing the room temperature setting by one degree) does not correspond to requested power. In addition, an electrical device such as an air conditioner requiring high power at the time of starting the service operation also exists.

For such an electrical device, different power DBs are adaptively used respectively at the time of power assignment and at the time of making a power request.

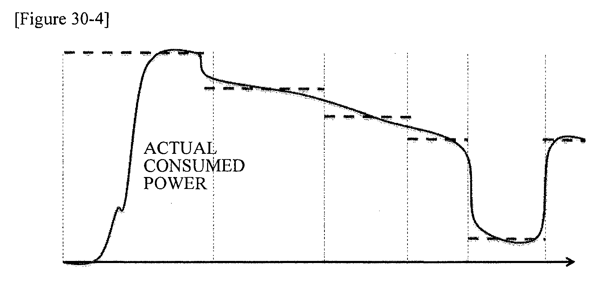

As a result, referring to Figure 30-4, actual consumed power rises abruptly from the left end corresponding to startup of the air conditioner, and 1200 W is required as shown at startup in Table 8. Thereafter, with approach to a set temperature, the actual consumed power decreases. The supplied power is controlled according to this tendency, as indicated by broken lines.

[Table 8]

| Condition | Requested power |
|---|---|
| At startup | 1200 W |
| 800 W-1200 W | 1000 W |
| 600 W-800 W | 700 W |
| 400 W-600 W | 500 W |
| -500 W | 80 |

In the above-described air conditioner, the necessary power also varies depending on the room and external temperatures during normal service operation with respect to the same set temperatures. Therefore, the function command and the used power do not correspond to each other, as described above. Control in accordance with the system of the present invention is performed as occasion demands.

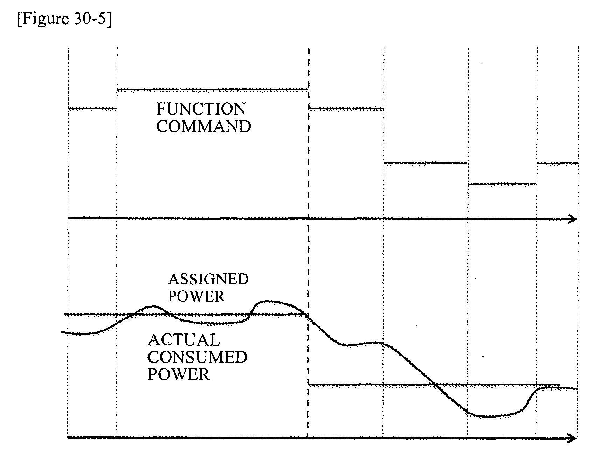

During normal service operation of the air conditioner, as shown in Figure 30-5 and Table 9, the relative intensity of service operation of the air conditioner is changed each time the temperature setting is changed, and power assigned to the air conditioner is controlled according to the relative intensity. Actual consumed power is also changed according to the relative intensity. Even when the assigned power is changed, the actual consumed power does not change by immediately following the assigned power; the assigned power is controlled by spending a certain time period so that the averaged actual consumed power equals to the assigned power, which applies to the existing home appliances. Referring to Figure 30-5, therefore, a state occurs where the actual consumed power is much lower than the assigned power.

Thus, it is necessary to spend a certain time period to prevent a person using the electrical device from feeling that the state of service operation of the electrical device is largely changed, leading to feeling uncomfortableness.

[Table 9]

| Function command | Relative intensity |
|---|---|
| Temperature setting 27°C | 800 |
| Temperature setting 26°C | 600 |
| Temperature setting 25°C | 500 |
| Temperature setting 24°C | 400 |
| Blowing | 80 |

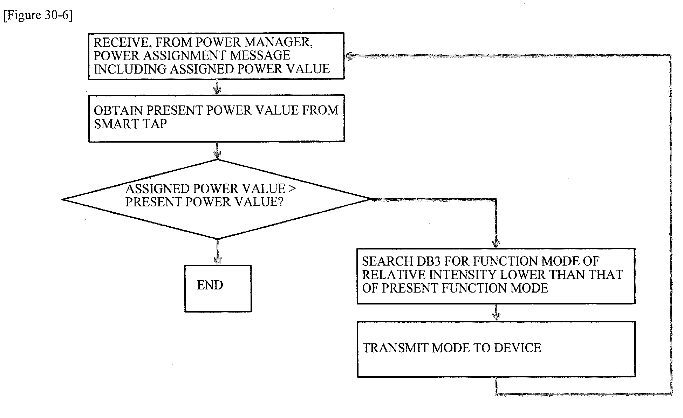

Figure 30-6 is a flowchart of determination of power to be supplied in the case shown in Figures 30-4 and 30-5. During service operation of an electrical device such as an air conditioner, the home appliance agent receives at time intervals $\tau$ a power assignment message including an assigned power value from the power manager.

Subsequently, the home appliance agent receives a power value presently supplied from the smart tap.

If the assigned power value is larger than the power value presently supplied, there is no need to perform a further control process.

If the assigned power value is not larger than the power value presently supplied, on the other hand, a function mode of a relative intensity lower than that of the present function mode is searched for in order to reduce the value of power presently supplied. The mode obtained by the search is transmitted to the electrical device through the home appliance agent.

(Conclusion)

An EoD control system according to the present invention is a system for supplying power on the basis of arbitration through exchange of messages between a device and a power manager. When a user turns on a device, power is supplied after a lapse of 2 to 3 seconds, to which a refresh timer counts, in the supply/demand arbitration system in Patent Literature 2. In contrast, according to the present invention, power is instantaneously supplied after the steps 1) to 4) below. 1) A device transmits a "power request message" with requested power and a priority to a power manager. 2) The power manager performs arbitration to determine whether to supply power to the device and supplied power on the basis of the priority of the device at the time or the like. 3) The power manager transmits a "power assignment (permission/reduction/refusal) message" to the device according to a result of the arbitration. 4) The device having received the "power assignment message" operates according to the message.

The EoD control system is targeted only at commercial power sources, and power can be generally used as much as a user likes within contract demand. The EoD control system provides, as parameters which can be set by a user himself/herself, two upper limits, an upper limit for instantaneous power (maximum instantaneous power) and an upper limit for integral power consumption (a ceiling). By giving the maximum instantaneous power as an upper limit for used power for each time period, it is possible to respond to a request for a reduction in contract demand from a user or a request for on-peak reduction from an electric power company for maintaining the balance between supply and demand in a power network. The ceiling given as an upper limit for integral power consumption over a fixed period (e.g., one day, one week, or one month) allows a user to reduce electricity costs and $CO_2$ emissions.

The EoD control system adopts 1) dynamic device priority for determining to which device power is supplied and for which device power is reduced in order to reduce power while maintaining the Quality of Life, 2) power use plan setting means for processing instantaneous power in order to achieve a ceiling and an upper limit for maximum instantaneous power on the basis of a life pattern of an ordinary person, 3) power arbitration means for processing consumed power in order to supply power in real time in response to a request for power from a device, and 4) continuous monitoring means for processing instantaneous power in order to prevent instantaneous power from increasing unexpectedly due to, e.g., a load change and exceeding maximum instantaneous power. It can be seen that this adoption allows the EoD control system to solve all of the conventional problems.

The intervention of the home appliance agent between the electrical devices and the power manager ensures that power control can be performed on all the electrical devices including those other than the power-arbitration-compatible home appliances.

Examples

A simulation was performed as Example 1 and a real life experiment was performed as Example 2. In each experiment, attention was focused on user's QoL and instantaneous and cumulative powers and it was checked through the experiment whether each of the user's QoL and instantaneous and cumulative powers met the objective.

(Condition settings in Examples 1 and 2)

In the examples, the experiment was performed in a smart apartment to obtain data based on a real life. About 20 home appliances, e.g., a refrigerator, a washing machine, a television, an air conditioner and a light for living an ordinary life were prepared in one room with a dining room and a kitchen of a smart apartment, and smart taps were provided on power outlets in order to measure and control powers to the home appliances. Part of the home appliances were equipped with communication devices for obtaining and operating service and operating function modes. These devices were also used.

In the environment as described above, a home server for data measurement was installed to record all measurable data items, and the data items were evaluated.

The experiment was performed in the environment thus prepared. In the simulation experiment, changes in power when a real life was made were given as an input, the EoP protocol was applied and considerations were made with objective indicators. In the real life experiment, the present system was introduced into the home server. In the experiment, subjective evaluations based on subject's experiences were also made.

The results of the simulation and the experiment in the real life with consideration for indicators used therein will be described below.

(Example 1)

Maintenance of user's QoL and realizability of the power upper limit in the present invention were objectively evaluated. To objectively evaluate user's QoL first, an evaluation function relating to QoL was designed and the experiment was performed by using this.

In objectively evaluating user's QoL, to what degree a home appliance function expected by a user was performed is an important evaluation criterion. It is thought that if the function can be performed according to a request from the user, the degree of user's satisfaction is the highest, and that if the degree to which the function is performed lowers with respect to the request, the degree of user's satisfaction correspondingly lowers. In this specification, therefore, a priority is used as an index representing the degree of realization of the home appliance function. A characteristic in which the priority is increased as the degree of realization of the function is reduced is utilized; the value of priority is changed according to conditions of controllability, and then integrated with respect to time; and an expression per unit time of the integral is used.

An evaluation expression designed based on this concept is shown by Equation 15. TStart represents an experiment start time; TEnd, an end time; and T, experiment time. PD and PDadj represent initial priorities with respect to each control condition.

$$negative\ QoL = \frac{1}{T} \int_{T_{Start}}^{T_{End}} \{\Sigma_i\ est_{a_i}(t)\} dt \qquad (15)$$

$$est_{a_i}(t) = \begin{cases} P_D * \alpha^{\beta(t_{now}-t_{start})} & \text{(Suspension or refusal of request)} \\ P_{Dadj} & \text{(Request reduction)} \\ 0 & \text{(No request or request being met)} \end{cases} \qquad (16)$$

In the evaluation expression shown by Equation 15, integration is performed by using a priority as a base. The expression therefore shows that as its value is increased, the degree of user's unsatisfactoriness with respect to the home appliance function is increased. However, a cost reduction effect achieved by reducing power, as well as the degree of realization of the home appliance function, is thought to contribute to the degree of user's satisfaction. In Example 1, therefore, a cost reduction effect on the customer side is quantified and added to the evaluation expression derived from Equation 15.

Then, the unsatisfactoriness-based evaluation expression shown by Equation 15 is first changed into a satisfaction-based evaluation expression, and the degree of user's satisfaction based on a power reduction effect is taken into consideration. It is assumed that a power reduction effect for a user appears in terms of money and environment. Therefore, only cumulative power reduction effect is pursued. This effect is formulated assuming that as the rate of reduction in cumulative power is increased, the degree of user's satisfaction is increased.

An evaluation expression newly designed based on this concept is shown by Equation 17. The degree of unsatisfactoriness mentioned above is converted into a satisfaction basis, which is divided by a cumulative power use rate ($0 \leq R \leq 1$).

$$QoL = \frac{1 - \frac{negative\ QoL}{\gamma}}{1 - R} \qquad (17)$$

The experiment was performed in the simulation by using these indicators to indicate the effectiveness of this study. Input data shown in Table 10 was given as an input and output data from the simulation experiment shown in Table 11 was obtained as an output. The service and operating function modes were not considered for ease of handling of data. Accordingly, the controllability was assumed to be dependent not on the service function modes but on the home appliances.

[Table 10]

| Outline | Detail | Value |
|---|---|---|
| Object to be controlled | Changes in power | Power value of each home appliance [W] |
| | Change in power mode | Power mode of each home appliance |
| Power upper limit parameters | Maximum instantaneous power | Uniformly 1500 [W] |
| | Upper limit for cumulative power | Determined by reducing, in steps of 5% from 0 to 50%, cumulative power for object to be controlled |
| | Power use plan | Power in each time interval [W] |
| Home appliance parameter | Controllability | Adjustable, suspendable, waitable |

(continued)

| Outline | Detail | Value |
|---|---|---|
| Arbitration parameters | Interval | 10 m |
| | Experiment time | 1d (12:00-11:59) |
| Evaluation parameters | $(\alpha,\beta,\gamma)$ | (Degree of unsatisfactoriness when the reduction rate is 50%) |

[Table 11]

| Outline | Detail | Value |
|---|---|---|
| Control result | Changes in power | Power value of each home appliance [W, Wh] |
| | Change in power mode | Power mode of each home appliance |
| Evaluation index | | Evaluation value |

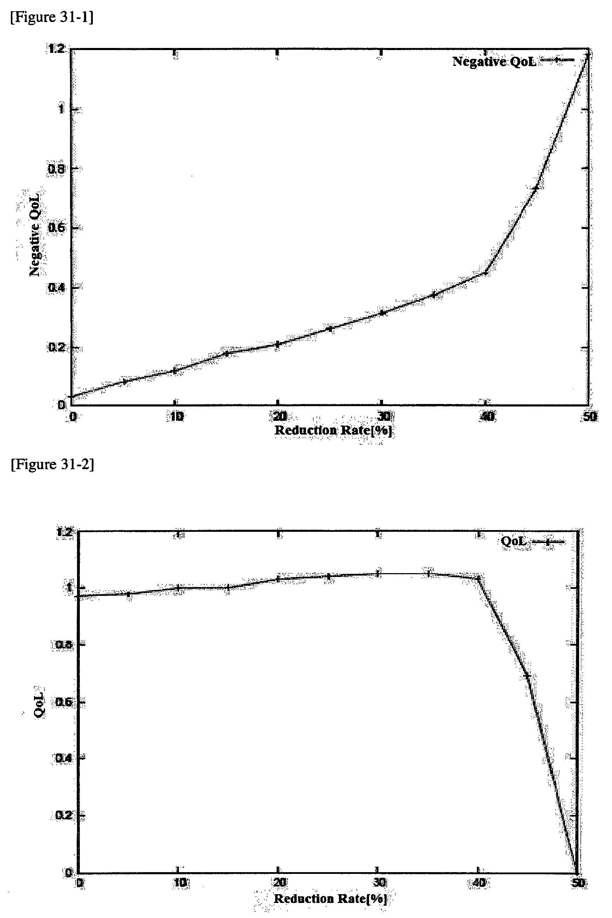

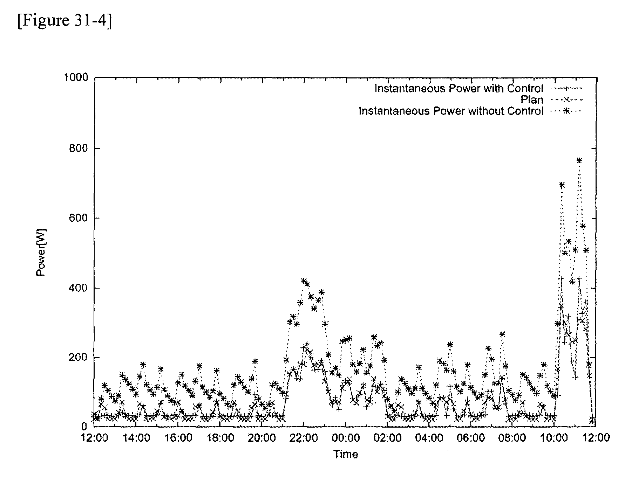

Figures 31-1 to 31-4 show data obtained from such input data with respect to the cumulative power reduction rate in a power use plan. The shown data is data on a one-person household, and the power use plan used in this experiment is such that power data input as an object to be controlled is reduced across the board. Referring to Figure 31-1, the degree of unsatisfactoriness increases linearly with respect to a range of reduction rate up to 40% and increases exponentially with respect to a range of reduction rate above 40%. Referring to Figure 31-2, the degree of satisfaction including a power reduction effect has a maximum value when the reduction rate is 35%. The reason that the value of the degree of unsatisfactoriness is not zero even when the reduction rate is 0% is thought to be due to the influence of the maximum instantaneous power.

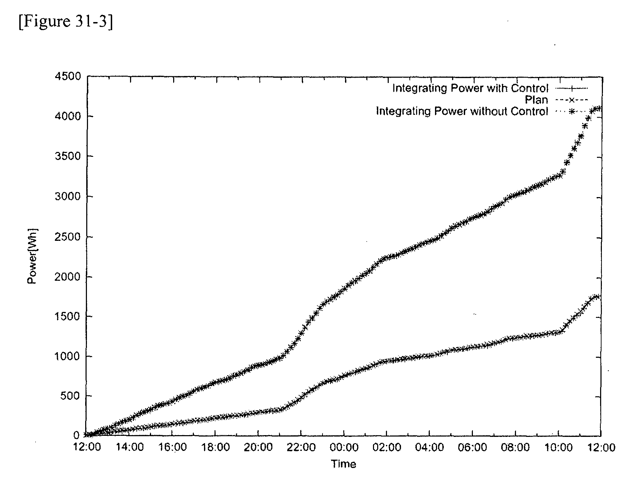

Tables 12 and 13 and Figures 31-3 and 31-4 show data combined with respect to power. Table 12 shows cumulative power simulation results; Table 13 shows instantaneous power simulation results; and Figures 31-3 and 31-4 show consumed powers when the reduction rate was 35% as an example of simulation results.

[Table 12]

| Cumulative power reduction rate [%] | Upper limit [Wh] | Result [Wh] | Use rate [%] |
|---|---|---|---|
| 0 | 2633 | 2700 | 97.5 |
| 5 | 2552 | 2565 | 99.5 |
| 10 | 2416 | 2430 | 99.4 |
| 15 | 2294 | 2295 | 99.9 |
| 20 | 2163 | 2160 | 100.1 |
| 25 | 2030 | 2025 | 100.2 |
| 30 | 1899 | 1890 | 100.5 |
| 35 | 1765 | 1755 | 100.6 |
| 40 | 1637 | 1620 | 101.0 |
| 45 | 1505 | 1485 | 101.3 |
| 50 | 1372 | 1350 | 101.6 |

[Table 13]

| Cumulative power reduction rate [%] | Result [W] | Use rate [%] |
|---|---|---|
| 0 | 1153 | 76.9 |
| 5 | 1153 | 76.9 |

(continued)

| Cumulative power reduction rate [%] | Result [W] | Use rate [%] |
|---|---|---|
| 10 | 1109 | 74.0 |
| 15 | 1127 | 75.1 |
| 20 | 1079 | 71.9 |
| 25 | 1079 | 71.9 |
| 30 | 1079 | 71.9 |
| 35 | 1061 | 70.7 |
| 40 | 1035 | 69.0 |
| 45 | 1020 | 68.0 |
| 50 | 1015 | 67.7 |

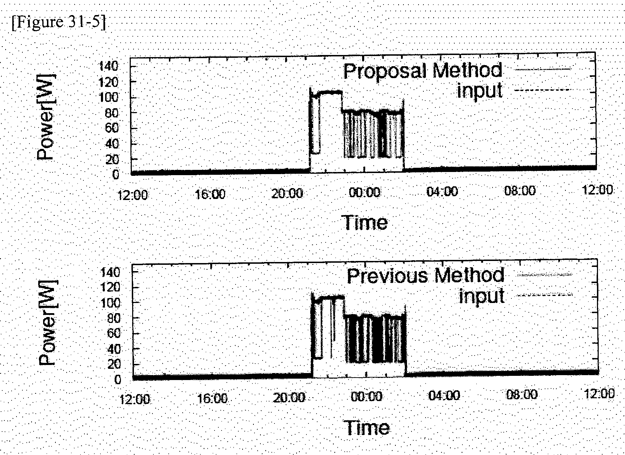

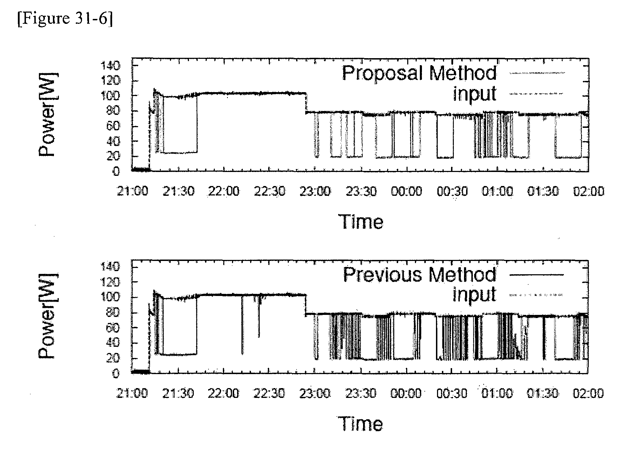

Referring to these Figures, there is a match between the results of the power use plan and the results of the simulation such that lines in the graphs indicating the two groups of results can be seen generally as one line, and it can be understood that power is indeed utilized in accordance with the power use plan. Furthermore, Figures 31-5 and 31-6 show consumed power in using lights for evaluation of stability in a home appliance receivable by a user when the dynamics were considered with respect to the adjustable service function mode in which the devices shown in Table 2 were controlled by being divided into eight classes. The upper graphs in Figures 31-5 and 31-6 show a case where the method proposed in this study was used, while the lower graphs show a case where a priority function relating to adjustability was fixed regardless of perceptibility/imperceptibility to a user, as in the conventional method. It can be understood that changes in power were reduced as compared with the conventional method, and the stability of the function on a user was improved.

(Example 2)

In Example 2, experiments were performed in a real life in the same way as the simulation experiment shown in Example 1.

A system was constructed in the smart apartment shown in Example 1 and it was checked by objective and subjective evaluations whether it was possible to secure the upper limits of instantaneous and cumulative powers while maintaining QoL in living the real life.

In evaluation of the degree of QoL realization in the real life experiment, not an evaluation function but supply priorities in arbitration were used for ease of obtaining data. In this respect, Example 2 differs from Example 1. It was understood that the degrees of realization of functions were high when power was supplied also to the home appliances having lower priorities, and that only minimal functions were realized when power was supplied only to the home appliances having higher priorities.

Under such circumstances, the experiment was performed in a one-subject situation in this study. A power use plan was prepared for maintenance of user's QoL on the basis of a power use pattern in an ordinary life without operating the system. In the experiment operating the system, a life similar to one in accordance with an ordinary life pattern was made. Table 14 shows the circumstances under which the experiment was performed. Output data shown in Table 15 was obtained.

[Table 14]

| Outline | Detail | Value |
|---|---|---|
| Object to be controlled | Each function mode or power mode | Varying among home appliances |
| Power upper limit parameters | Maximum instantaneous power | Uniformly 1500 [W] |
| | Upper limit for cumulative power | Cumulative power was reduced by 10, 30, and 50% from standard pattern |
| | Power use plan | Power in each time interval [W] |

(continued)

| Outline | Detail | Value |
|---|---|---|
| Home appliance parameter | Controllability | Adjustment, suspension, waiting |
| Arbitration parameters | Interval | 10m |
| | Experiment time | 1d (12:00-11:59) |

[Table 15]

| Outline | Detail | Value |
|---|---|---|
| Control result | Changes in power | Power value of each home appliance [W, Wh] |
| | Priority | Value at the time of arbitration |

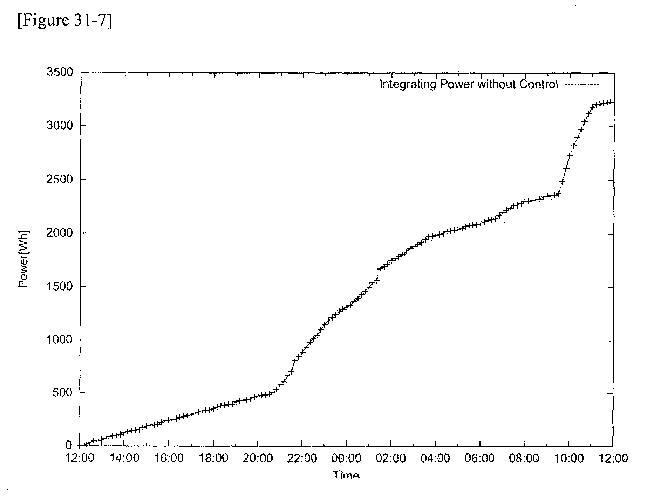

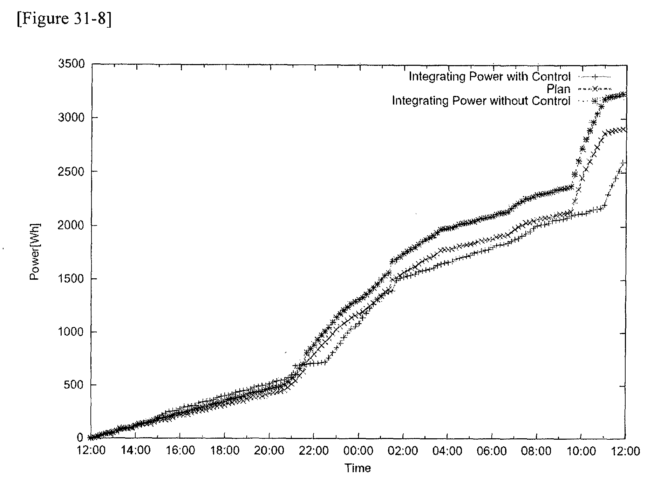

Figures 31-7 to 31-20 show changes in cumulative power, instantaneous power and lowest supply priority. Figures 31-7 to 31-10 have contents plotted at intervals of 10 minutes. Figures 31-11 to 31-14 contain averages of the contents in Figures 31-7 to 31-10. Figures 31-15 to 31-17 have contents plotted at intervals of 30 minutes. Figures 31-8 to 31-20 show enlarged graphs corresponding to portions from 8 p.m. to 3 a.m. of Figures 31-15 to 31-17 and plotted at intervals of 10 minutes.

It can be understood from these figures that when the power reduction rate is low, power is supplied even to the home appliances having lower priorities, i.e., the home appliances having degrees of necessity which are not so high, and that when the power reduction rate is high, power is supplied only to the home appliances having higher priorities, i.e., the home appliances having high degrees of necessity, thus meeting the instantaneous and cumulative power upper limits. Subjective evaluations obtained from the subjects are as described below.

Stability: It was possible to use the home appliances through the day with no problem.

Control: I was able to live with no problem, though sometimes surprised by a reduction in power as a result of arbitration.

Upper limit: I was able to live with no particular trouble, though experienced, for example, dimmed light till a reduction of 30% in cumulative power.

A sensation due to instantaneous power was ignorable.

(Conclusion of Examples)

From the examples, two points: whether user's QoL is maintained and whether instantaneous and cumulative powers meet the upper limits values are checked.

Instantaneous and cumulative powers will first be considered. Referring to Figures 31-3 and 31-7 to 31-10 for cumulative power, it can be understood that power is used in accordance with the set use plan.

Referring to Figure 31-3, a substantially complete match is recognized since the same power use patterns are used with respect to the use plan, and since the home appliance for simulation is supposed to operate in an ideal fashion. Referring to Figures 31-7 to 31-10, power is used generally in accordance with the use plan while partly deviating therefrom. This indicates that the resource management process suitably works, and that it is possible to cope with a situation where a large amount of power is temporarily required as a result of power assignment on a cumulative power basis.

Referring to Table 12, however, the used cumulative power is lower than the upper limit as long as the rate of reduction in cumulative power is equal to or lower than 15%, and the used cumulative power exceeds the upper limit when the reduction rate exceeds 20%. However, the proportion of the excess is extremely small.

Referring to Figure 31-10, the reduction rate is 50%, so that a state can be recognized in which the power partly exceeds the power use plan. This is thought to be due to the property of power requested from the home appliance. It is inferred that either of control by adjustment and control by suspension was not possible as control on the power assigned at this point in time.

While it is undesirable that cumulative power exceeds the upper limit, it is impossible to reduce power in the protocol designed as described above, since the priority for the uncontrollable home appliance is set to 1. This is thought to be a cause of occurrence of such a state. In order to reliably fulfill the first-described concept of use of electric power on the demand side considering the supplier side in view of such a problem, there is a need to reduce the power while recognizing a serious reduction in user's QoL or to realize an on-demand power control system in such a form that a dispersion-type power source such as a storage battery is introduced.

Referring to Figures 31-4, 31-11 to 31-14 and Table 13 regarding instantaneous power, it can be understood that instantaneous power is below the upper limit of 1500 W in each case. In these figures, not only a reduction in the entire consumed power but also a state where the peak is reduced or shifted is seen. It is therefore thought that suitable control method is realized with respect to each home appliance.

User's QoL when power is controlled will be considered. The degree of unsatisfactoriness described above with reference to Figure 31-1 in consideration of a home appliance function monotonously increases as a whole, which is considered to be natural since power is reduced. After the cumulative power reduction rate exceeds 40%, however, the degree of unsatisfactoriness increases abruptly. It is therefore thought from Expression 15 that most of the home appliances are not in a power-reduced state but in a stopped state. It is thought that in this state, the home appliance functions are largely limited in comparison with the state where the power reduction rate is not higher than 40%. It is desirable to limit the power reduction rate to 40% or less for user's life. The degree of satisfaction including the power reduction effect, described above with reference to 31-2, has a maximum value when the cumulative power reduction ratio is 35%. Furthermore, an evaluation stating that there was no particular problem with the life when the cumulative power reduction rate was not higher than 30% has also been obtained from the subject's subjective evaluations in the real life experiment. As a result, the reduction rate allowable when a user reduces the cumulative power is 30 to 40%.

The stability of a function perceivable by a user will further be considered. In the examples, the brightness of a light was taken as a power-adjustable function perceivable by a user. In the light, operating function modes and power modes correspond in a one-to-one relationship to each other, as already described, and therefore, a change in power directly appears as a change in service function mode level. Referring to Figures 31-5 and 31-6, the proposed method using the priority and taking in dynamics while considering user's perception has a reduced number of changes in power, though having some left, and also has a reduced power variation width, thus demonstrating the effectiveness of the present invention.

As described above, power and QoL have been examined in the results according to the present invention to confirm that power can be suitably used as a whole in accordance with a power use plan and priorities. Also, user's QoL has been quantitatively evaluated by using a designed evaluation function, though the function was prepared by considering only simple home appliance functions and the power reduction rate. Correlations between the quantitative evaluations and the subjective evaluations have also been recognized.

**Claims**

1.    An on-demand power control system (50) in which dynamic priority control is performed, comprising:

   a power source (32);
   a plurality of electrical devices (20);
   a home appliance agent (1) that controls supply of power to each electrical device (20)

      by receiving a signal having a power value from a smart tap (11) or each electrical device (20),
      by calculating requested power and a priority on the basis of the received signal,
      by transmitting the requested power and the priority as a power request message to a power manager (30), and
      by transmitting a function control command for controlling the electrical device (20) to the electrical device according to a power assignment message received from the power manager (30);

   the power manager (30) that obtains power to be assigned to each electrical device (20) according to the priorities between the electrical devices on the basis of the power request message from each electrical device (20) received from the home appliance agent (1); and
   a home appliance DB (10) connected to the power manager (30) and/or the home appliance (1) agent, the home appliance agent, the power manager and the home appliance DB constituting a network connected to the electrical devices (20) through the smart taps (11),
   wherein the power manager (30) determines power to be assigned to each electrical device (20) by inquiring the home appliance agent (1) of whether or not the electrical device (20) is capable of adjusting an operating function mode set as a target of a service operation of the electrical device, and of power for the electrical device,
   wherein if the electrical device (20) is capable of adjusting the operating function mode, the power manager (30) obtains as a power assignment message the operating function mode set as a target for the electrical device (20) and/or a power mode having necessary power and necessary time for reaching the operating function mode set as a target;
wherein if the electrical device (20) is not capable of adjusting the operating function mode, the power manager (30) obtains a power mode as a power assignment message without considering the operating function mode, and
wherein the power manager (30) includes a memory for transmitting the power assignment message thus obtained to the home appliance agent (1),
wherein the power manager (30) is configured to control a power supply to the electrical devices (20) such that an upper limit for integral power over a fixed period and a maximum instantaneous power is not exceeded, and
wherein an instantaneous power is consumed power and the maximum instantaneous power is an upper limit for the instantaneous power.

2. The on-demand power control system according to claim 1, wherein the power manager includes initial target value updating means for
allocating a difference between instantaneous power with an initial target value and actual instantaneous power to subsequent instantaneous power with an initial target value to calculate an updated initial target value,
comparing the updated initial target value with maximum instantaneous power,
if the updated initial target value is smaller, updating the subsequent instantaneous power with the initial target value to have the updated initial target value, and
if the updated initial target value is larger, updating the instantaneous power with the initial target value to be the maximum instantaneous power and setting the maximum instantaneous power as the updated initial target value,
wherein the power manager is configured to receive the power request message through the home appliance agent from the smart tap and/or a tap having a requested power measuring function and a communication function for transmission to the home appliance agent in a server, and is configured to calculate a total value of power consumed by the electrical device requiring power according to the power request message and electrical devices in operation, and
wherein the power manager is configured to
calculate priorities of both of the electrical devices based on electrical device property class data, in which electrical devices are classified into classes according to properties of methods for supplying power to the electrical devices, to compare the total value of the consumed power with the updated initial target value,
if the total value of the consumed power is smaller, supplies power to the electrical device having performed transmission,
if the total value of the consumed power is larger, calls up the priorities from the memory and/or the home appliance DB to select an electrical device having a minimum priority, with respect to the electrical device having the minimum priority, determines which of the properties the electrical device corresponds to, with reference to the electrical device property class data, and controls the power to be supplied according to the property to which the electrical device corresponds.

3. The on-demand power control system according to claim 1 or 2, wherein the instantaneous power is consumed power which is obtained by adding up consumed power in each of intervals of a minimum control interval $\tau$ to obtain a total value and averaging the total value.

4. The on-demand power control system according to claim 3, wherein the minimum control interval $\tau$ is 5 to 10 minutes.

5. The on-demand power control system according to any of claims 2 to 4, wherein information to be processed by the initial target value updating means is the instantaneous power, and information to be processed by a power arbitration means of the power manager is requested power.

6. The on-demand power control system according to claim 5, wherein a power use plan in which the initial target value is created based on a user's pattern of power consumption is created using one of a fixed rate reduction plan, a peak reduction plan, and a cost reduction plan.

7. The on-demand power control system according to claim 6, wherein an initial target value T0(t) (W) which is created using the fixed rate reduction plan is given by equations (1) and (2):

$$D'(t) = \begin{cases} D(t) & if\ D(t) \leq M(t) \\ M(t) & otherwise \end{cases} \tag{1}$$

$$T_0(t) = \frac{C}{\sum_{t_{start}}^{t_{end}} \tau \, D'(t)} D'(t) \qquad (2)$$

where C (Wh) is a ceiling set by the user, M(t) (W) is maximum instantaneous power at a time t, and D(t) (W) is a predicted value for power demand at the time t.

8. The on-demand power control system according to claim 6, wherein an initial target value created using the peak reduction plan is created by reducing an initial target value only during on-peak power use hours in the power use plan.

9. The on-demand power control system according to claim 6, wherein an initial target value created in the cost reduction plan is created by reducing the initial target value according to power costs in the power use plan.

10. The on-demand power control system according to claim 9, wherein the instantaneous power with the initial target value, the actual instantaneous power, and the electrical device property class data are stored in the memory and/or the home appliance DB before the power manager is activated.

11. The on-demand power control system according to claim 10, wherein allocating the difference to be allocated to the subsequent instantaneous power with the initial target value comprises an equal difference allocation method that equally allocates the difference or an instantaneous power allocation method that allocates the difference to only one immediately succeeding instantaneous power.

12. The on-demand power control system according to claim 2, wherein the electrical device property class data is divided according to the properties of the methods for supplying power to the electrical devices, as to whether or not the device is adjustable, whether or not the device is suspendable, and whether or not the device is waitable, and the data is composed of eight sorts of data defined by combinations of the properties.

13. The on-demand power control system according to claim 12, wherein segments arbitrarily selectable by a user for ensuring a safe and comfortable life are provided other than the segments: capability of adjustment, capability of suspension and capability of waiting divided according to the methods for supplying power to the electrical devices.

14. The on-demand power control system according to claim 12, wherein the adjustable property is a property which allows change of power supplied during operation, the waitable property is a property which allows waiting for power supply at startup, and the suspendable property is a property which allows suspension of power supply during operation.

15. The on-demand power control system according to claim 14, wherein electrical devices having the adjustable property include a notebook PC, a boiler, a toilet seat with a warm-water shower feature, a microwave oven, a heater air conditioner, a refrigerator, a TV, and a dryer.

16. The on-demand power control system according to claim 14, wherein electrical devices having the waitable property include a notebook PC, a boiler, a toilet seat with a warm-water shower feature, a microwave oven, a dishwasher, a rice cooker, and a toaster.

17. The on-demand power control system according to claim 14, wherein electrical devices having the suspendable property include a notebook PC, a boiler, a heater air conditioner, a refrigerator, a dishwasher, a rice cooker, a copying machine, and an electric pot.

18. The on-demand power control system according to claim 14, wherein electrical devices not having the adjustable, suspendable, and waitable properties include a gas detector, a respirator, and a network device such as a router.

19. An on-demand power control system wherein a power manager according to claim 1 further comprises continuous monitoring means for monitoring consumed power at all times.

20. The on-demand power control system according to claim 19, wherein the continuous monitoring means controls power supply such that overall consumed power falls below the maximum instantaneous power without waiting for a lapse of the minimum control interval τ if the overall consumed power exceeds the maximum instantaneous power for a fixed period d or longer.

21. The on-demand power control system according to claim 20, wherein the fixed period d is 0.5 to 2 seconds.

22. The on-demand power control system according to any one of claims 19 to 21, wherein the continuous monitoring means
   calculates a total value of power consumed by electrical devices in operation,
   calculates priorities of the electrical devices based on electrical device property class data, in which electrical devices are classified into classes according to three types of properties,
   compares the total value of the consumed power with the maximum instantaneous power,

   if the total value of the consumed power is smaller, ends processing,
   if the total value of the consumed power is larger, selects an electrical device having the minimum priority, determines which of the three types of properties the electrical device corresponds to, with reference to the electrical device property class data, and selects a device having the minimum priority according to the property, to which the electrical device corresponds.

23. A program for causing a computer to execute processing for arbitration based on priorities between electrical devices, the program causing the computer to make a power manager including a memory operate on:

   a power source (32);
   a plurality of electrical devices (20); and
   a home appliance agent (1) that controls supply of power to each electrical device (20)

   by receiving a power request message from a smart tap (11) or each electrical device (20), by transmitting this message to the power manager (30), and
   by transmitting a message or a function control command for controlling the electrical device (20) to the smart tap (11) or the electrical device according to a received power assignment message,

   the power manager (30) obtaining priorities between the electrical devices (20) based on a signal from each electrical device received from the home appliance agent (1), obtaining power to be assigned to each electrical device, and including a memory for transmitting to the home appliance agent (1) the power assignment message thus obtained, the program causing the computer to execute processing for arbitration on the basis of the priorities between the electrical devices,
   the program causing the computer to make the power manager (30) including the memory determine, by inquiring the home appliance agent (1), whether or not each electrical device (20) is capable of adjusting an operating function mode set as a target of a service operation of the electrical device, and necessary power for the electrical device (20),
   if the electrical device (20) is capable of adjusting the operating function mode, obtain as a power assignment message the operating function mode set as a target for the electrical device (20) and/or a power mode having necessary power and necessary time for reaching the operating function mode set as a target,
   if the electrical device (20) is not capable of adjusting the operating function mode, obtain a power mode as a power assignment message without considering the operating function mode, and including a memory for transmitting the power assignment message thus obtained to the home appliance agent (1),
   wherein power supply to the electrical devices (20) is controlled such that an upper limit for integral power over a fixed period and a maximum instantaneous power is not exceeded, and
   wherein an instantaneous power is consumed power and the maximum instantaneous power is an upper limit for the instantaneous power.

24. The program for causing a computer to execute according to claim 23, wherein the power manager includes initial target value updating means for
   allocating a difference between instantaneous power with an initial target value and actual instantaneous power to subsequent instantaneous power with an initial target value to calculate an updated initial target value,
   comparing the updated initial target value with maximum instantaneous power,
   if the updated initial target value is smaller, updating the subsequent instantaneous power with the initial target value to have the updated initial target value, and

if the update initial target value is larger, updating the instantaneous power with the initial target value to be the maximum instantaneous power and setting the maximum instantaneous power as the updated initial target value, wherein the power manager receives the power request message through the home appliance agent from the smart tap and/or a tap having a requested power measuring function and a communication function for transmission to the home appliance agent in a server, and calculates a total value of power consumed by the electrical device requiring power according to the power request message and electrical devices in operation, and wherein the power manager

calculates priorities for the electrical devices based on electrical device property class data, in which electrical devices are classified into classes according to properties of methods for supplying power to the electrical devices, compares the total value of the consumed power with the updated initial target value, if the total value of the consumed power is smaller,

supplies power to the electrical device having performed transmission,

if the total value of the consumed power is larger, calls up the priorities from the memory and/or the home appliance DB to select an electrical device having a minimum priority, determines which of the properties the electrical device corresponds to, with reference to the electrical device property class data, and

controls the power to be supplied according to the property to which the electrical device corresponds.

25. The program for causing a computer to execute according to claim 24, wherein the instantaneous power is consumed power that is obtained by adding up consumed power in each of intervals of a minimum control interval $\tau$ to obtain a total value and averaging the total value.

26. The program for causing a computer to execute according to claim 25, wherein the minimum control interval $\tau$ is 5 to 10 minutes.

27. The program for causing a computer to execute according to claim 26, wherein information to be processed by the initial target value updating means is the instantaneous power, and information to be processed by the power arbitration means of the power manager is the consumed power.

28. The program for causing a computer to execute according to claim 23, wherein the electrical device property class data is divided according to the properties of the methods for supplying power to the electrical devices, as to whether or not the device is adjustable, whether or not the device is suspendable, and whether or not the device is waitable, and the data is composed of eight sorts of data defined by combinations of the properties.

29. The program for causing a computer to execute according to claim 28, wherein segments arbitrarily selectable by a user for ensuring a safe and comfortable life are provided other than the segments: capability of adjustment, capability of suspension and capability of waiting divided according to the methods for supplying power to the electrical devices.

30. The program for causing a computer to execute according to claim 29, wherein the adjustable property is a property which allows change of power supplied during operation, the waitable property is a property which allows waiting for power supply at startup, and the suspendable property is a property which allows suspension of power supply during operation.

31. The program for causing a computer to execute according to claim 30, wherein electrical devices having the adjustable property include a notebook PC, a boiler, a toilet seat with a warm-water shower feature, a microwave oven, a heater air conditioner, a refrigerator, a TV, and a dryer.

32. The program for causing a computer to execute according to claim 30, wherein electrical devices having the waitable property include a notebook PC, a boiler, a toilet seat with a warm-water shower feature, a microwave oven, a dishwasher, a rice cooker, and a toaster.

33. The program for causing a computer to execute according to claim 30, wherein electrical devices having the suspendable property include a notebook PC, a boiler, a heater air conditioner, a refrigerator, a dishwasher, a rice cooker, a copying machine, and an electric pot.

34. The program for causing a computer to execute according to claim 30, wherein electrical devices not having the adjustable, suspendable, and waitable properties include a gas detector, a respirator, and a network device such as a router.

**35.** A computer-readable recording medium recording a program according to claim 23.

**36.** A computer-readable recording medium recording a program according to claim 27.

**37.** A computer-readable recording medium recording a program according to claim 28.


**Patentansprüche**

**1.** System für bedarfsgerechte Leistungssteuerung (50), in der eine dynamische Prioritätssteuerung durchgeführt wird, mit:

einer Energiequelle (32),
mehreren elektrischen Vorrichtungen (20),
einem Haushaltsgeräteagenten (1), der die Stromversorgung für jede elektrische Vorrichtung (20) steuert,

indem ein Signal mit einem Energiewert von einem intelligenten Abgriff (11) oder jeder elektrischen Vorrichtung empfangen wird,
indem eine angeforderte Energie und eine Priorität auf der Basis des empfangenen Signals berechnet werden,
indem die angeforderte Energie und die Priorität als eine Energieanforderungsmeldung an einen Energiemanager (30) gesendet wird, und
indem ein Funktionssteuerungsbefehl zum Steuern der elektrischen Vorrichtung (20) an die elektrische Vorrichtung entsprechend einer vom Energiemanager (30) empfangenen Energiezuordnungsmeldung gesendet wird;

dem Energiemanager (30), der Energie erhält, die jeder elektrischen Vorrichtung (20) entsprechend den Prioritäten zwischen den elektrischen Vorrichtungen auf der Basis der vom Haushaltsgeräteagenten (1) empfangenen Energieanforderungsmeldung von jeder elektrischen Vorrichtung (20) zuzuordnen ist; und
einer Haushaltsgeräte-DB (10), die mit dem Energiemanager (30) und/oder dem Haushaltsgeräteagenten (1) verbunden ist, wobei der Haushaltsgeräteagent, der Energiemanager und die Haushaltsgeräte-DB ein Netzwerk bilden, das mit den elektrischen Vorrichtungen (20) durch die intelligenten Abgriffe (11) verbunden ist,
wobei der Energiemanager (30) die jeder elektrischen Vorrichtung (20) zuzuordnende Energie feststellt, indem beim Haushaltsgeräteagenten (1) angefragt wird, ob die elektrische Vorrichtung (20) den als Ziel eines Servicebetriebs der elektrischen Vorrichtung eingestellten Betriebsfunktionsmodus und die Energie der elektrischen Vorrichtung anpassen kann oder nicht,
wobei, wenn die elektrische Vorrichtung (20) den Betriebsfunktionsmodus anpassen kann, der Energiemanager (30) als eine Energiezuordnungsmeldung den als Ziel für die elektrische Vorrichtung (20) eingestellten Betriebsfunktionsmodus und/oder einen Energiemodus mit der notwendigen Energie und der notwendigen Zeit für den als Ziel eingestellten Betriebsfunktionsmodus erhält;
wobei, wenn die elektrische Vorrichtung (20) den Betriebsfunktionsmodus nicht anpassen kann, der Energiemanager (30) einen Energiemodus als eine Energiezuordnungsmeldung ohne Berücksichtigung des Betriebsfunktionsmodus erhält, und
wobei der Energiemanager (30) einen Speicher zum Senden der damit erhaltenen Energiezuordnungsmeldung zum Haushaltsgeräteagenten (1) aufweist,
wobei der Energiemanager (30) konfiguriert ist, um die Energieversorgung für die elektrischen Vorrichtungen (20) so zu steuern, dass ein oberer Grenzwert für die Eigenversorgung über einen festen Zeitraum und eine maximale sofortige Energie nicht überschritten werden, und
wobei eine sofortige Energie verbrauchte Energie ist und die maximale sofortige Energie ein oberer Grenzwert für die sofortige Energie ist.

**2.** System für bedarfsgerechte Leistungssteuerung nach Anspruch 1, wobei der Energiemanager eine Aktualisierungsvorrichtung für einen anfänglichen Zielwert aufweist, um

eine Differenz zwischen sofortiger Energie mit einem anfänglichen Zielwert und tatsächlicher sofortiger Energie einer anschließenden sofortigen Energie mit einem anfänglichen Zielwert zuzuweisen, um einen aktualisierten anfänglichen Zielwert zu berechnen,
den aktualisierten anfänglichen Zielwert mit der maximalen sofortigen Energie zu vergleichen,

wenn der aktualisierte anfängliche Zielwert kleiner ist, die anschließende sofortige Energie mit dem anfänglichen Zielwert zu aktualisieren, um den aktualisierten anfänglichen Zielwert zu erhalten, und

wenn der aktualisierte anfängliche Zielwert größer ist, die sofortige Energie mit dem anfänglichen Zielwert zu aktualisieren, so dass sie die maximale sofortige Energie ist, und die maximale sofortige Energie als den aktualisierten anfänglichen Zielwert einzustellen,

wobei der Energiemanager konfiguriert ist, um die Energieanforderungsmeldung durch den Haushaltsgeräteagenten von dem intelligenten Abgriff und/oder einem Abgriff mit einer erforderlichen Leistungsmessfunktion und einer Kommunikationsfunktion zum Senden an den Haushaltsgeräteagenten in einem Server zu empfangen, und konfiguriert ist, um einen Gesamtwert der von dem elektrischen Gerät verbrauchten Energie zu berechnen, die eine Energie entsprechend der Energieanforderungsmeldung und der in Betrieb befindlichen elektrischen Vorrichtungen erfordern, und

wobei der Energiemanager konfiguriert ist, um

Prioritäten von beiden elektrischen Vorrichtungen auf der Basis von Daten für Eigenschaftsklassen elektrischer Vorrichtungen zu berechnen, in denen elektrische Vorrichtungen in Klassen entsprechend den Eigenschaften von Verfahren zur Versorgung mit Energie für elektrische Vorrichtungen klassifiziert werden, um den Gesamtwert der verbrauchten Energie mit dem aktualisierten anfänglichen Zielwert zu vergleichen, wenn der Gesamtwert der verbrauchten Energie kleiner ist, Energie der elektrischen Vorrichtung zuzuführen, die das Senden durchgeführt hat,

wenn der Gesamtwert der verbrauchten Energie größer ist, die Prioritäten vom Speicher und/oder der Haushaltsgeräte-DB abzurufen, um eine elektrische Vorrichtung mit einer minimalen Priorität mit Bezug auf die elektrische Vorrichtung mit der minimalen Priorität auszuwählen, zu bestimmen, welche der Eigenschaften der elektrischen Vorrichtung mit Bezug auf die Daten für Eigenschaftsklassen elektrischer Vorrichtungen entspricht, und die zuzuführende Energie entsprechend der Eigenschaft, der die elektrische Vorrichtung entspricht, zu steuern.

3.  System für bedarfsgerechte Leistungssteuerung nach Anspruch 1 oder 2, wobei die sofortige Energie verbrauchte Energie ist, die man durch Aufaddieren verbrauchter Energie in jedem der Intervalle eines minimalen Steuerintervalls $\tau$ erhält, um einen Gesamtwert zu erhalten und den Durchschnitt des Gesamtwerts zu ermitteln.

4.  System für bedarfsgerechte Leistungssteuerung nach Anspruch 3, wobei das minimale Steuerintervall $\tau$ 5 bis10 Minuten beträgt.

5.  System für bedarfsgerechte Leistungssteuerung nach einem der Ansprüche 2 bis 4, wobei die durch die Aktualisierungsvorrichtung für den anfänglichen Zielwert zu verarbeitende Information die sofortige Energie ist und die durch eine Energieentscheidungseinrichtung des Energiemanagers zu verarbeitende Information die erforderliche Energie ist.

6.  System für bedarfsgerechte Leistungssteuerung nach Anspruch 5, wobei ein Energienutzungsplan, in dem der anfängliche Zielwert auf der Basis eines Energieverbrauchsmusters eines Anwenders erzeugt wird, mittels eines Festpreis-Reduzierungsplans, eines Spitzenreduzierungsplans oder eines Kostenreduzierungsplans erzeugt wird.

7.  System für bedarfsgerechte Leistungssteuerung nach Anspruch 6, wobei ein anfänglicher Zielwert T0(t) (W), der mittels des Festpreis-Reduzierungsplans erzeugt wird, durch Gleichungen (1) und (2) angegeben wird:

$$D'(t) = \begin{cases} D(t) & \text{wenn } D(t) \leq M(t) \\ M(t) & \text{ansonsten} \end{cases} \qquad (1)$$

$$T_0(t) = \frac{C}{\sum_{t_{Start}}^{t_{Ende}} \tau D'(t)} D'(t) \qquad (2)$$

wobei C (Wh) eine durch den Anwender eingestellte Obergrenze ist, M(t) (W) eine maximale sofortige Energie zu einem Zeitpunkt t ist und D(t) (W) ein vorhergesagter Wert für die Energieanforderung zum Zeitpunkt t ist.

8. System für bedarfsgerechte Leistungssteuerung nach Anspruch 6, wobei ein mittels Spitzenreduzierungsplan erzeugter anfänglicher Zielwert durch Reduzierung eines anfänglichen Zielwerts nur während der Stunden mit einem Spitzen-Energieverbrauch im Energienutzungsplan erzeugt wird.

9. System für bedarfsgerechte Leistungssteuerung nach Anspruch 6, wobei ein im Kostenreduzierungsplan erzeugter anfänglicher Zielwert durch Reduzierung des anfänglichen Zielwerts entsprechend den Energiekosten im Energienutzungsplan erzeugt wird.

10. System für bedarfsgerechte Leistungssteuerung nach Anspruch 9, wobei die sofortige Energie mit dem anfänglichen Zielwert, die tatsächliche sofortige Energie und die Eigenschaftsklassendaten für elektrische Vorrichtungen im Speicher und/oder der Haushaltsgeräte-DB gespeichert werden, bevor der Energiemanager aktiviert wird.

11. System für bedarfsgerechte Leistungssteuerung nach Anspruch 10, wobei das Zuweisen der der anschließenden sofortigen Energie mit dem anfänglichen Zielwert zuzuweisenden Differenz ein gleiches Differenzzuweisungsverfahren, das die Differenz gleich zuweist, oder ein Zuweisungsverfahren der sofortigen Energie umfasst, das die Differenz nur einer unverzüglich erfolgreichen sofortigen Energie zuweist.

12. System für bedarfsgerechte Leistungssteuerung nach Anspruch 2, wobei die Daten für Eigenschaftsklassen elektrischer Vorrichtungen entsprechend den Eigenschaften der Verfahren zum Zuführen von Energie an die elektrischen Vorrichtungen geteilt werden, so ob die Vorrichtung anpassbar ist oder nicht, ob die Vorrichtung aufhebbar ist oder nicht und ob die Vorrichtung warten kann oder nicht, wobei die Daten aus acht Datenarten zusammengesetzt sind, die durch Kombinationen der Eigenschaften definiert werden.

13. System für bedarfsgerechte Leistungssteuerung nach Anspruch 12, wobei durch einen Anwender willkürlich auswählbare Segmente zur Gewährleistung eines sicheren und komfortablen Lebens anders bereitgestellt werden als die Segmente: Fähigkeit zur Anpassung, Fähigkeit zur Aufhebung und Fähigkeit zum Warten, die entsprechend den Verfahren zum Zuführen von Energie an die elektrischen Vorrichtungen geteilt werden.

14. System für bedarfsgerechte Leistungssteuerung nach Anspruch 12, wobei die anpassbare Eigenschaft eine Eigenschaft ist, die eine Änderung der während des Betriebs zugeführten Energie ermöglicht, die wartende Eigenschaft eine Eigenschaft ist, die das Warten auf die Energieversorgung beim Anlauf ermöglicht, und die aufhebende Eigenschaft eine Eigenschaft ist, die das Aufheben der Energieversorgung während des Betriebs ermöglicht.

15. System für bedarfsgerechte Leistungssteuerung nach Anspruch 14, wobei die elektrischen Vorrichtungen mit der anpassbaren Eigenschaft einen Notebook-PC, einen Warmwasserspeicher, einen Toilettensitz mit dem Merkmal einer Warmwasserdusche, einen Mikrowellenofen, eine Heizung/Klimaanlage, einen Kühlschrank, einen Fernseher und einen Trockner beinhalten.

16. System für bedarfsgerechte Leistungssteuerung nach Anspruch 14, wobei die elektrischen Vorrichtungen mit der wartenden Eigenschaft einen Notebook-PC, einen Warmwasserspeicher, einen Toilettensitz mit dem Merkmal einer Warmwasserdusche, einen Mikrowellenofen, einen Geschirrspüler, einen Reiskocher und einen Toaster beinhalten.

17. System für bedarfsgerechte Leistungssteuerung nach Anspruch 14, wobei die elektrischen Vorrichtungen mit der aufhebenden Eigenschaft einen Notebook-PC, einen Warmwasserspeicher, eine Heizung/Klimaanlage, einen Kühlschrank, einen Geschirrspüler, einen Reiskocher, einen Kopierer und einen elektrischen Kochtopf beinhalten.

18. System für bedarfsgerechte Leistungssteuerung nach Anspruch 14, wobei elektrische Vorrichtungen, die keine anpassbaren, aufhebenden und wartenden Eigenschaften haben, ein Gaswarngerät, ein Atemschutzgerät und eine Netzwerkvorrichtung wie einen Router beinhalten.

19. System für bedarfsgerechte Leistungssteuerung, wobei ein Energiemanager nach Anspruch 1 des Weiteren eine kontinuierliche Überwachungseinrichtung zum Überwachen verbrauchter Energie zu jeder Zeit umfasst.

20. System für bedarfsgerechte Leistungssteuerung nach Anspruch 19, wobei die kontinuierliche Überwachungseinrichtung die Energieversorgung so steuert, dass die verbrauchte Gesamtenergie unter die maximale sofortige Energie fällt, ohne auf ein Ablaufen des minimalen Steuerintervalls $\tau$ zu warten, wenn die verbrauchte Gesamtenergie die maximale sofortige Energie für einen festen Zeitraum d oder länger überschreitet.

21. System für bedarfsgerechte Leistungssteuerung nach Anspruch 20, wobei der feste Zeitraum d 0,5 bis 2 Sekunden beträgt.

22. System für bedarfsgerechte Leistungssteuerung nach Anspruch 19 bis 21, wobei die kontinuierliche Überwachungseinrichtung
einen Gesamtwert der durch in Betrieb befindliche elektrische Vorrichtungen verbrauchten Energie berechnet, Prioritäten der elektrischen Vorrichtungen auf der Basis von Daten für Eigenschaftsklassen elektrischer Vorrichtungen berechnet, in denen elektrische Vorrichtungen in Klassen entsprechend drei Eigenschaftsarten klassifiziert werden,
den Gesamtwert der verbrauchten Energie mit der maximalen sofortigen Energie vergleicht,

wenn der Wert der verbrauchten Energie kleiner ist, die Bearbeitung beendet,
wenn der Gesamtwert der verbrauchten Energie größer ist, die elektrische Vorrichtung mit der minimalen Priorität auswählt, feststellt, welcher der drei Eigenschaftsarten die elektrische Vorrichtung mit Bezug auf die Daten für Eigenschaftsklassen elektrischer Vorrichtungen entspricht, und eine Vorrichtung mit der minimalen Priorität entsprechend der Eigenschaft auswählt, der die elektrische Vorrichtung entspricht.

23. Programm, um zu veranlassen, dass ein Computer die Verarbeitung einer Entscheidung auf der Basis von Prioritäten zwischen elektrischen Vorrichtungen ausführt, wobei das Programm bewirkt, dass der Computer einen Energiemanager mit einem Speicher arbeiten lässt an:

einer Energiequelle (32),
mehreren elektrischen Vorrichtungen (20), und
einem Haushaltsgeräteagenten (1), der die Stromversorgung für jede elektrische Vorrichtung (20) steuert,

indem eine Energieanforderungsmeldung von einem intelligenten Abgriff (11) oder jeder elektrischen Vorrichtung (20) empfangen wird,
indem diese Meldung an den Energiemanager (30) gesendet wird, und
indem eine Meldung oder ein Funktionssteuerungsbefehl zum Steuern der elektrischen Vorrichtung (20) zu dem intelligenten Abgriff (11) oder der elektrischen Vorrichtung entsprechend einer empfangenen Energiezuordnungsmeldung gesendet wird,

wobei der Energiemanager (30) Prioritäten zwischen den elektrischen Vorrichtungen (20) auf der Basis eines Signals von jeder elektrischen Vorrichtung erhält, das vom Haushaltsgeräteagenten (1) empfangen wird, Energie erhält, um sie jeder elektrischen Vorrichtung zuzuweisen, und einen Speicher aufweist, um die so erhaltene Energiezuordnungsmeldung an den Haushaltsgeräteagenten (1) zu senden, wobei das Programm bewirkt, dass der Computer die Bearbeitung für die Entscheidung auf der Basis der Prioritäten zwischen den elektrischen Vorrichtungen ausführt,
wobei das Programm bewirkt, dass der Computer den Energiemanager (30) mit dem Speicher feststellen lässt, indem beim Haushaltsgeräteagenten (1) angefragt wird, ob die elektrische Vorrichtung (20) den als Ziel eines Servicebetriebs der elektrischen Vorrichtung eingestellten Betriebsfunktionsmodus und die notwendige Energie für die elektrische Vorrichtung (20) anpassen kann oder nicht,
wenn die elektrische Vorrichtung (20) den Betriebsfunktionsmodus anpassen kann, als eine Energiezuordnungsmeldung den als Ziel für die elektrische Vorrichtung (20) eingestellten Betriebsfunktionsmodus und/oder einen Energiemodus mit der notwendigen Energie und der notwendigen Zeit zum Erreichen des als Ziel eingestellten Betriebsfunktionsmodus erhält;
wenn die elektrische Vorrichtung (20) den Betriebsfunktionsmodus nicht anpassen kann, eines Energiemodus als eine Energiezuordnungsmeldung ohne Berücksichtigung des Betriebsfunktionsmodus erhält und einen Speicher zum Senden der so erhaltenen Energiezuordnungsmeldung an den Haushaltsgeräteagenten (1) aufweist,
wobei die Energieversorgung für die elektrischen Vorrichtungen (20) so gesteuert wird, dass ein oberer Grenzwert für die Eigenversorgung über einen festen Zeitraum und eine maximale sofortige Energie nicht überschritten wird, und
wobei eine sofortige Energie verbrauchte Energie ist und die maximale sofortige Energie ein oberer Grenzwert für die sofortige Energie ist.

24. Programm, das eine Ausführung eines Computers nach Anspruch 23 veranlasst, wobei der Energiemanager eine Aktualisierungsvorrichtung für einen anfänglichen Zielwert aufweist, um

eine Differenz zwischen sofortiger Energie mit einem anfänglichen Zielwert und tatsächlicher sofortiger Energie anschließender sofortiger Energie mit einem anfänglichen Zielwert zuzuweisen, um einen aktualisierten anfänglichen Zielwert zu berechnen,

den aktualisierten anfänglichen Zielwert mit der maximalen sofortigen Energie zu vergleichen,

wenn der aktualisierte anfängliche Zielwert kleiner ist, die anschließende sofortige Energie mit dem anfänglichen Zielwert zu aktualisieren, um den aktualisierten anfänglichen Zielwert zu erhalten, und

wenn der aktualisierte anfängliche Zielwert größer ist, die sofortige Energie mit dem anfänglichen Zielwert zu aktualisieren, so dass sie die maximale sofortige Energie ist, und die maximale sofortige Energie als den aktualisierten anfänglichen Zielwert einzustellen,

wobei der Energiemanager die Energieanforderungsmeldung durch den Haushaltsgeräteagenten von dem intelligenten Abgriff und/oder einem Abgriff mit einer erforderlichen Leistungsmessfunktion und einer Kommunikationsfunktion zum Senden an den Haushaltsgeräteagenten in einem Server empfängt, und einen Gesamtwert der von der elektrischen Vorrichtung verbrauchten Energie berechnet, die eine Energie entsprechend der Energieanforderungsmeldung und der in Betrieb befindlichen elektrischen Vorrichtungen erfordert, und

wobei der Energiemanager

Prioritäten für die elektrischen Vorrichtungen auf der Basis von Daten für Eigenschaftsklassen elektrischer Vorrichtungen berechnet, in denen elektrische Vorrichtungen in Klassen entsprechend den Eigenschaften von Verfahren zur Versorgung mit Energie für elektrische Vorrichtungen klassifiziert werden,

den Gesamtwert der verbrauchten Energie mit dem aktualisierten anfänglichen Zielwert vergleicht, wenn der Gesamtwert der verbrauchten Energie kleiner ist,

der elektrischen Vorrichtung Energie zuführt, die das Senden durchgeführt hat,

wenn der Gesamtwert der verbrauchten Energie größer ist, die Prioritäten vom Speicher und/oder der Haushaltsgeräte-DB abruft, um eine elektrische Vorrichtung mit einer minimalen Priorität auszuwählen, feststellt, welche der Eigenschaften der elektrischen Vorrichtung mit Bezug auf die Daten für Eigenschaftsklassen elektrischer Vorrichtungen entspricht, und

die zuzuführende Energie entsprechend der Eigenschaft, der die elektrische Vorrichtung entspricht, steuert.

25. Programm, das eine Ausführung eines Computers nach Anspruch 24 veranlasst, wobei die sofortige Energie verbrauchte Energie ist, die man durch Aufaddieren verbrauchter Energie in jedem der Intervalle eines minimalen Steuerintervalls τ erhält, um den Gesamtwert zu erhalten und den Durchschnitt des Gesamtwerts zu ermitteln.

26. Programm, das eine Ausführung eines Computers nach Anspruch 25 veranlasst, wobei das minimale Steuerintervall τ bis 10 Minuten beträgt.

27. Programm, das eine Ausführung eines Computers nach Anspruch 26 veranlasst, wobei die durch die Aktualisierungsvorrichtung für den anfänglichen Zielwert zu verarbeitende Information die sofortige Energie ist und die durch die Energieentscheidungseinrichtung des Energiemanagers zu verarbeitende Information die verbrauchte Energie ist.

28. Programm, das eine Ausführung eines Computers nach Anspruch 23 veranlasst, wobei die Daten für Eigenschaftsklassen elektrischer Vorrichtungen entsprechend den Eigenschaften der Verfahren zum Zuführen von Energie an die elektrischen Vorrichtungen geteilt werden, so ob die Vorrichtung anpassbar ist oder nicht, ob die Vorrichtung aufhebend ist oder nicht und ob die Vorrichtung warten kann oder nicht, wobei die Daten aus acht Datenarten zusammengesetzt sind, die durch Kombinationen der Eigenschaften definiert werden.

29. Programm, das eine Ausführung eines Computers nach Anspruch 28 veranlasst, wobei durch den Anwender willkürlich auswählbare Segmente zur Gewährleistung eines sicheren und komfortablen Lebens anders bereitgestellt werden als die Segmente: Fähigkeit zur Anpassung, Fähigkeit zur Aufhebung und Fähigkeit zum Warten entsprechend der Verfahren zum Zuführen von Energie an die elektrischen Vorrichtungen.

30. Programm, das eine Ausführung eines Computers nach Anspruch 29 veranlasst, wobei die anpassbare Eigenschaft eine Eigenschaft ist, die eine Änderung der während des Betriebs zugeführten Energie ermöglicht, die wartende Eigenschaft eine Eigenschaft ist, die das Warten auf die Energieversorgung beim Anlauf ermöglicht, und die aufhebende Eigenschaft eine Eigenschaft ist, die eine Aufhebung der Energieversorgung während des Betriebs ermöglicht.

31. Programm, das eine Ausführung eines Computers nach Anspruch 30 veranlasst, wobei elektrische Vorrichtungen mit der anpassbaren Eigenschaft einen Notebook-PC, einen Warmwasserspeicher, einen Toilettensitz mit dem Merkmal einer Warmwasserdusche, einen Mikrowellenofen, eine Heizung/Klimaanlage, einen Kühlschrank, einen Fernseher und einen Trockner beinhalten.

32. Programm, das eine Ausführung eines Computers nach Anspruch 30 veranlasst, wobei elektrische Vorrichtungen mit der wartenden Eigenschaft einen Notebook-PC, einen Warmwasserspeicher, einen Toilettensitz mit dem Merkmal einer Warmwasserdusche, einen Mikrowellenofen, einen Geschirrspüler, einen Reiskocher und einen Toaster beinhalten.

33. Programm, das eine Ausführung eines Computers nach Anspruch 30 veranlasst, wobei elektrische Vorrichtungen mit der aufhebenden Eigenschaft einen Notebook-PC, einen Warmwasserspeicher, eine Heizung/Klimaanlage, einen Kühlschrank, einen Geschirrspüler, einen Reiskocher, einen Kopierer und einen elektrischen Kochtopf beinhalten.

34. Programm, das eine Ausführung eines Computers nach Anspruch 30 veranlasst, wobei elektrische Vorrichtungen, die keine anpassbaren, aufhebenden und wartenden Eigenschaften haben, ein Gaswarngerät, ein Atemschutzgerät und eine Netzwerkvorrichtung wie einen Router beinhalten.

35. Computerlesbares Aufzeichnungsmedium, das ein Programm nach Anspruch 23 aufzeichnet.

36. Computerlesbares Aufzeichnungsmedium, das ein Programm nach Anspruch 27 aufzeichnet.

37. Computerlesbares Aufzeichnungsmedium, das ein Programm nach Anspruch 28 aufzeichnet.

**Revendications**

1. Système de commande de puissance à la demande (50) dans lequel est effectuée une commande de priorité dynamique, comprenant :

une source de puissance (32),
une pluralité d'appareils électriques (20),
un agent d'appareils électroménagers (1) qui commande l'alimentation en énergie de chacun des appareils électriques (20)
en recevant un signal comportant une valeur de puissance provenant d'une prise intelligente (11) ou de chaque appareil électrique (20),
en calculant la puissance requise et une priorité sur la base du signal reçu,
en transmettant à un gestionnaire d'énergie (30) la puissance requise et la priorité sous forme d'un message de demande de puissance, et
en transmettant à l'appareil électrique un ordre de commande fonctionnelle permettant de commander l'appareil électrique (20), en fonction d'un message d'allocation de puissance reçu en provenance du gestionnaire d'énergie (30),
le gestionnaire d'énergie (30) qui récupère la puissance à allouer à chaque appareil électrique (20) en fonction des priorités entre les appareils électriques sur la base du message de demande de puissance provenant de chaque appareil électrique (20) reçu en provenance de l'agent d'appareils électroménagers (1), et
une base de données DB (10) d'appareils électroménagers reliée au gestionnaire d'énergie (30) et/ou à l'agent d'appareils électroménagers (1) ; et l'agent d'appareils électroménagers, le gestionnaire d'énergie et la base de données d'appareils électroménagers constituent un réseau relié aux appareils électriques (20) par l'intermédiaire des prises intelligentes (11),
dans lequel le gestionnaire d'énergie (30) détermine la puissance à allouer à chaque appareil électrique (20) en interrogeant l'agent d'appareils électroménagers (1) sur le fait que l'appareil électrique (20) est ou non capable d'ajuster un mode fonctionnel d'exploitation établi comme une cible d'une opération de service de l'appareil électrique, et sur la puissance de l'appareil électrique,
dans lequel, si l'appareil électrique (20) est capable d'ajuster le mode fonctionnel d'exploitation, le gestionnaire d'énergie (30) récupère comme message d'allocation de puissance le mode fonctionnel d'exploitation établi comme cible pour l'appareil électrique (20) et/ou un mode de puissance présentant la puissance nécessaire et la durée nécessaire pour atteindre le mode fonctionnel d'exploitation établi comme cible,
dans lequel, si l'appareil électrique (20) n'est pas capable d'ajuster le mode fonctionnel d'exploitation, le gestionnaire d'énergie (30) récupère un mode de puissance comme message d'allocation de puissance sans prendre en considération le mode fonctionnel d'exploitation, et

dans lequel le gestionnaire d'énergie (30) inclut une mémoire destinée à transmettre le message d'allocation de puissance obtenu ainsi à l'agent d'appareils électroménagers (1),

dans lequel le gestionnaire d'énergie (30) est configuré pour réguler l'alimentation pour les appareils électriques (20) de telle sorte qu'une limite supérieure de puissance intégrée sur un intervalle de temps fixe et une puissance instantanée maximale ne soient pas dépassées, et

dans lequel la puissance instantanée représente de la puissance consommée et la puissance instantanée maximale représente une limite supérieure pour la puissance instantanée.

2. Système de commande de puissance à la demande selon la revendication 1, dans lequel le gestionnaire d'énergie inclut un moyen de mise à jour de valeur cible initiale destiné à :

allouer à la puissance instantanée suivante, de valeur cible initiale, une différence entre la puissance instantanée de valeur cible initiale et la puissance instantanée réelle pour calculer une valeur cible initiale mise à jour,

comparer la valeur cible initiale mise à jour à la puissance maximale instantanée,

mettre à jour la puissance instantanée suivante de valeur cible initiale, si la valeur cible initiale mise à jour est plus petite, pour qu'elle vaille la valeur cible initiale mise à jour, et

mettre à jour la puissance instantanée de valeur cible initiale, si la valeur cible initiale mise à jour est plus grande, pour qu'elle vaille la puissance instantanée maximale, et régler la puissance instantanée maximale comme valeur cible initiale mise à jour,

dans lequel le gestionnaire d'énergie est configuré pour recevoir le message de demande de puissance par l'intermédiaire de l'agent d'appareils électroménagers à partir de la prise intelligente et/ou d'une prise comportant une fonction de mesure de puissance demandée et une fonction de communication, en vue d'une transmission vers l'agent d'appareils électroménagers dans un serveur, et il est configuré pour calculer la valeur totale de puissance consommée par l'appareil électrique demandant de la puissance en fonction du message de demande de puissance et des appareils électriques en service, et

dans lequel le gestionnaire d'énergie est configuré pour :

calculer des priorités de tous les appareils électriques en fonction de données de classes de propriétés des appareils électriques, dans lesquelles les appareils électriques sont rangés en classes en fonction de propriétés des procédés de fourniture d'énergie aux appareils électriques,

comparer la valeur totale de la puissance consommée à la valeur cible initiale mise à jour,

fournir de l'énergie à l'appareil électrique ayant effectué une transmission si la valeur totale de la puissance consommée est plus petite,

appeler les priorités, si la valeur totale de la puissance consommée est plus grande, à partir de la mémoire et/ou de la base de données d'appareils électroménagers pour sélectionner un appareil électrique présentant une priorité minimale ; déterminer, par rapport à l'appareil électrique présentant la priorité minimale, laquelle des propriétés de l'appareil électrique y correspond, par référence aux données de classes de propriétés d'appareils électriques ; et réguler la puissance à fournir en fonction de la propriété à laquelle correspond l'appareil électrique.

3. Système de commande de puissance à la demande selon la revendication 1 ou la revendication 2, dans lequel la puissance instantanée est une puissance consommée qui est obtenue en ajoutant la puissance consommée dans chacun des intervalles d'un intervalle de temps minimal de commande τ pour obtenir une valeur totale, et en calculant la moyenne de la valeur totale.

4. Système de commande de puissance à la demande selon la revendication 3, dans lequel l'intervalle de temps minimal de commande τ vaut de 5 à 10 minutes.

5. Système de commande de puissance à la demande selon l'une quelconque des revendications 2 à 4, dans lequel des informations à traiter par le moyen de mise à jour de valeur cible initiale représentent la puissance instantanée et des informations à traiter par un moyen d'arbitrage de puissance du gestionnaire d'énergie représentent la puissance demandée.

6. Système de commande de puissance à la demande selon la revendication 5, dans lequel un plan d'utilisation de l'énergie, dans lequel la valeur cible initiale est créée sur la base d'une séquence de consommation de puissance par l'utilisateur, est créé en utilisant l'un de plan de réduction des forfaits, d'un plan de réduction des crêtes de consommation et d'un plan de réduction des coûts.

7. Système de commande de puissance à la demande selon la revendication 6, dans lequel la valeur cible initiale To(t) (W), qui est créée en utilisant le plan de réduction des forfaits, est donnée par les équations (1) et (2) :

où C (Wh) est un plafond établi par l'utilisateur, M(t) (W) est la puissance instantanée maximale à l'instant t et D(t) (W) est une valeur prédite pour la demande de puissance à l'instant t.

8. Système de commande de puissance à la demande selon la revendication 6, dans lequel la valeur cible initiale créée en utilisant le plan de réduction des crêtes est généré en ne réduisant la valeur cible initiale que pendant les heures crêtes d'utilisation de la puissance dans le plan d'utilisation de l'énergie.

9. Système de commande de puissance à la demande selon la revendication 6, dans lequel la valeur cible initiale créée en utilisant le plan de réduction des coûts est généré en réduisant la valeur cible initiale en fonction des coûts de l'énergie dans un plan d'utilisation de l'énergie.

10. Système de commande de puissance à la demande selon la revendication 9, dans lequel la puissance instantanée de valeur cible initiale, la puissance instantanée réelle et les données de classes de propriétés d'appareils électriques sont stockées dans la mémoire et/ou dans la base de données d'appareils électroménagers avant que le gestionnaire d'énergie soit activé.

11. Système de commande de puissance à la demande selon la revendication 10, dans lequel l'allocation de la différence à affecter à la puissance instantanée suivante de valeur cible initiale comprend un procédé d'allocation de différence équitable qui alloue de façon égale la différence, ou bien comprend un procédé d'allocation de puissance instantanée qui alloue la différence à une seule puissance instantanée immédiatement suivante.

12. Système de commande de puissance à la demande selon la revendication 2, dans lequel les données de classes de propriétés d'appareils électriques sont divisées en fonction des propriétés des procédés de fourniture d'énergie aux appareils électriques quant à savoir si l'appareil est ajustable ou non, si on peut suspendre l'appareil ou non et si on peut faire attendre l'appareil ou non, et les données sont composées de huit sortes de données définies par des combinaisons des propriétés.

13. Système de commande de puissance à la demande selon la revendication 12, dans lequel des segments, sélectionnables arbitrairement par un utilisateur pour garantir une vie sûre et confortable sont prévus être différents des segments: capacité d'ajustement, capacité de suspension et capacité d'attente divisées en fonction des procédés de fourniture d'énergie aux appareils électriques.

14. Système de commande de puissance à la demande selon la revendication 12, dans lequel la propriété d'ajustement est une propriété qui permet le changement de puissance fournie en service, la propriété d'attente est une propriété qui permet d'attendre une fourniture d'énergie au démarrage et la propriété de suspension est une propriété qui permet la suspension de la fourniture d'énergie en service.

15. Système de commande de puissance à la demande selon la revendication 14, dans lequel les appareils électriques possédant la propriété d'ajustement incluent un ordinateur bloc-notes, un chauffe-eau, un siège de toilette doté d'une fonction de douche à l'eau tiède, un four à micro-ondes, un dispositif d'air conditionné, un réfrigérateur, un téléviseur et un sèche-linge.

16. Système de commande de puissance à la demande selon la revendication 14, dans lequel les appareils électriques possédant la propriété d'attente incluent un ordinateur bloc-notes, un chauffe-eau, un siège de toilette doté d'une fonction de douche à l'eau tiède, un four à micro-ondes, un lave-vaisselle, un cuiseur à riz et un grille-pain.

17. Système de commande de puissance à la demande selon la revendication 14, dans lequel les appareils électriques possédant la propriété de suspension incluent un ordinateur bloc-notes, un chauffe-eau, un dispositif d'air conditionné, un réfrigérateur, un lave-vaisselle, un cuiseur à riz, une machine à copier et une marmite électrique.

18. Système de commande de puissance à la demande selon la revendication 14, dans lequel les appareils électriques ne possédant pas de propriété d'ajustement, de suspension et d'attente incluent un détecteur de gaz, un dispositif de respiration et un dispositif en réseau tel qu'un routeur.

19. Système de commande de puissance à la demande dans lequel un gestionnaire d'énergie conforme à la revendication 1 comprend en outre un moyen de surveillance continue destiné à surveiller la puissance consommée à tous les instants.

20. Système de commande de puissance à la demande selon la revendication 19, dans lequel le moyen de surveillance continue régule la fourniture d'énergie de telle sorte que la puissance globale consommée descende en dessous de la puissance maximale instantanée sans attendre l'écoulement d'un intervalle de temps minimal de commande $\tau$ si la puissance globale consommée dépasse la puissance instantanée maximale pendant un intervalle de temps fixe d ou plus longtemps.

21. Système de commande de puissance à la demande selon la revendication 20, dans lequel l'intervalle de temps fixe d vaut de 0,5 à 2 secondes.

22. Système de commande de puissance à la demande selon l'une quelconque des revendications 19 à 21, dans lequel le moyen de surveillance continue :

   calcule la valeur totale de puissance consommée par les appareils électriques en service,
   calcule les priorités des appareils électriques sur la base des données de classes de propriétés d'appareils électriques dans lesquelles les appareils électriques sont rangés en classes en fonction de trois types de propriétés :

   compare la valeur totale de la puissance consommée à la puissance maximale instantanée,

   si la valeur totale de la puissance consommée est plus petite, il termine le traitement,
   si la valeur totale de la puissance consommée est plus grande, il sélectionne un appareil électrique présentant la priorité minimale, il détermine auquel des trois types de propriétés correspond l'appareil électrique, et il sélectionne un appareil présentant la priorité minimale en fonction de la propriété à laquelle correspond l'appareil électrique.

23. Programme destiné à amener un ordinateur à exécuter un traitement d'arbitrage fondé sur des priorités entre des appareils électriques, le programme amenant l'ordinateur à commander le gestionnaire d'énergie incluant une mémoire pour qu'il opère sur :

   une source de puissance (32),
   une pluralité d'appareils électriques (20),
   un agent d'appareils électroménagers (1) qui commande l'alimentation en énergie de chacun des appareils électriques (20)
   en recevant un message de demande de puissance provenant d'une prise intelligente (11) ou de chaque appareil électrique (20),
   en transmettant ce message au gestionnaire d'énergie (30), et
   en transmettant à la prise intelligente (11) ou à l'appareil électrique un message ou un ordre de commande fonctionnelle permettant de commander l'appareil électrique (20), en fonction d'un message d'allocation de puissance reçu,
   le gestionnaire d'énergie (30) récupérant des priorités entre les appareils électriques (20) sur la base d'un signal provenant de chaque appareil électrique reçu en provenance de l'agent d'appareils électroménagers (1) ; récupérant la puissance à allouer à chaque appareil électrique et incluant une mémoire permettant de transmettre à l'agent d'appareils électroménagers (1) le message d'allocation de puissance ainsi obtenu, le programme amenant l'ordinateur à exécuter un traitement d'arbitrage sur la base des priorités entre les appareils électriques, le programme amenant l'ordinateur à commander le gestionnaire d'énergie (30) comportant la mémoire pour qu'il détermine, en interrogeant l'agent d'appareils électroménagers (1), si chaque appareil électrique (20) est capable d'ajuster un mode fonctionnel d'exploitation établi comme cible d'un fonctionnement en service de l'appareil électrique, ainsi que la puissance nécessaire à l'appareil électrique (20),
   si l'appareil électrique (20) est capable d'ajuster le mode fonctionnel d'exploitation, il récupère comme message d'allocation de puissance le mode fonctionnel d'exploitation établi comme cible pour l'appareil électrique (20) et/ou un mode de puissance présentant la puissance nécessaire et la durée nécessaire pour atteindre le mode fonctionnel d'exploitation établi comme cible,
   si l'appareil électrique (20) n'est pas capable d'ajuster le mode fonctionnel d'exploitation, il récupère un mode de puissance comme message d'allocation de puissance sans prendre en considération le mode fonctionnel d'exploitation, et il inclut une mémoire destinée à transmettre le message d'allocation de puissance obtenu ainsi à l'agent d'appareils électroménagers (1),

dans lequel l'alimentation pour les appareils électriques (20) est régulée de telle sorte qu'une limite supérieure de puissance intégrée sur un intervalle de temps fixe et une puissance instantanée maximale ne soient pas dépassées, et

dans lequel la puissance instantanée représente de la puissance consommée et la puissance instantanée maximale représente une limite supérieure pour la puissance instantanée.

24. Programme destiné à amener un ordinateur à fonctionner conformément à la revendication 23, dans lequel le gestionnaire d'énergie inclut un moyen de mise à jour de valeurs cible initiales destiné à :

allouer à la puissance instantanée suivante, de valeur cible initiale, une différence entre la puissance instantanée de valeur cible initiale et la puissance instantanée réelle pour calculer une valeur cible initiale mise à jour,

comparer la valeur cible initiale mise à jour à la puissance maximale instantanée,

mettre à jour la puissance instantanée suivante de valeur cible initiale, si la valeur cible initiale mise à jour est plus petite, pour qu'elle vaille la valeur cible initiale mise à jour, et

mettre à jour la puissance instantanée de valeur cible initiale, si la valeur cible initiale mise à jour est plus grande, pour qu'elle vaille la puissance instantanée maximale, et régler la puissance instantanée maximale comme valeur cible initiale mise à jour,

dans lequel le gestionnaire d'énergie reçoit le message de demande de puissance par l'intermédiaire de l'agent d'appareils électroménagers à partir de la prise intelligente et/ou d'une prise comportant une fonction de mesure de puissance demandée et une fonction de communication, en vue d'une transmission vers l'agent d'appareils électroménagers dans un serveur, et il calcule la valeur totale de puissance consommée par l'appareil électrique demandant de la puissance en fonction du message de demande de puissance et des appareils électriques en service, et

dans lequel le gestionnaire d'énergie :

calcule des priorités pour les appareils électriques fondées sur les données de classes de propriétés des appareils électriques, dans lesquelles les appareils électriques sont rangés en classes en fonction de propriétés des procédés de fourniture d'énergie aux appareils électriques,

compare la valeur totale de la puissance consommée à la valeur cible initiale mise à jour si la valeur totale de la puissance consommée est plus petite,

fournit de l'énergie à l'appareil électrique ayant effectué une transmission,

appelle les priorités, si la valeur totale de la puissance consommée est plus grande, à partir de la mémoire et/ou de la base de données d'appareils électroménagers pour sélectionner un appareil électrique présentant une priorité minimale ; et détermine laquelle des propriétés de l'appareil électrique y correspond, par référence aux données de classes de propriétés d'appareils électriques, et

il régule la puissance à fournir en fonction de la propriété à laquelle correspond l'appareil électrique.

25. Programme destiné à amener un ordinateur à fonctionner conformément à la revendication 24, dans lequel la puissance instantanée est une puissance consommée qui est obtenue en ajoutant la puissance consommée dans chacun des intervalles d'un intervalle de temps minimal de commande $\tau$ pour obtenir une valeur totale, et en calculant la moyenne de la valeur totale.

26. Programme destiné à amener un ordinateur à fonctionner conformément à la revendication 25, dans lequel l'intervalle de temps minimal de commande $\tau$ vaut de 5 à 10 minutes.

27. Programme destiné à amener un ordinateur à fonctionner conformément à la revendication 26, dans lequel des informations à traiter par le moyen de mise à jour de valeur cible initiale représentent la puissance instantanée et des informations à traiter par un moyen d'arbitrage de puissance du gestionnaire d'énergie représentent la puissance demandée.

28. Programme destiné à amener un ordinateur à fonctionner conformément à la revendication 23, dans lequel les données de classes de propriétés d'appareils électriques sont divisées en fonction des propriétés des procédés de fourniture d'énergie aux appareils électriques quant à savoir si l'appareil est ajustable ou non, si on peut suspendre l'appareil ou non et si on peut faire attendre l'appareil ou non, et les données sont composées de huit sortes de données définies par des combinaisons des propriétés.

29. Programme destiné à amener un ordinateur à fonctionner conformément à la revendication 28, dans lequel des segments, sélectionnables arbitrairement par un utilisateur pour garantir une vie sûre et confortable sont prévus être différents des segments: capacité d'ajustement, capacité de suspension et capacité d'attente divisées en fonction des procédés de fourniture d'énergie aux appareils électriques.

30. Programme destiné à amener un ordinateur à fonctionner conformément à la revendication 29, dans lequel la propriété d'ajustement est une propriété qui permet le changement de puissance fournie en service, la propriété d'attente est une propriété qui permet d'attendre une fourniture d'énergie au démarrage et la propriété de suspension est une propriété qui permet la suspension de la fourniture d'énergie en service.

31. Programme destiné à amener un ordinateur à fonctionner conformément à la revendication 30, dans lequel les appareils électriques possédant la propriété d'ajustement incluent un ordinateur bloc-notes, un chauffe-eau, un siège de toilette doté d'une fonction de douche à l'eau tiède, un four à micro-ondes, un dispositif d'air conditionné, un réfrigérateur, un téléviseur et un sèche-linge.

32. Programme destiné à amener un ordinateur à fonctionner conformément à la revendication 30, dans lequel les appareils électriques possédant la propriété d'attente incluent un ordinateur bloc-notes, un chauffe-eau, un siège de toilette doté d'une fonction de douche à l'eau tiède, un four à micro-ondes, un lave-vaisselle, un cuiseur à riz et un grille-pain.

33. Programme destiné à amener un ordinateur à fonctionner conformément à la revendication 30, dans lequel les appareils électriques possédant la propriété de suspension incluent un ordinateur bloc-notes, un chauffe-eau, un dispositif d'air conditionné, un réfrigérateur, un lave-vaisselle, un cuiseur à riz, une machine à copier et une marmite électrique.

34. Programme destiné à amener un ordinateur à fonctionner conformément à la revendication 30, dans lequel les appareils électriques ne possédant pas de propriété d'ajustement, de suspension et d'attente incluent un détecteur de gaz, un dispositif de respiration et un dispositif en réseau tel qu'un routeur.

35. Support d'enregistrement pouvant être lu par ordinateur sur lequel est enregistré un programme conforme à la revendication 23.

36. Support d'enregistrement pouvant être lu par ordinateur sur lequel est enregistré un programme conforme à la revendication 27.

37. Support d'enregistrement pouvant être lu par ordinateur sur lequel est enregistré un programme conforme à la revendication 28.

[Figure 1]

[Figure 2]

[Figure 3]

[Figure 4]

[Figure 5]

HOME APPLIANCE ARRANGEMENT

[Figure 6]

EP 2 802 059 B1

[Figure 7]

62

[Figure 8]

[Figure 9-1]

[Figure 9-2]

[Figure 9-3]

[Figure 10]

: INITIAL PLANNED VALUE
: ACTUAL AVERAGE POWER

[Figure 11]

Wh

☑ ;INITIAL PLANNED VALUE
☒ :ACTUAL AVERAGE POWER
▨ :EXCESS OVER PLANNED VALUE
▧ :THE AMOUNT BY WHICH ACTUAL
    AVERAGE POWER FALLS SHORT OF
    PLANNED VALUE

$\tau$

[Figure 12-1]

| | | |
|---|---|---|
| HOME APPLIANCE | $a_i$ | |
| SERVICE FUNCTION MODE | $f_j^{a_i}$ | |
| OPERATING FUNCTION MODE | $f_{jk}^{a_i}$ | |
| POWER MODE | $e_l^{a_i}$ | |

AIR CONDITIONER

COOLING  HEATING  DEHUMIDIFICATION

18°C  20°C  22°C

200W,10m  400W,3m  700W,5m

[Figure 12-2]

| | | |
|---|---|---|
| HOME APPLIANCE | $a_i$ | |
| SERVICE FUNCTION MODE | $f_j^{a_i}$ | |
| OPERATING FUNCTION MODE | $f_{jk}^{a_i}$ | |
| POWER MODE | $e_l^{a_i}$ | |

ILLUMINATOR

BRIGHTNESS

DARK  MEDIUM  BRIGHT

100W  200W  300W

[Figure 13-1]

FUNC-
TION

SERVICE FUNCTION MODE: HEATING

OPERATING
FUNCTION
MODE

ASSIGNMENT ASSIGNMENT          ASSIGNMENT

20.5°C

20°C

19°C

POWER

W

400W
3m

100W
7m

200W
8m

t

[Figure 13-2]

FUNC-
TION

SERVICE FUNCTION MODE: BRIGHTNESS

OPERATING
FUNCTION
MODE

ASSIGNMENT ASSIGNMENT          ASSIGNMENT

BRIGHT

DARK

POWER

W

300W

100W

200W

t

[Figure 14]

[Figure 15]

[Figure 16]

[Figure 17]

REQUESTING HOME APPLIANCE      DYNAMIC PRIORITY CONTROL APPARATUS      DIFFERENT HOME APPLIANCE

1. POWER REQUEST MESSAGE

DETERMINE WHETHER TO GIVE PERMISSION TO EACH HOME APPLIANCE ACCORDING TO PRIORITY OF HOME APPLIANCE

2. POWER ASSIGNMENT MESSAGE

2'. REFUSAL MESSAGE

3. INTERRUPT MESSAGE

4. REASSIGNMENT MESSAGE

[Figure 18]

[Figure 19]

```
        ┌─────────────────────┐
        │      START OF        │
        │   PREPROCESSING      │
        └─────────────────────┘
                   │
                   ▼
   ┌───────────────────────────────────────┐        S1
   │                                        │
   │     POWER USE PLAN SETTING PROCESS     │
   │                                        │
   └───────────────────────────────────────┘
                   │
                   ▼
   ┌───────────────────────────────────────┐
   │                                        │
   │   INITIAL TARGET VALUE SETTING PROCESS │
   │                                        │
   │  STORE INITIAL TARGET VALUE IN MEMORY OF│
   │   DYNAMIC PRIORITY CONTROL APPARATUS   │
   │                                        │
   └───────────────────────────────────────┘
```

[Figure 20]

```
        ┌─────────────────────────────────────┐
        │   START OF DYNAMIC PRIORITY CONTROL  │
        │              APPARATUS               │
        └─────────────────────────────────────┘
                          │
                          ▼
   ┌─────────────────────────────────────────────┐
   │   INITIAL TARGET VALUE UPDATING PROCESS      │    S3
   └─────────────────────────────────────────────┘
                          │
                          ▼
   ┌─────────────────────────────────────────────┐
   │       PRIORITY ARBITRATION PROCESS           │    S5
   └─────────────────────────────────────────────┘
```

[Figure 21]

$$S1 \quad \left(\begin{array}{c} \text{POWER USE PLAN SETTING} \\ \text{PROCESS} \end{array}\right)$$

ADD UP CONSUMED POWER TRANSMITTED FROM ST AT INTERVALS OF $\iota$ AND CONVERT TOTAL VALUE TO INSTANTANEOUS POWER AND INTEGRAL POWER CONSUMPTION — S11

SET CEILING C (Wh) AND MAXIMUM INSTANTANEOUS POWER M (W) IN POWER USE PLAN FROM ABOVE INSTANTANEOUS POWER AND INTEGRAL POWER CONSUMPTION, SUBSTITUTE VALUES INTO EQUATIONS (1) AND (2) TO CALCULATE INITIAL TARGET VALUE $T_0(t)$ (W), AND STORE INITIAL TARGET VALUE $T_0(t)$ (W) IN MEMORY — S13

END

[Figure 22]

S3  INITIAL TARGET VALUE
      UPDATING PROCESS

CALCULATE ALLOCATED POWER FROM DIFFERENCE BETWEEN
INSTANTANEOUS POWER WITH INITIAL TARGET VALUE AND
ACTUAL INSTANTANEOUS POWER BY DIFFERENCE ALLOCATION
METHOD, ADD ALLOCATED POWER TO SUBSEQUENT
INSTANTANEOUS POWER WITH ABOVE INITIAL TARGET VALUE,
AND CALCULATE UPDATED INITIAL TARGET VALUE        S31

CALL UP MAXIMUM INSTANTANEOUS POWER FROM
MEMORY AND COMPARE ABOVE UPDATED INITIAL
TARGET VALUE WITH MAXIMUM INSTANTANEOUS POWER    S33

S35
UPDATED INITIAL
TARGET VALUE < MAXIMUM                           No
INSTANTANEOUS POWER?

Yes

UPDATE SUBSEQUENT INSTANTANEOUS POWER WITH INITIAL
TARGET VALUE TO HAVE UPDATED INITIAL TARGET VALUE    S37

UPDATE UPDATED INITIAL TARGET
VALUE TO BE EQUAL TO MAXIMUM      S39
INSTANTANEOUS POWER

END

[Figure 23-1]

S5 ( PRIORITY ARBITRATION PROCESS )

RECEIVE POWER REQUEST MESSAGE FROM ST — S51

AT TIME OF RECEPTION, CALL UP CONSUMED POWER OF DEVICE HAVING TRANSMITTED MESSAGE AND DEVICE IN OPERATION FROM MEMORY, ADD UP CONSUMED POWER, AND CALCULATE TOTAL VALUE OF CONSUMED POWER OF DEVICES — S53

CALCULATE PRIORITIES OF ABOVE DEVICES BASED ON PRIORITY FUNCTION WITH REFERENCE TO TABLE 3 AND STORE PRIORITIES IN MEMORY — S55

COMPARE ABOVE TOTAL VALUE WITH UPDATED INITIAL TARGET VALUE TRANSMITTED FROM INITIAL TARGET VALUE UPDATING MEANS — S57

TOTAL VALUE OF CONSUMED POWER < UPDATED INITIAL TARGET VALUE? — S59

No

Yes

TRANSMIT PERMISSION MESSAGE TO ST OF DEVICE HAVING PERFORMED TRANSMISSION — S61

( END )

CALL UP ABOVE PRIORITIES FROM MEMORY AND SELECT DEVICE WITH MINIMUM PRIORITY — S63

(1)

[Figure 23-2]

```
                           (1)
                            |
                            v
  +--------------------------------------------------+
  | DETERMINE WHETHER DEVICE IN QUESTION IS          |   S65
  | ADJUSTABLE WITH REFERENCE TO TABLE 2             |
  +--------------------------------------------------+
                            |
                            v        S67
                      < ADJUSTABLE? >  ---- No ----> (2)
                            |
                           Yes
                            v
  +--------------------------------------------------+
  | TRANSMIT INTERRUPT MESSAGE FOR                   |   S69
  | REDUCING POWER TO DEVICE IN QUESTION             |
  +--------------------------------------------------+
                            |
                            v
  +--------------------------------------------------+
  | UPDATE TOTAL VALUE OF CONSUMED                   |   S71
  | POWER BASED ON REDUCED POWER                     |
  +--------------------------------------------------+
                            |
                            v
                        TO S59
```

[Figure 23-3]

(2)

| DETERMINE WHETHER DEVICE IN QUESTION CORRESPONDS TO ST HAVING TRANSMITTED REQUEST MESSAGE AND IS WAITABLE | S73 |

S75

DEVICE IN QUESTION CORRESPONDS TO ST HAVING TRANSMITTED REQUEST AND IS WAITABLE? — No → (3)

Yes

| TRANSMIT REFUSAL MESSAGE TO ST OF DEVICE IN QUESTION | S77 |

| UPDATE TOTAL VALUE OF CONSUMED POWER BY SUBTRACTING CONSUMED POWER OF DEVICE IN QUESTION FROM TOTAL VALUE | S79 |

TO S59

[Figure 23-4]

( 3 )

DETERMINE WHETHER DEVICE IN QUESTION DOES NOT CORRESPOND TO ST HAVING TRANSMITTED REQUEST MESSAGE AND IS SUSPENDABLE — S81

S83

DEVICE IN QUESTION DOES NOT CORRESPOND TO ST HAVING TRANSMITTED REQUEST AND IS SUSPENDABLE? — No

Yes

TRANSMIT REFUSAL MESSAGE TO ST OF DEVICE IN QUESTION — S85

UPDATE TOTAL VALUE OF CONSUMED POWER BY SUBTRACTING CONSUMED POWER OF DEVICE IN QUESTION FROM TOTAL VALUE — S87

TO S59

END

[Figure 24-1]

**S9** ( CONTINUOUS MONITORING PROCESS )

CALL UP MAXIMUM INSTANTANEOUS POWER FROM MEMORY — S91

CALL UP CONSUMED POWER OF DEVICES IN OPERATION FROM MEMORY, ADD UP CONSUMED POWER TO CALCULATE TOTAL VALUE, AND STORE TOTAL VALUE IN MEMORY AT INTERVALS OF FIXED PERIOD δ — S93

REFER TO TABLE 3, CALCULATE PRIORITIES OF ABOVE DEVICES BASED ON PRIORITY FUNCTION, AND STORE PRIORITIES IN MEMORY — S95

COMPARE ABOVE TOTAL VALUE OF CONSUMED POWER WITH ABOVE MAXIMUM INSTANTANEOUS POWER — S97

S99 — TOTAL VALUE OF CONSUMED POWER < MAXIMUM INSTANTANEOUS POWER

No

Yes

( END )

CALL UP ABOVE PRIORITIES FROM MEMORY AND SELECT DEVICE WITH MINIMUM PRIORITY — S101

(4)

[Figure 24-2]

(4)

DETERMINE WHETHER DEVICE IN QUESTION IS
ADJUSTABLE WITH REFERENCE TO TABLE 2    S103

ADJUSTABLE?    S105    No → (5)

Yes

TRANSMIT INTERRUPT MESSAGE FOR REDUCING
POWER TO DEVICE IN QUESTION    S107

UPDATE TOTAL VALUE OF CONSUMED POWER BASED
ON REDUCED POWER    S109

TO S99

[Figure 24-3]

(5)

DETERMINE WHETHER DEVICE IN QUESTION IS SUSPENDABLE — S111

SUSPENDABLE? — S113

No

Yes

TRANSMIT REFUSAL MESSAGE TO ST OF DEVICE IN QUESTION — S115

UPDATE TOTAL VALUE OF CONSUMED POWER BY SUBTRACTING CONSUMED POWER OF DEVICE IN QUESTION FROM TOTAL VALUE — S117

TO S99

END

[Figure 24-4]

FIRST METHOD                    EoD PROTOCOL

MODE CHANGE

NETWORK HOME APPLIANCE → HOME APPLIANCE AGENT → POWER MANAGER

ECHNET−LITE ETC.

INSTRUCTION ABOUT HOME APPLIANCE OPERATION

EoD REMOTE CONTROLLER

HOME APPLIANCE CONNECTED TO POW-ER NOTICE FUNCTION OR SMART TAP

ELECTRICAL DEVICE DB

SECOND METHOD    THIRD METHOD

EP 2 802 059 B1

[Figure 25-1]

[Figure 25-2]

**Main Graph**
Power(W)

700
600
500
400
300
200
100
0

-130 -120 -110 -100 -90 -80 -70 -60 -50 -40 -30 -20 -10 0
time

**Sub Graph**
IntegratingPower(Wh)

50
45
40
35
30
25
20
15
10
5
0

-150 -125 -100 -75 -50 -25 0

**Pop-up Window**

Power of 70 W was supplied to the TV in dark mode.

**PowerDisplay**

**Appliances**

**TV**
No.1     70W
Current state   dark:70.0W

**Pot**
No.2     0W
ON: Requesting 1200.0 W

**AirConditioner**
No.3     369W
Current state   ON:250.0W

**LivingLight**
No.4     93W
Current state   ON:90.0W

**BedroomLight**
No.5     96W
Current state   ON:95.0W

**CorridorLight**
No.6     146W
Current state   ON:145.0W

○○○     config
Target value : 800W 800    set
Under surveillance Maximum :2000W 2000   set   stop
instantaneous power

[Figure 25-3]

Main Graph

Power(W)

700
600
500
400
300
200
100
0

-130 -120 -110 -100 -90 -80 -70 -60 -50 -40 -30 -20 -10 0

time

Sub Graph

IntegratingPower(Wh)

50
45
40
35
30
25
20
15
10
5
0

-150 -125 -100 -75 -50 -25 0

Pop-up Window

Power of 70 W was supplied to the TV in dark mode.

PowerDisplay

Appliances

Pot
No.1          0W
ON: Requesting 1200.0 W

TV
No.2          70W
Current state  dark:70.0W

AirConditioner
No.3          451W
Current state  ON:250.0W

LivingLight
No.4          93W
Current state  ON:90.0W

BedroomLight
No.5          95W
Current state  ON:95.0W

CorridorLight
No.6          146W
Current state  ON:145.0W

O O O                config
Target value  : 800W 800                    set
Under surveillance Maximum :2000W 2000   set   stop
instantaneous power

[Figure 25-4]

[Figure 26-1]

- - - - NORMAL LIFE (WITHOUT EoD)  ———— POWER USE PLAN  ▬▬▬ EXPERIMENTAL RESULT

[Figure 26-2]

[Figure 27-1]

Legend: - - - - NORMAL LIFE (WITHOUT EoD) ——— POWER USE PLAN ——— EXPERIMENTAL RESULT

Y-axis: INTEGRAL POWER CONSUMPTION (Wh) — 0, 500, 1000, 1500, 2000, 2500, 3000, 3500

X-axis: TIME — 12:00, 13:00, 14:00, 15:00, 16:00, 17:00, 18:00, 19:00, 20:00, 21:00, 22:00, 23:00, 00:00, 1:00, 2:00, 3:00, 4:00, 5:00, 6:00, 7:00, 8:00, 9:00, 10:00, 11:00

[Figure 27-2]

[Figure 28-1]

TIME

[Figure 28-2]

Legend: TV ---- POT -----IH STOVE ——REFRIGERATOR---···-WASHING MACHINE ···········LIGHT——OTHERS

Y-axis: CONSUMED POWER (W) — 0, 100, 200, 300, 400, 500, 600

X-axis: TIME — 12:00, 12:50, 13:40, 14:30, 15:20, 16:10, 17:00, 17:50, 18:40, 19:30, 20:20, 21:10, 22:00, 22:50, 23:40, 0:30, 1:20, 2:10, 3:00, 3:50, 4:40, 5:30, 6:20, 7:10, 8:00, 8:50, 9:40, 10:30, 11:20

[Figure 29-1]

SPECIFICATIONS
• POWER SENSING
• FUNCTION MODE OPERATION, GRASP

AIR CONDITIONER WITH OVERALL REMOTE CONTROLLER

CONSUMED POWER

AGENT

POWER MODE =

ASSIGNED POWER

DESIRED FUNCTION MODE

DESIRED POWER MODE

POWER REQUEST

MODIFICATION, MATCH

OPERATING POWER MODE

OPERATING FUNCTION MODE

CONVERSION

ASSIGNED POWER MODE

POWER ASSIGNMENT

[Figure 29-2]

[Figure 29-3]

```
                          OBTAIN, FROM MEMORY, POWER
                          VALUE PRESENTLY REQUESTED


    OBTAIN PRESENT POWER              RECEIVE COMMAND REQUEST WITH
    VALUE WITH SMART TAP              OVERALL REMOTE CONTROLLER


    OBTAIN, FROM DB, AS PRESENT       OBTAIN, FROM DB, AS NEW REQUESTED
    REQUESTED POWER VALUE,            POWER VALUE, REQUESTED POWER
    REQUESTED POWER                   CORRESPONDING TO COMMAND
    CORRESPONDING TO POWER VALUE      REQUEST


                      PRESENT
               REQUESTED POWER VALUE =
              NEW REQUESTED POWER VALUE?

                                              UPDATE REQUESTED
                                              POWER VALUE

                                              TRANSMIT REQUESTED
                                              POWER VALUE TO POWER
                                              MANAGER
```

[Figure 30-1]

[Figure 30-2]

FUNCTION
COMMAND

ASSIGNED
POWER

ACTUAL
CONSUMED
POWER

[Figure 30-3]

RECEIVE, FROM POWER MANAGER, POWER ASSIGNMENT
MESSAGE INCLUDING ASSIGNED POWER VALUE

SEARCH DB1 FOR ITEM CLOSEST TO ASSIGNED POWER
AND OBTAIN CORRESPONDING FUNCTION COMMAND

TRANSMIT FUNCTION COMMAND TO DEVICE

[Figure 30-4]

ACTUAL
CONSUMED
POWER

[Figure 30-5]

FUNCTION
COMMAND

ASSIGNED
POWER

ACTUAL
CONSUMED
POWER

[Figure 30-6]

```
┌─────────────────────────────────┐
│ RECEIVE, FROM POWER MANAGER,    │
│ POWER ASSIGNMENT MESSAGE        │
│ INCLUDING ASSIGNED POWER VALUE  │
└─────────────────────────────────┘
              │
              ▼
┌─────────────────────────────────┐
│ OBTAIN PRESENT POWER VALUE FROM │
│ SMART TAP                       │
└─────────────────────────────────┘
              │
              ▼
        ◇ ASSIGNED POWER VALUE >
          PRESENT POWER VALUE? ◇
              │
              ▼
         ┌─────────┐
         │   END   │
         └─────────┘

┌──────────────────────────────────┐
│ SEARCH DB3 FOR FUNCTION MODE OF  │
│ RELATIVE INTENSITY LOWER THAN THAT│
│ OF PRESENT FUNCTION MODE         │
└──────────────────────────────────┘
              │
              ▼
┌──────────────────────────────────┐
│ TRANSMIT MODE TO DEVICE          │
└──────────────────────────────────┘
```

[Figure 31-1]

[Figure 31-2]

[Figure 31-3]

[Figure 31-4]

[Figure 31-5]

[Figure 31-6]

[Figure 31-7]

[Figure 31-8]

[Figure 31-9]

[Figure 31-10]

[Figure 31-11]

[Figure 31-12]

[Figure 31-13]

[Figure 31-14]

[Figure 31-15]

[Figure 31-16]

[Figure 31-17]

[Figure 31-18]

[Figure 31-19]

[Figure 31-20]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040124703 A1
- WO 2008152798 A

- JP 2010193562 A

**Non-patent literature cited in the description**

- **TAKEKAZU KATO.** Electric Appliance Recognition from Power Sensing Data for Information-Power Integrated Network System. *IEICE technical report,* 19 January 2009, 133-138

- i-Energy and Smart Grid. **PROFESSOR TAKASHI MATSUYAMA.** Graduate School. Kyoto University, 29 July 2009, 21